# EUROPEAN PATENT SPECIFICATION

(11) **EP 4 419 953 B1**
(45) Date of publication and mention of the grant of the patent: **25.11.2026**
(21) Application number: 22800474.3
(22) Date of filing: 07.10.2022
(51) Int. Cl.: G02B 5/28, G01S 7/481, G02B 1/115, G02B 1/14

(54) **HARDENED OPTICAL WINDOWS WITH ANTI-REFLECTIVE FILMS HAVING LOW VISIBLE REFLECTANCE AND TRANSMISSION FOR INFRARED SENSING SYSTEMS**
GEHÄRTETE OPTISCHE FENSTER MIT ANTIREFLEXIONSFILMEN MIT GERINGER REFLEXION IM SICHTBAREN BEREICH UND TRANSMISSION FÜR INFRAROTMESSSYSTEME
FENÊTRES OPTIQUES DURCIES AVEC DES FILMS ANTIREFLET AYANT UNE FAIBLE RÉFLECTANCE VISIBLE ET TRANSMISSION POUR DES SYSTÈMES DE DÉTECTION INFRAROUGE

(30) Priority: 20.10.2021 US 202163257814 P; 20.05.2022 US 202263344147 P; 27.09.2022 US 202263410320 P
(43) Date of publication of application: 28.08.2024
(73) Proprietor: Corning Incorporated, Corning, New York 14831 (US)
(72) Inventor: HART, Shandon Dee, Elmira, New York 14905 (US); KOCH III, Karl William, Elmira, New York 14903 (US); KOSIK WILLIAMS, Carlo Anthony, Painted Post, New York 14870 (US); LIN, Lin, Painted Post, New York 14870 (US); LUO, Rui, Mountain View, California 94040 (US); PRICE, James Joseph, Corning, New York 14830 (US); WALKER, Nicholas Michael, Painted Post, New York 14870 (US)
(74) Representative: Epping - Hermann - Fischer
(86) International application number: PCT/US2022/046039
(87) International publication number: WO 2023/069262

(56) References cited:
- WO-A1-2020/247292
- US-A- 5 398 133
- US-A1- 2021 181 382

## Description

### PRIORITY

This application claims the benefit of priority under 35 U.S.C. § 120 of U.S. Application Serial No. 63/257814 filed on October 20, 2021, and 63/344147 filed on May 20, 2022, and 63/410320 filed on September 27, 2022.

### BACKGROUND

Light detection and ranging ("LIDAR") systems include an electromagnetic radiation emitter and a sensor. The electromagnetic radiation emitter emits an electromagnetic radiation emitter beam, which may reflect off an object, and the sensor detects the reflected electromagnetic radiation emitter beam. The electromagnetic radiation emitter beams are pulsed or otherwise distributed across a radial range to detect objects across a field of view. Information about the object can be deciphered from the properties of the detected reflected electromagnetic radiation emitter beam. Distance of the object from the electromagnetic radiation emitter beam can be determined from the time of flight from emission of the electromagnetic radiation emitter beam to detection of the reflected electromagnetic radiation emitter beam. If the object is moving, path and velocity of the object can be determined from shifts in radial position of the emitted electromagnetic radiation emitter beam being reflected and detected as a function of time, as well as from Doppler frequency measurements.

LIDAR systems in automobiles, and other infrared sensing systems in exposed environments, such as aerospace or home security applications, need to be protected from the environment and various sources of damage, for example, with a covering lens or cover glass window. Vehicles are another potential application for LIDAR systems, with the LIDAR systems providing spatial mapping capability to enable assisted, semi-autonomous, or fully autonomous driving. In such applications, the electromagnetic radiation emitter and sensor are mounted on the roof of the vehicle or on a low forward portion of the vehicle. Electromagnetic radiation emitters emitting electromagnetic radiation having a wavelength outside the range of visible light, such as at 905nm or 1550nm are considered for vehicle LIDAR applications. To protect the electromagnetic radiation emitter and sensor from impact from rocks and other objects, a window is placed between the electromagnetic radiation emitter and sensor, and the external environment in the line of sight of the electromagnetic radiation emitter and sensor. A window is similarly placed between the electromagnetic radiation emitter/sensor and the external environment for other applications of the LIDAR system, such as aerospace and home security applications. However, there is a problem in that rocks and other objects impacting the window scratch and cause other types of damage to the window, which cause the window to scatter the emitted and reflected electromagnetic radiation emitter beams, thus impairing the effectiveness of the LIDAR system.

Prior art is represented by WO 2020/247292 A1.

### SUMMARY

The present disclosure solves that problem with a window that includes first and second layered films. The first layered film may face away from an electromagnetic radiation emitter/sensor when installed in a LIDAR system and include a scratch resistant layer embedded therein to provide damage resistance to the window. Thus, rocks and other objects impacting the window are less likely to cause defects to the window that scatter the emitted and reflected electromagnetic radiation from the LIDAR sensor, resulting in improved performance. In addition, the first and second layered films further include alternating layers of materials having different indices of refraction (including the material providing the hardness and scratch resistance), such that the number of alternating layers and their thicknesses can be configured so that the window has high transmissivity and low reflection in a desired wavelength range (e.g., over a 50 nm wavelength range between 1400 nm and 1600 nm). The alternating layers of material may be further selected such that the window transmits and reflects relatively low amounts of radiation in the visible spectrum, thereby providing the window with aesthetically pleasing dark appearance while diminishing signal noise caused by visible light that may otherwise impinge on a detector of a LIDAR system.

The invention is defined by the claims.

According to an embodiment of the present disclosure, a window for a sensing system comprising a substrate comprising a first surface and a second surface, the first surface and the second surface being primary surfaces of the substrate. The window includes a first layered film disposed on the first surface of the substrate, the first layered film comprising alternating layers of one or more higher refractive index materials and one or more lower refractive index materials, wherein refractive indices of the one or more higher refractive index materials of the first layered film are higher than refractive indices of the one or more lower refractive index materials of the first layered film. The window includes a second layered film disposed on the second surface of the substrate, the second layered film comprising alternating layers of one or more higher refractive index materials and one or more lower refractive index materials, wherein refractive indices of the one or more higher refractive index materials of the second layered film are higher than refractive indices of the one or more lower refractive index materials of the second layered film. The window comprises a maximum hardness, measured at the first layered film and by the Berkovich Indenter Hardness Test, of at least 8 GPa, The quantity, the thicknesses, number, and materials of the alternating layers of the first and second layered films are configured so that the window has: an average percentage transmittance, calculated over a 50 nm wavelength range of interest between 1400 nm and 1600 nm, of greater than 90% for light incident on the first surface and the second surface at angles of incidence of less than or equal to 15°; an average reflectance, calculated over a 50 nm wavelength range of interest between 1400 nm and 1600 nm, of less than 1% for light incident on the first surface and the second surface at angles of less than or equal to 15°; and an average percentage transmission, calculated from 400 nm to 700 nm, of less an 5% for light incident on the first surface and the second surface at angles of incidence of less than or equal to 15°.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiments, and together with the description serve to explain principles and operation of the various embodiments.

### BRIEF DESCRIPTION OF THE DRAWINGS

FIG. 1 is a side view of a vehicle in an external environment, illustrating a LIDAR system on a roof of the vehicle and another LIDAR system on a forward portion of the vehicle, according to one or more embodiments of the present disclosure;
FIG. 2 is a schematic view of one of the LIDAR systems of FIG. 1, illustrating an electromagnetic radiation emitter and sensor in an enclosure, and the electromagnetic radiation emitter and sensor emitting electromagnetic radiation that exits the enclosure through a window and returns as reflected radiation through the window, according to one or more embodiments of the present disclosure;
FIG. 3 is a cross-sectional view of the window of FIG. 2 taken at area III of FIG. 2, illustrating the window including a substrate with a layered film over a first surface of the substrate, and a second layered film over a second surface of the substrate, according to one or more embodiments of the present disclosure;
FIG. 4 is a cross-sectional view of the window of FIG. 3 taken at area IV of FIG. 3, illustrating the layered film including alternating layers of one or more higher refractive index materials and one or more lower refractive index materials with a layer of the one or more lower refractive index materials providing a terminal surface closest to the external environment, according to one or more embodiments of the present disclosure;
FIG. 5 is a cross-sectional view of the window of FIG. 3 taken at area V of FIG. 3, illustrating the second layered film including alternating layers of one or more higher refractive index materials and one or more lower refractive index materials with a layer of the one or more lower refractive index materials providing a terminal surface closest to the electromagnetic radiation emitter and sensor, according to one or more embodiments of the present disclosure;
FIG. 6 is a graph of refractive index and extinction coefficient as a function of wavelength for a silicon material used in a second layered film of a first example window comprising first and second layered films disposed on a glass substrate, according to one or more embodiments of the present disclosure;
FIG. 7 is a graph of two-surface visible-to-infrared performance, in terms of modelled reflectance and transmittance, for light normally incident on the first example window throughout a wavelength range of 400 nm to 1600 nm, according to one or more embodiments of the present disclosure;
FIG. 8 is a graph of a modeled two-surface transmittance for light in an infrared wavelength range of interest from 1500 nm to 1600 nm that is normally incident on the first layered film of the example window, according to one or more embodiments of the present disclosure;
FIG. 9 is a graph of a modeled two-surface transmittance for s and p polarized light in an infrared wavelength range of interest from 1500 nm to 1600 nm that is incident on the first layered film of the first example window at a 60 degree angle of incidence, according to one or more embodiments of the present disclosure;
FIG. 10 is a graph of a modelled two-surface reflectance for light in an infrared wavelength range of interest from 1500 nm to 1600 nm that is normally incident on the first and second layered films of the first example window, according to one or more embodiments of the present disclosure;
FIG. 11 is a graph of a modelled two-surface transmittance for light in the visible spectrum that is normally incident on the first layered film of the first example window, according to one or more embodiments of the present disclosure;
FIG. 12A is a graph of CIELAB color space values a* and b* for light incident on the first layered film of the first example window at a plurality of angles of incidence, according to one or more embodiments of the present disclosure;
FIG. 12B is a graph of the CIELAB lightness value L* for light incident on the first layered film of the first example window at a plurality of angles of incidence, according to one or more embodiments of the present disclosure;
FIG. 13 is a graph if nanoindentation hardness as a function of depth into first layered films of two samples constructed according to the first example window, according to one or more embodiments of the present disclosure;
FIG. 14 is a graph of refractive index and extinction coefficient as a function of wavelength for a silicon material used in a second layered film of a second example window comprising first and second layered films disposed on a glass substrate, according to one or more embodiments of the present disclosure;
FIG. 15 is a graph of two-surface visible-to-infrared performance, in terms of modelled reflectance and transmittance, for light normally incident on the second example window throughout a wavelength range of 400 nm to 1600 nm, according to one or more embodiments of the present disclosure;
FIG. 16 is a graph of a modeled two-surface transmittance for light in an infrared wavelength range of interest from 1500 nm to 1600 nm that is normally incident on the first layered film of the second example window, according to one or more embodiments of the present disclosure;
FIG. 17 is a graph of a modeled two-surface transmittance for s and p polarized light in an infrared wavelength range of interest from 1500 nm to 1600 nm that is incident on the first layered film of the second example window at a 60 degree angle of incidence, according to one or more embodiments of the present disclosure;
FIG. 18 is a graph of a modelled two-surface reflectance for light in an infrared wavelength range of interest from 1500 nm to 1600 nm that is normally incident on the first and second layered films of the second example window, according to one or more embodiments of the present disclosure;
FIG. 19 is a graph of a modelled two-surface transmittance for light in the visible spectrum that is normally incident on the first layered film of the second example window, according to one or more embodiments of the present disclosure;
FIG. 20A is a graph of CIELAB color space values a* and b* for light incident on the first layered film of the second example window at a plurality of angles of incidence, according to one or more embodiments of the present disclosure;
FIG. 20B is a graph of the CIELAB lightness value L* for light incident on the first layered film of the second example window at a plurality of angles of incidence, according to one or more embodiments of the present disclosure;
FIG. 21 is a graph of two-surface visible-to-infrared performance, in terms of modelled reflectance and transmittance, for light normally incident on a third example window comprising a first layered film and a second layered film, throughout a wavelength range of 400 nm to 1600 nm, according to one or more embodiments of the present disclosure;
FIG. 22 is a graph of a modeled two-surface transmittance for light in an infrared wavelength range of interest from 1500 nm to 1600 nm that is normally incident on the first layered film of the third example window, according to one or more embodiments of the present disclosure;
FIG. 23 is a graph of a modeled two-surface transmittance for s and p polarized light in an infrared wavelength range of interest from 1500 nm to 1600 nm that is incident on the first layered film of the third example window at a 60 degree angle of incidence, according to one or more embodiments of the present disclosure;
FIG. 24 is a graph of a modelled two-surface reflectance for light in an infrared wavelength range of interest from 1500 nm to 1600 nm that is normally incident on the first and second layered films of the third example window, according to one or more embodiments of the present disclosure;
FIG. 25 is a graph of a modelled two-surface transmittance for light in the visible spectrum that is normally incident on the first layered film of the third example window, according to one or more embodiments of the present disclosure;
FIG. 26A is a graph of CIELAB color space values a* and b* for light incident on the first layered film of the third example window at a plurality of angles of incidence, according to one or more embodiments of the present disclosure;
FIG. 26B is a graph of the CIELAB lightness value L* for light incident on the first layered film of the third example window at a plurality of angles of incidence, according to one or more embodiments of the present disclosure;
FIG. 27 is a graph of two-surface visible-to-infrared performance, in terms of modelled reflectance and transmittance, for light normally incident on a fourth example window comprising a first layered film and a second layered film, throughout a wavelength range of 400 nm to 1600 nm, according to one or more embodiments of the present disclosure;
FIG. 28 is a graph of a modeled two-surface transmittance for light in an infrared wavelength range of interest from 1500 nm to 1600 nm that is normally incident on the first layered film of the fourth example window, according to one or more embodiments of the present disclosure;
FIG. 29 is a graph of a modeled two-surface transmittance for s and p polarized light in an infrared wavelength range of interest from 1500 nm to 1600 nm that is incident on the first layered film of the fourth example window at a 60 degree angle of incidence, according to one or more embodiments of the present disclosure;
FIG. 30 is a graph of a modelled two-surface reflectance for light in an infrared wavelength range of interest from 1500 nm to 1600 nm that is normally incident on the first and second layered films of the fourth example window, according to one or more embodiments of the present disclosure;
FIG. 31 is a graph of a modelled two-surface transmittance for light in the visible spectrum that is normally incident on the first layered film of the fourth example window, according to one or more embodiments of the present disclosure;
FIG. 32A is a graph of CIELAB color space values a* and b* for light incident on the first layered film of the fourth example window at a plurality of angles of incidence, according to one or more embodiments of the present disclosure;
FIG. 32B is a graph of the CIELAB lightness value L* for light incident on the first layered film of the fourth example window at a plurality of angles of incidence, according to one or more embodiments of the present disclosure;
FIG. 33 is a graph of two-surface visible-to-infrared performance, in terms of modelled reflectance and transmittance, for light normally incident on a fifth example window comprising a first layered film and a second layered film, throughout a wavelength range of 400 nm to 1600 nm, according to one or more embodiments of the present disclosure;
FIG. 34 is a graph of a modeled two-surface transmittance for light in an infrared wavelength range of interest from 1500 nm to 1600 nm that is normally incident on the first layered film of the fifth example window, according to one or more embodiments of the present disclosure;
FIG. 35 is a graph of a modeled two-surface transmittance for s and p polarized light in an infrared wavelength range of interest from 1500 nm to 1600 nm that is incident on the first layered film of the fifth example window at a 60 degree angle of incidence, according to one or more embodiments of the present disclosure;
FIG. 36 is a graph of a modelled two-surface reflectance for light in an infrared wavelength range of interest from 1500 nm to 1600 nm that is normally incident on the first and second layered films of the fifth example window, according to one or more embodiments of the present disclosure;
FIG. 37 is a graph of a modelled two-surface transmittance for light in the visible spectrum that is normally incident on the first layered film of the fifth example window, according to one or more embodiments of the present disclosure;
FIG. 38A is a graph of CIELAB color space values a* and b* for light incident on the first layered film of the fifth example window at a plurality of angles of incidence, according to one or more embodiments of the present disclosure;
FIG. 38B is a graph of the CIELAB lightness value L* for light incident on the first layered film of the fifth example window at a plurality of angles of incidence, according to one or more embodiments of the present disclosure;
FIG. 39 is a graph of refractive index and extinction coefficient as a function of wavelength for a silicon material used in a second layered film of a sixth example window comprising first and second layered films disposed on a glass substrate, according to one or more embodiments of the present disclosure;
FIG. 40 is a graph of two-surface visible-to-infrared performance, in terms of modelled transmittance, for light incident on a sixth example window comprising a first layered film and a second layered film, throughout a wavelength range of 400 nm to 1600 nm, according to one or more embodiments of the present disclosure;
FIG. 41 is a graph of two-surface visible-to-infrared performance, in terms of modelled reflectance, for light incident on a sixth example window comprising a first layered film and a second layered film, throughout a wavelength range of 400 nm to 1600 nm, according to one or more embodiments of the present disclosure;
FIG. 42 is a graph of CIELAB color space values a* and b* for light incident on the first layered film of the sixth example window at a plurality of angles of incidence, according to one or more embodiments of the present disclosure;
FIG. 43 is graph of two-surface infrared performance, in terms of modelled transmittance, for light incident on a seventh example window comprising a first layered film and a second layered film, throughout a wavelength range 1500 nm to 1600 nm, according to one or more embodiments of the present disclosure;
FIG. 44 is a graph of two-surface infrared performance, in terms of modelled reflectance, for light incident on a seventh example window comprising a first layered film and a second layered film, throughout a wavelength range of 1500 nm to 1600 nm, according to one or more embodiments of the present disclosure;
FIG. 45 is a graph of two-surface visible-to-infrared performance, in terms of modelled transmittance, for light incident on a seventh example window comprising a first layered film and a second layered film, throughout a wavelength range of 350 nm to 1600 nm, according to one or more embodiments of the present disclosure;
FIG. 46 is a graph of two-surface visible-to-infrared performance, in terms of modelled reflectance, for light incident on a seventh example window comprising a first layered film and a second layered film, throughout a wavelength range of 350 nm to 1600 nm, according to one or more embodiments of the present disclosure;
FIG. 47 is a graph of two-surface visible performance, in terms of modelled transmittance, for light incident on a seventh example window comprising a first layered film and a second layered film, throughout a wavelength range of 400 nm to 700 nm, according to one or more embodiments of the present disclosure;
FIG. 48 is a graph of CIELAB color space values a* and b* for light incident on the first layered film of the seventh example window at a plurality of angles of incidence, according to one or more embodiments of the present disclosure; and
FIG. 49 is a graph of the CIELAB lightness value L* for light incident on the first layered film of the seventh example window at a plurality of angles of incidence, according to one or more embodiments of the present disclosure.

### DETAILED DESCRIPTION

Reference will now be made in detail to embodiments of windows for use in LIDAR sensors. Whenever possible, the same reference numerals will be used throughout the drawings to refer to the same or like parts. The windows comprise described herein may include first and second layered films that are constructed of alternating layers of higher and lower refractive index materials and configured to provide relatively high transmittance and low reflectance in a desired infrared wavelength range of interest. When the window is installed in a LIDAR system, the first layered film may face away from the sensor/electromagnetic radiation emitter and be exposed to an external environment, while the second layered film may face the sensor/electromagnetic radiation emitter. That is, when the LIDAR system is viewed from the outside, an observer may view the first layered film. Light emitted by the electromagnetic radiation emitter may be initially incident on the second layered film prior to propagating through the substrate. In accordance with the present disclosure, the fist layered films of the windows described herein may include one or more scratch resistant layers that are relatively thick (e.g., greater than or equal to 500 nm) of a high refractive index material. The scratch resistant layer may be embedded within the first layered film such that the window comprises a maximum nanoindentation hardness of greater than or equal to 8 GPa (e.g., greater than or equal to 10 GPa, greater than or equal to 12 GPa, greater than or equal to 14 GPa) when measured at the first layered film by the Berkovich Indenter Hardness Test. Such nanoindentation hardness beneficially provides scratch resistance and improves performance of the LIDAR system.

In aspects, the alternating layers of the first and second layered films of the windows described herein are also constructed to provide optical performance attributes that are desirable for operation of the LIDAR system in the infrared spectrum. In embodiments, the quantity, the thicknesses, number, and materials of the alternating layers of the first and second layered films are configured so that the window has an average percentage transmittance, calculated over a 50 nm wavelength range of interest from 1400 nm to 1600 nm, of greater than 90% (e.g., greater than or equal to 95%) for light incident on the first surface and the second surface at angles of incidence of 15° or less. The quantity, the thicknesses, number, and materials of the alternating layers of the first and second layered films may be configured so that the window also comprises an average percentage P-polarization transmittance and S-Polarization transmittance, calculated over a 50 nm wavelength range of interest from 1400 nm to 1600 nm, of greater than 85% (e.g., greater than or equal to 90%, greater than or equal to 93%) for light incident on the first surface and the second surface at an angle of incidence of 60 degrees or less.

In further aspects, the first and second layered films of the windows described herein may also be structured to have relatively low reflectance and transmittance of visible light, thereby providing the window with an aesthetically pleasing dark appearance and eliminating signal noise. In embodiments, for example, the quantity, the thicknesses, number, and materials of the alternating layers of the first and second layered films are configured so that the window has an average percentage transmission, calculated from 400 nm to 700 nm, of less than 5% for light incident on the first layered film at angles of incidence of 15° or less. Such low transmission of visible light may be achieved by incorporating silicon layers into the second layered film in the amounts described herein. As a result, when viewed from the first layered film (i.e., from outside the LIDAR sensor), the windows described herein may exhibit CIELAB lightness L* values of less than or equal to 45 (e.g., less than or equal to 40, less than or equal to 35, less than or equal to 30) when viewed from angles of 60 degrees or less. The windows described herein may also exhibit CIELAB color space a* and b* values that are greater than or equal to -6 and less than or equal to 6 (e.g., greater than or equal to -5 and less than or equal to 5, greater than or equal to -4 and less than or equal to 4, greater than or equal to -3 and less than or equal to 3, greater than or equal to -2.5 and less than or equal to 2.5) when viewed from the first layered film. The perceived color of the window, when viewed from the side of the first layered film, may be black or relatively dark so as to render the window less noticeable to outside observers.

As such, the windows described herein provide durable anti-reflection performance for a desired wavelength range of interest from 1400 nm to 1600 nm, while providing an aesthetically pleasing and performance enhancing black or dark appearance. The windows described herein may improve LIDAR sensor performance over certain existing sensors by preventing visible light from being incident on the sensors and improving signal-to-noise ratio. Moreover, the windows described herein may reduce unwanted glare that is visible to outside observers.

Unless otherwise noted, the total, specular, and average reflectance values provided herein are two-surface reflectance values, representing a total reflectance of an entire window, including the reflectance associated with each material interface in the window (e.g., between air and the layered films, between the layered films and the substrate, etc.). Unless otherwise noted, reflectance values provided in the infrared are measured from the side of the second layered film described herein (e.g., from the side positioned facing a sensor and emitter of a LIDAR system) and reflectance values provided in the visible are measured from the side of the first layered film described herein (e.g., from the side positioned facing an external environment of a LIDAR system).

Unless otherwise specified herein, average transmittance and reflectance values are calculated using percentage reflectance and transmittance values at various wavelengths within a specified wavelength range. Average reflectance transmittance values may be calculated by measuring at least 3 reflectance and transmittance values within a desired wavelength range, and averaging those values.

Unless otherwise noted herein, CIELAB color space a* and b* and lightness L* values are measured/simulated using a D65 illuminate for a standard observer with a 10-degree field of view.

As used herein, the terms "dark appearance" or "black appearance" refer to the reflected appearance of the window when viewed from an external surface. Windows having a dark appearance or black appearance in accordance with the present disclosure comprise CIELAB lightness L* values of less than 45 when viewed from angles 60° or less.

Unless otherwise expressly stated, it is in no way intended that any method set forth herein be construed as requiring that its steps be performed in a specific order. Accordingly, where a method claim does not actually recite an order to be followed by its steps, or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

Modifications of the disclosure will occur to those skilled in the art and to those who make or use the disclosure. Therefore, it is understood that the embodiments shown in the drawings and described above are merely for illustrative purposes and not intended to limit the scope of the disclosure, which is defined by the following claims, as interpreted according to the principles of patent law, including the doctrine of equivalents.

In this document, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises . . . a" does not, without more constraints, preclude the existence of additional identical elements in the process, method, article, or apparatus that comprises the element.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The term "formed from" can mean one or more of comprises, consists essentially of, or consists of. For example, a component that is formed from a particular material can comprise the particular material, consist essentially of the particular material, or consist of the particular material.

As also used herein, the terms "article," "glass-article," "ceramic-article," "glass-ceramics," "glass elements," "glass-ceramic article" and "glass-ceramic articles" may be used interchangeably, and in their broadest sense, to include any object made wholly or partly of glass and/or glass-ceramic material.

The term "disposed" is used herein to refer to a layer or sub-layer that is coated, deposited, formed, or otherwise provided onto a surface. The term disposed can include layers/sub-layers provided in direct contact with adjacent layers/sub-layers or layers/sub-layers separated by intervening material which may or may not form a layer.

Unless otherwise noted herein, refractive indices of the materials described herein are measured at 1550 nm.

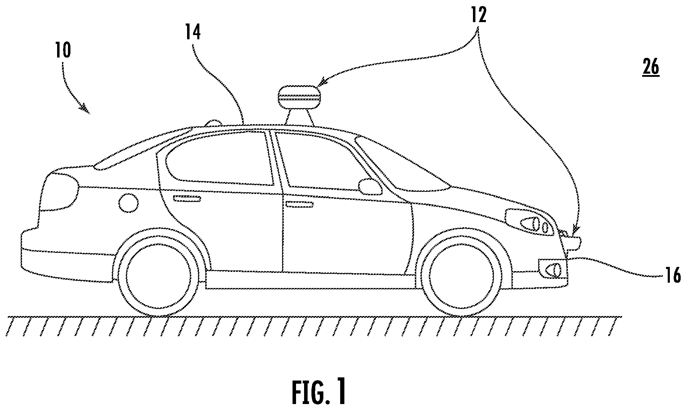

Referring now to FIG. 1, a vehicle 10 includes one or more LIDAR systems 12. The one or more LIDAR systems 12 can be disposed anywhere on or within the vehicle 10. For example, the one or more LIDAR systems 12 can be disposed on a roof 14 of the vehicle 10 and/or a forward portion 16 of the vehicle 10.

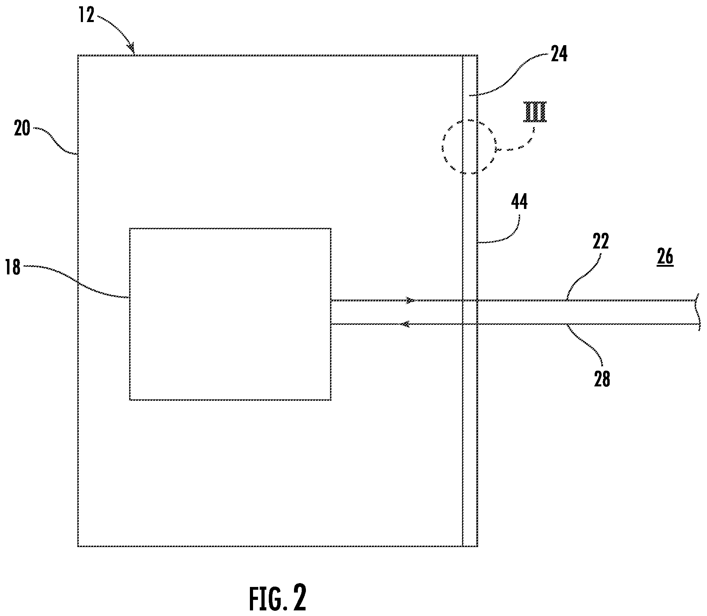

Referring now to FIG. 2, each of the one or more LIDAR systems 12 include an electromagnetic radiation emitter and sensor 18, as known in the art, which may be enclosed in an enclosure 20. The electromagnetic radiation emitter and sensor 18 emits electromagnetic radiation 22 having a wavelength or range of wavelengths. The emitted radiation 22 exits the enclosure 20 through a window 24, which is in the path of the emitted electromagnetic radiation. If an object (not illustrated) in an external environment 26 is in the path of the emitted radiation 22, the emitted radiation 22 will reflect off of the object and return to the electromagnetic radiation emitter and sensor 18 as reflected radiation 28. The reflected radiation 28 again passes through the window 24 to reach the electromagnetic radiation emitter and sensor 18. In embodiments, the emitted radiation 22 and the reflected radiation 28 may include light within a suitable wavelength range of interest. For example, in embodiments, the emitted radiation 22 and reflected radiation 28 may be greater than or equal to 1400 nm and less than or equal to 1600 nm (e.g., greater than or equal to 1500 nm and less than or equal to 1600 nm, greater than or equal to 1525 nm and less than or equal to 1575 nm, approximately 1550 nm, 1550 nm). Electromagnetic radiation other than the reflected radiation 28 (such as electromagnetic radiation having wavelengths in the visible spectrum, portions of the ultraviolet range) may also interact with the window 24. As described herein, the window 24 may include layered films comprising layer structures that are designed to absorb light in the visible spectrum while also reflecting relatively low amounts of light in the visible spectrum, such that the window has a dark or black appearance when viewed from outside of the enclosure 20.

The "visible spectrum" is the portion of the electromagnetic spectrum that is visible to the human eye and generally refers to electromagnetic radiation having a wavelength within the range of about 380nm or 400nm to about 700nm. The "ultraviolet range" is the portion of the electromagnetic spectrum having wavelengths between about 10nm and about 400nm. The "infrared range" of the electromagnetic spectrum begins at about 700nm and extends to longer wavelengths. The sun generates solar electromagnetic radiation, commonly referred to as "sunlight," having wavelengths that fall within all three of those ranges.

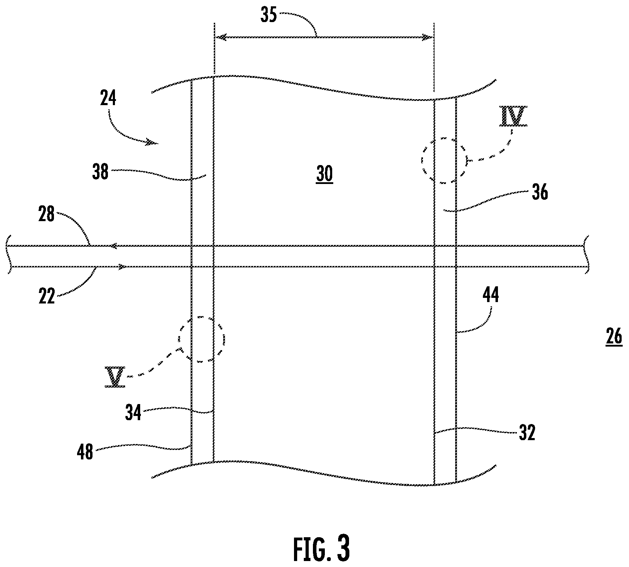

Referring now to FIG. 3, the window 24 for each of the one or more LIDAR systems 12 includes a substrate 30. The substrate 30 includes a first surface 32 and a second surface 34. The first surface 32 and the second surface 34 are the primary surfaces of the substrate 30. The first surface 32 is closest to the external environment 26. The second surface 34 is closest to the electromagnetic radiation emitter and sensor 18. The emitted radiation 22 encounters the second surface 34 before the first surface 32. The reflected radiation 28 encounters the first surface 32 before the second surface 34. The substrate 30 further includes a first layered film 36 disposed on the first surface 32 of the substrate 30 and a second layered film 38 is disposed on the second surface 34 of the substrate 30. It should be understood that the window 24 as described herein is not limited to vehicular applications, and can be used for whatever application the window 24 would be useful to provide improved impact and optical performance, as described further herein.

The substrate 30 may be constructed from a variety of different materials in accordance with the present disclosure. In embodiments, the substrate 30 may be constructed of any type of glass, a glass ceramic, ceramic, or a suitable polymer-based material. Various example structures and compositions of the substrate 30 are now described in greater detail.

In embodiments, the substrate 30 includes a glass composition or is a glass article. The substrate 30, for example, can include a borosilicate glass, an aluminosilicate glass, soda-lime glass, chemically strengthened borosilicate glass, chemically strengthened aluminosilicate glass, or chemically strengthened soda-lime glass. In embodiments, the glass composition of the substrate 30 is capable of being chemically strengthened by an ion-exchange process. In embodiments, the composition may be free of lithium ions.

An alkali aluminosilicate glass composition suitable for the substrate 30 comprises alumina, at least one alkali metal and, In embodiments, greater than 50 mol. % SiO₂, in other embodiments at least 58 mol. % SiO₂, and in still other embodiments at least 60 mol. % SiO₂, wherein the ratio (Al₂O₃+B₂O₃)/Σ_{modifiers} (i.e., sum of modifiers) is greater than 1, wherein the ratio of the components are expressed in mol. % and the modifiers are alkali metal oxides. This composition, in particular embodiments, comprises: 58-72 mol. % SiO₂; 9-17 mol. % Al₂O₃; 2-12 mol. % B₂O₃; 8-16 mol. % Na₂O; and 0-4 mol. % K₂O, wherein the ratio (Al₂O₃+B₂O₃)/Σ_{modifiers} (i.e., sum of modifiers) is greater than 1.

Another suitable alkali aluminosilicate glass composition for the substrate 30 comprises: 64-68 mol. % SiO₂; 12-16 mol. % Na₂O; 8-12 mol. % Al₂O₃; 0-3 mol. % B₂O₃; 2-5 mol. % K₂O; 4-6 mol. % MgO; and 0-5 mol. % CaO, wherein: 66 mol. %≦SiO₂+B₂O₃+Ca≦69 mol. %; Na₂O+K₂O+B₂O₃+MgO+CaO+SrO>10 mol. %; 5 mol. %≦MgO+CaO+SrO≦8 mol. %; (Na₂O+B₂O₃)-Al₂O₃≦2 mol. %; 2 mol. %≦Na₂O-Al₂O₃≦6 mol. %; and 4 mol. %≦(Na₂O+K₂O)-Al₂O₃≦10 mol. %.

Another suitable alkali aluminosilicate glass composition for the substrate 30 comprises: 2 mol. % or more of Al₂O₃ and/or ZrO₂, or 4 mol. % or more of Al₂O₃ and/or ZrO₂.

One example glass composition comprises SiO₂, B₂O₃, and Na₂O, where (SiO₂+B₂O₃)≧66 mol. %, and Na₂O≧9 mol. %. In an embodiment, the composition includes at least 6 wt. % aluminum oxide. In a further embodiment, the composition of one or more alkaline earth oxides, such as a content of alkaline earth oxides, is at least 5 wt. %. Suitable compositions, In embodiments, further comprise at least one of K₂O, MgO, and CaO. In a particular embodiment, the composition of the substrate 30 comprises 61-75 mol. % SiO₂; 7-15 mol. % Al₂O₃; 0-12 mol. % B₂O₃; 9-21 mol. % Na₂O; 0-4 mol. % K₂O; 0-7 mol. % MgO; and 0-3 mol. % CaO.

A further example composition suitable for the substrate 30 comprises: 60-70 mol. % SiO₂; 6-14 mol. % Al₂O₃; 0-15 mol. % B₂O₃; 0-15 mol. % Li₂O; 0-20 mol. % Na₂O; 0-10 mol. % K₂O; 0-8 mol. % MgO; 0-10 mol. % CaO; 0-5 mol. % ZrO₂; 0-1 mol. % SnO₂; 0-1 mol. % CeO₂; less than 50 ppm As₂O₃; and less than 50 ppm Sb₂O₃; where 12 mol. %≦(Li₂O+Na₂O+K₂O)≦20 mol. % and 0 mol. %≦(MgO+CaO)≦10 mol. %.

A still further example glass composition suitable for the substrate 30 comprises: 63.5-66.5 mol. % SiO₂; 8-12 mol. % Al₂O₃; 0-3 mol. % B₂O₃; 0-5 mol. % Li₂O; 8-18 mol. % Na₂O; 0-5 mol. % K₂O; 1-7 mol. % MgO; 0-2.5 mol. % CaO; 0-3 mol. % ZrO₂; 0.05-0.25 mol. % SnO₂; 0.05-0.5 mol. % CeO₂; less than 50 ppm As₂O₃; and less than 50 ppm Sb₂O₃; where 14 mol. %≦(Li₂O+Na₂O+K₂O)≦18 mol. % and 2 mol. %≦(MgO+CaO)≦7 mol. %.

The substrate 30 may be substantially planar or sheet-like, although other embodiments may utilize a curved or otherwise shaped or sculpted substrate. The length and width of the substrate 30 can vary according to the dimensions required for the window 24. The substrate 30 can be formed using various methods, such as float glass processes and down-draw processes such as fusion draw and slot draw. The substrate 30 can be used in a non-strengthened state. A commercially available example of a suitable non-strengthened substrate 30 for the window 24 is Corning^{®} glass code 2320, which is a sodium aluminosilicate glass substrate.

The glass forming the substrate 30 can be modified to have a region contiguous with the first surface 32 and/or a region contiguous with the second surface 34 to be under compressive stress ("CS"). In such a circumstance, the region(s) under compressive stress extends from the first surface 32 and/or the second surface 34 to a depth(s) of compression. This generation of compressive stress further creates a central region that is under a tensile stress, having a maximum value at the center of the central region, referred to as central tension or center tension (CT). The central region extends between the depths of compression, and is under tensile stress. The tensile stress of the central region balances or counteracts the compressive stresses of the regions under compressive stress. As used herein, the terms "depth of compression" and "DOC" refer to the depth at which the stress within the substrate 30 changes from compressive to tensile stress. At the depth of compression, the stress crosses from a positive (compressive) stress to a negative (tensile) stress and thus has a value of zero. The depth of compression protects the substrate 30 from the propagation of flaws introduced by sharp impact to the first and/or second surfaces 32, 34 of the substrate 30, while the compressive stress minimizes the likelihood of a flaw growing and penetrating through the depths of compression. In embodiments, the depths of compression are each at least 20 µm. In embodiments, the absolute value of the maximum compressive stress CS within the regions is at least 200 MPa, at least about 400 MPa, at least 600 MPa, or up to about 1000 MPa.

Two methods for extracting detailed and precise stress profiles (stress as a function of depth) for a substrate 30 with regions under compressive stress are disclosed in U.S. Patent No. 9,140,543, entitled "Systems and Methods for Measuring the Stress Profile of Ion-Exchanged Glass," filed by Douglas Clippinger Allan et al. on May 3, 2012, and claiming priority to U.S. Provisional Patent Application No. 61/489,800, having the same title, and filed on May 25, 2011, the contents of which are incorporated herein by reference in their entirety.

In embodiments, generating the region(s) of the substrate 30 under compressive stress includes subjecting the substrate 30 to an ion-exchange chemical tempering process (chemical tempering is often referred to as "chemical strengthening"). In the ion-exchange chemical tempering process, ions at or near the first and second surfaces 32, 34 of the substrate 30 are replaced by-or exchanged with-larger ions usually having the same valence or oxidation state. In those embodiments in which the substrate 30 comprises, consists essentially of, or consists of an alkali aluminosilicate glass, an alkali borosilicate glass, an alkali aluminoborosilicate glass, or an alkali silicate glass, ions in the surface layer of the glass and the larger ions are monovalent alkali metal cations, such as Na⁺ (when Li⁺ is present in the glass), K⁺, Rb⁺, and Cs⁺. Alternatively, monovalent cations in, at, or near the first and second surfaces 32, 34 may be replaced with monovalent cations other than alkali metal cations, such as Ag⁺ or the like.

In embodiments, the ion-exchange process is carried out by immersing the substrate 30 in a molten salt bath containing the larger ions to be exchanged with the smaller ions in the substrate 30. It will be appreciated by those skilled in the art that parameters for the ion-exchange process, including, but not limited to, bath composition and temperature, immersion time, the number of immersions of the glass in a salt bath (or baths), use of multiple salt baths, and additional steps such as annealing, washing and the like, are generally determined by the composition of the substrate 30 and the desired depths of compression and compressive stress of the substrate 30 that result from the strengthening operation. By way of example, ion-exchange of alkali metal-containing glass substrates may be achieved by immersion in at least one molten bath containing a salt such as, but not limited to, nitrates, sulfates, and chlorides of the larger alkali metal ion. In embodiments, the molten salt bath comprises potassium nitrate (0-100 wt%), sodium nitrate (0-100 wt%), and lithium nitrate (0-12 wt%), the combined potassium nitrate and sodium nitrate having a weight percentage within the range of 88 wt% to 100 wt%. In embodiments, the temperature of the molten salt bath typically is in a range from about 350°C up to about 500°C, while immersion times range from about 15 minutes up to about 40 hours, including from about 20 minutes to about 10 hours. However, temperatures and immersion times different from those described above may also be used. The substrate 30 may be acid polished or otherwise treated to remove or reduce the effect of surface flaws.

In embodiments, the substrate 30 includes a glass-ceramic material having both a glassy phase and a ceramic phase. Illustrative glass-ceramics include those materials where the glass phase is formed from a silicate, borosilicate, aluminosilicate, or boroaluminosilicate, and the ceramic phase is formed from β-spodumene, β-quartz, nepheline, kalsilite, or carnegieite. "Glass-ceramics" include materials produced through controlled crystallization of glass. Examples of suitable glass-ceramics may include Li2O-Al2O3-SiO2 system (i.e., LAS-System) glass-ceramics, MgO-Al2O3-SiO2 system (i.e., MAS-System) glass-ceramics, ZnO × Al2O3 × nSiO2 (i.e., ZAS system), and/or glass-ceramics that include a predominant crystal phase including β-quartz solid solution, β-spodumene, cordierite, and lithium disilicate. The glass-ceramic substrates may be strengthened using a chemical strengthening process.

In embodiments, the substrate 30 includes a ceramic material such as inorganic crystalline oxides, nitrides, carbides, oxy nitrides, carbo nitrides, and/or the like. Illustrative ceramics include those materials having an alumina, aluminum titanate, mullite, cordierite, zircon, spinel, perovskite, zirconia, ceria, silicon carbide, silicon nitride, silicon aluminum oxynitride, or zeolite phase.

In embodiments, the substrate 30 includes an organic or suitable polymeric material. Examples of suitable polymers include, without limitation: thermoplastics including polystyrene (PS) (including styrene copolymers and blends), polycarbonate (PC) (including copolymers and blends), polyesters (including copolymers and blends, including polyethyleneterephthalate and polyethyleneterephthalate copolymers), polyolefins (PO) and cyclicpolyolefins (cyclic-PO), polyvinylchloride (PVC), acrylic polymers including polymethyl methacrylate (PMMA) (including copolymers and blends), thermoplastic urethanes (TPU), polyetherimide (PEI) and blends of these polymers with each other. Other exemplary polymers include epoxy, styrenic, phenolic, melamine, and silicone resins.

In embodiments, the substrate 30 includes a plurality of layers or sub-layers. The layers or sub-layers of the substrate 30 may be the same or different from one another. In embodiments, for example, the substrate 30 comprises a glass laminate structure. In embodiments, the glass laminate structure comprises a first glass pane and a second pane attached to one another via a suitable interlayer (e.g., a polymer interlayer) disposed between the first glass pane and the second glass pane. In embodiments, the glass laminate structure comprises a glass-on-glass laminate structure formed via, for example, the fusion draw process. Glass-polymer laminates are also contemplated and within the scope of the present disclosure. Any material capable of meeting the optical requirements described herein may be used as the substrate 30.

In embodiments, the substrate 30 exhibits an elastic modulus (or Young's modulus) in the range from about 30 GPa to about 120 GPa. In some instances, the elastic modulus of the substrate may be in the range from about 30 GPa to about 110 GPa, from about 30 GPa to about 100 GPa, from about 30 GPa to about 90 GPa, from about 30 GPa to about 80 GPa, from about 30 GPa to about 70 GPa, from about 40 GPa to about 120 GPa, from about 50 GPa to about 120 GPa, from about 60 GPa to about 120 GPa, from about 70 GPa to about 120 GPa, and all ranges and sub-ranges therebetween.

In embodiments, the substrate 30 exhibits an average transmittance over the visible wavelength regime of about 85% or greater, about 86% or greater, about 87% or greater, about 88% or greater, about 89% or greater, about 90% or greater, about 91% or greater or about 92% or greater. In embodiments, the substrate 30 comprises a tinting component (e.g., tinting layer or additive) and may optionally exhibit a color, such as white, black, red, blue, green, yellow, orange etc.

As depicted in FIG. 3, the substrate 30 has a thickness 35 defined as the shortest straight-line distance between the first surface 32 and the second surface 34. In embodiments, the thickness 35 of the substrate 30 is between about 100 µm and about 5 mm. In embodiments, the substrate 30 can have a physical thickness 35 ranging from about 100 µm to about 500 µm (e.g., 100, 200, 300, 400, or 500 µm). In other embodiments, the thickness 35 ranges from about 500 µm to about 1000 µm (e.g., 500, 600, 700, 800, 900, or 1000 µm). The thickness 35 may be greater than about 1 mm (e.g., about 2, 3, 4, 5 mm, 6 mm, or 7 mm). In one or more specific embodiments, the thickness 35 is 2 mm or less or less than or equal to 1 mm.

In embodiments, the thickness 35 is uniform (e.g., varies by less than 1% throughout an entirety of the substrate) such that the substrate 35 is in the form of a planar sheet. In embodiments, the thickness 35 is a variable thickness and has a value that varies as a function of position on the substrate 30. The thickness 35 may vary along one or more of its dimensions for aesthetic and/or functional reasons. For example, the edges of the substrate 30 may be thicker as compared to more central regions of the substrate 30. The length, width and physical thickness dimensions of the substrate 30 may also vary according to the application or use of the article 30.

In embodiments, the substrate 30 includes a visible light absorbing, IR-transmitting material layer. Examples of such materials include infrared transmitting, visible absorbing acrylic sheets, such as those commercially available from ePlastics under the trade names Plexiglas^{®} IR acrylic 3143 and CYRO's ACRYLITE^{®} IR acrylic 1146. Plexiglas^{®} IR acrylic 3143 has a transmissivity of about 0% (at least less than 10%, or less than 1%) for electromagnetic radiation having wavelengths of about 700nm or shorter, but a transmissivity of about 90% (above 85%) for wavelengths within the range of 800nm to about 1100nm (including 905nm).

In embodiments, the substrate 30 exhibits a refractive index in the range from about 1.45 to about 1.55. In embodiments, the substrate exhibits an average transmission of greater than or equal to 95% (e.g., greater than or equal to 96%, greater than or equal to 97%, greater than or equal to 98%, greater than or equal to 99%, greater than or equal to 99.5%) throughout a spectral range from 1400 nm to 1600 nm.

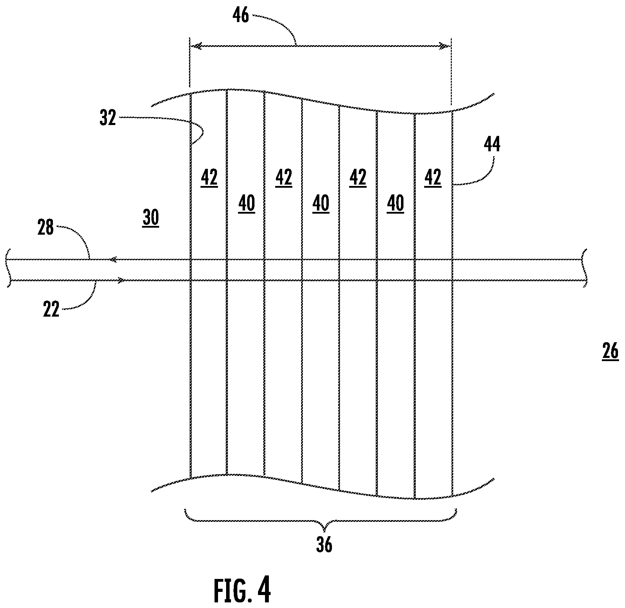

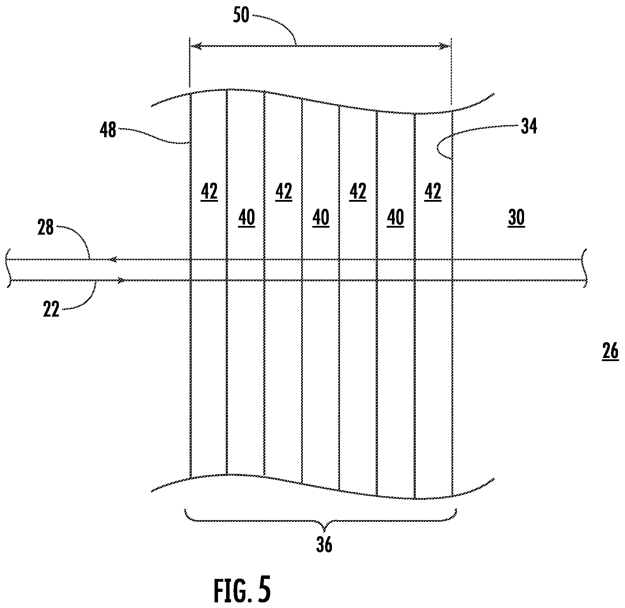

Referring now to FIGS. 4 and 5, the first layered film 36 and the second layered film 38 each include a quantity of alternating layers of one or more higher refractive index materials 40 and one or more lower refractive index materials 42. While each of the one or more higher refractive index materials 40 and the one or more lower index materials 42 are identified using the same reference numerals, it should be understood that the utilization of the same reference numeral does not indicate that each of the layers are constructed of the same material or include the same structure. In each of the first and second layered films 36 and 38, different ones of the layers of the respective higher refractive index materials 40 and the lower refractive index materials 42 may include different compositional or structural properties.

As used herein, the terms "higher refractive index" and "lower refractive index" refer to the values of the refractive index relative to each other, with the refractive index/indices of the one or more higher refractive index materials 40 being greater than the refractive index/indices of the one or more lower refractive index materials 42. In embodiments, the one or more higher refractive index materials 40 have a refractive index from about 1.7 to about 4.0. In embodiments, the one or more lower refractive index materials 42 have a refractive index from about 1.3 to about 1.6. In embodiments, the one or more lower refractive index materials 42 have a refractive index from about 1.3 to about 1.7, while the one or more higher refractive index materials 40 have a refractive index from about 1.9 to about 3.8. The difference in the refractive index of any of the one or more higher refractive index materials 40 and any of the one or more lower refractive index materials 42 may be about 0.1 or greater, 0.2 or greater, 0.3 or greater, 0.4 or greater, 0.5 or greater, 0.6 or greater, 0.7 or greater, 0.8 or greater, 0.9 or greater, 1.0 or greater, 1.5 or greater, 2.0 or greater, 2.1 or greater, 2.2 or greater, or even 2.3 or greater. Because of the difference in the refractive indices of the one or more higher refractive index materials 40 and the one or more lower refractive index materials 42, manipulation of the quantity (number) of alternating layers and their thicknesses can cause selective transmission of electromagnetic radiation within a range of wavelengths through the window 24 and, separately, selective reflectance of electromagnetic radiation within a range of wavelengths off of the first layered film 36. The first layered film 36 (and the second layered film 38, if utilized) is thus a thin-film optical filter having predetermined optical properties configured as a function of the quantity, thicknesses, number, and materials chosen as the one or more higher refractive index materials 40 and the one or more lower refractive index materials 42.

Some examples of suitable materials for use as the one or more lower refractive index materials 42 include SiO₂, Al₂O₃, GeO₂, SiO, AlOₓN_{y}, SiOₓN_{y}, SiᵤAlᵥOₓN_{y}, MgO, MgAl₂O₄, MgF₂, BaF₂, CaF₂, DyF₃, YbF₃, YF₃, and CeF₃. The nitrogen content of the materials for use as the one or more lower refractive index materials 42 may be minimized (e.g., in materials such as AlOₓN_{y}, SiOₓN_{y}, and SiᵤAlᵥOₓN_{y}).

Some examples of suitable materials for use as the one or more higher refractive index materials 40 include Si, amorphous silicon (a-Si), SiNₓ, SiNₓ:H_{y}, AlNₓ, SiᵤAlᵥOₓN_{y}, Ta₂O₅, Nb₂O₅, AlN, Si₃N₄, AlOₓN_{y}, SiOₓN_{y}, HfO₂, TiO₂, ZrO₂, Y₂O₃, Al₂O₃, MoO₃, and diamond-like carbon. The oxygen content of the materials for the higher refractive index material 40 may be minimized, especially in SiNₓ or AlNₓ materials. AlOₓN_{y} materials may be considered to be oxygen-doped AlNₓ, that is they may have an AlNₓ crystal structure (e.g., wurtzite) and need not have an AlON crystal structure. Exemplary preferred AlOₓN_{y} materials for use as the one or more higher refractive index materials 40 may comprise from about 0 atom % to about 20 atom % oxygen, or from about 5 atom % to about 15 atom % oxygen, while including 30 atom % to about 50 atom % nitrogen. Exemplary preferred SiᵤAlᵥOₓN_{y} for use as the one or more higher refractive index materials 40 may comprise from about 10 atom % to about 30 atom % or from about 15 atom % to about 25 atom % silicon, from about 20 atom % to about 40 atom % or from about 25 atom % to about 35 atom % aluminum, from about 0 atom % to about 20 atom % or from about 1 atom % to about 20 atom % oxygen, and from about 30 atom % to about 50 atom % nitrogen. The foregoing materials may be hydrogenated up to about 30% by weight. Because the refractive indices of the one or more higher refractive index materials 40 and the one or more lower refractive index materials 42 are relative to each other, the same material (such as Al₂O₃) can be appropriate for the one or more higher refractive index materials 40 depending on the refractive index of the material(s) chosen for the one or more lower refractive index materials 42, and can alternatively be appropriate for the one or more lower refractive index materials 42 depending on the refractive index of the material(s) chosen for the one or more higher refractive index material 40.

In embodiments, the one or more lower refractive index materials 42 of the first layered film 36 consists of layers of SiO₂, and the one or more higher refractive index materials 40 of the first layered film 36 consists of layers of SiOₓN_{y} or SiNₓ. In embodiments, the one or more lower refractive index materials 42 of the first layered film 36 consists of layers of SiO₂, and the one or more higher refractive index materials 40 of the first layered film 36 consists of layers of SiNₓ or SiOₓN_{y}, while the one or more lower refractive index materials 42 of the second layered film 38 consists of layers of SiO₂ and the one or more higher refractive index materials 40 of the second layered film 38 comprises layers of silicon (e.g., a-Si). In embodiments, the one or more lower refractive index materials 42 of the first layered film 36 consists of layers of SiO₂, and the one or more higher refractive index materials 40 of the first layered film 36 consists of layers of SiNₓ or SiOₓN_{y}, while the one or more lower refractive index materials 42 of the second layered film 38 consists of layers of SiO₂ and the one or more higher refractive index materials 40 of the second layered film 38 comprises layers of amorphous silicon (a-Si) and layers of SiNₓ or SiOₓN_{y}.

The quantity of alternating layers of the higher refractive index material 40 and the lower refractive index material 42 in either the first layered film 36 or the second layered film 38 is not particularly limited. In embodiments, the number of alternating layers within the first layered film 36 is 7 or more, 9 or more, 11 or more, 13 or more, 15 or more, 17 or more, 19 or more, 21 or more, 23 or more, 25 or more, or 51 or more, or 81 or more. In embodiments, the quantity of alternating layers within the second layered film 38 is 7 or more, 9 or more, 11 or more, 13 or more, 15 or more, 17 or more, 19 or more, 21 or more, 23 or more, or 25 or more, or 51 or more, or 81 or more. In embodiments, the quantity of alternating layers in the first layered film 36 and the second layered film 38 collectively forming the window 24, not including the substrate 30, is 14 or more, 20 or more, 26 or more, 32 or more, 38 or more, 44 or more, 50 or more, 72 or more, or 100 or more. In general, the greater the quantity of layers within the first layered film 36 and the second layered film 38, the more narrowly the transmittance and reflectance properties of the window 24 are tailored to one or more specific wavelengths or wavelength ranges.

Each of the alternating layers of the first layered film 36 and the second layered film 38 has a thickness. The thicknesses selected for each of the alternating layers determines the optical path lengths of light propagating through the window 24 and determines the constructive and destructive interference between different light rays reflected at each material interface of the window 24. Accordingly, the thicknesses of each of the alternating layers, in combination with the refractive index of the one or more higher refractive index materials 40 and the one or more lower refractive index materials 42 determines the reflectance and transmittance spectra of the window 24.

With reference to FIGS. 3, 4, and 5, the reflected radiation 28 first encounters a terminal surface 44 of the first layered film 36 upon interacting with the window 24, and the terminal surface 44 may be open to the external environment 26. In an embodiment, a layer of the one or more lower refractive index materials 42 provides the terminal surface 44 to more closely match the refractive index of the air in the external environment 26 and thus reduce reflection of incident electromagnetic radiation (whether the reflected radiation 28 or otherwise) off of the terminal surface 44. The layer of the one or more lower refractive index materials 42 that provides the terminal surface 44 is the layer of the first layered film 36 that is farthest from the substrate 30. Similarly, in embodiments, when the one or more lower refractive index materials 42 is SiO₂, a layer of SiO₂, as the one or more lower refractive index materials 42, is disposed directly onto the first surface 32 of the substrate 30, which will typically comprise a large mole percentage of SiO₂. Without being bound by theory, it is thought that commonality of SiO₂ in both the substrate 30 and the adjacent layer of the one or more lower refractive index materials 42 allows for increased bonding strength.

The emitted radiation 22 first encounters a terminal surface 48 of the second layered film 38 upon interacting with the window 24. In an embodiment, a layer of the one or more lower refractive materials 42 provides the terminal surface 48 to more closely match the refractive index of the air within the enclosure 20 and thus reduce reflection of the incident emitted radiation 22 off of the terminal surface 48. The layer of the one or more lower refractive index materials 42 that provides the terminal surface 48 is the layer of the second layered film 38 that is farthest from the substrate 30. Similarly, in embodiments, when the one or more lower refractive index materials 42 is SiO₂, a layer of SiO₂, as the one or more lower refractive index materials 42, is disposed directly onto the second surface 34 of the substrate 30.

Materials that have a relatively high refractive index can simultaneously have a relatively high hardness that provides scratch and impact resistance. An example material that has both high hardness and can be one of the one or more higher refractive index material 40 is SiOₓN_{y}. Other example materials that have both high hardness and can be the higher refractive index material 40 are SiNₓ, SiNₓ:H_{y}, and Si₃N₄. It has been found that a relatively thick (e.g., greater than or equal to 500 nm) layer of SiOₓN_{y} (or other suitable higher refractive index material) may increase the scratch and/or damage resistance of the window 24. Such increased scratch and/or damage resistance may be particularly beneficial in the first layered film 36, which may be more likely to encounter impacts of debris from the external environment 26. Accordingly, in embodiments, the first layered film 36 comprises a layer of one of the one or more higher refractive index materials 40 with a thickness greater than or equal to 500 nm (e.g., greater than or equal to 1000 nm, greater than or equal to 1500 nm, greater than or equal to 2000 nm). Such a higher refractive index layer having such a thickness of 500 nm or more is described herein as a "scratch resistant layer."

In embodiments, the thickness and location within the first layered film 36 of the scratch resistant layer can be optimized to provide a desired level of hardness and scratch resistance to the first layered film 36 and thus the window 24 as a whole. Different applications of the window 24 could lead to different desired thicknesses for the scratch resistant layer of the higher refractive index material 40 serving as the layer providing the hardness and scratch resistance to the window 24. For example, a window 24 protecting a LIDAR system 12 on a vehicle 10 may require a different thickness for the scratch resistant layer of the higher refractive index material 40 than a window 24 protecting a LIDAR system 12 at an office building. In embodiments, the scratch resistant layer of the higher refractive index material 40 serving as the layer providing the hardness and scratch resistance to the window 24 has a thickness between 500nm and 50000nm, such as between 500nm and 10000nm, such as between 2000nm to 5000nm. In embodiments, the thickness of this scratch resistant layer of higher refractive index material 40 has a thickness that is 30% or more, 40% or more, 50% or more, 65% or more, or 85% or more, or 86% or more, of the thickness of the first layered film 36. In general, the scratch resistant layer of the higher refractive index material 40 serving as the layer providing the hardness and scratch resistance to the window 24 will be part of the first layered film 36 facing the external environment 26 rather the second layered film 38 protected by the enclosure 20, although that may not always be so.

As will be detailed further below, the quantity, thicknesses, number, and materials of the remaining layers of the first layered film 36 and the second layered film 38 can be configured to provide the window 24 with the desired optical properties (transmittance and reflectance of desired wavelengths) almost regardless of the thickness chosen for the scratch resistant layer of the higher refractive index material 40 serving as the layer providing the hardness and scratch resistance to the window 24. This insensitivity of the optical properties of the window 24 as a whole to the thickness of the scratch resistant layer of the higher refractive index material 40 serving as the layer providing the hardness and scratch resistance to the window 24 when materials having relatively low or negligible optical absorption of electromagnetic radiation of the target wavelength or wavelength range (e.g., from 1400 nm to 1600 nm, 1550 nm). For example, Si₃N₄ only negligibly absorbs electromagnetic radiation in the 700nm to 2000nm wavelength range.

This general insensitivity allows the scratch resistant layer of the higher refractive index material 40 in the first layered film 36 to have a thickness predetermined to meet specified hardness or scratch resistance requirements. For example, the first layered film 36 for the window 24 utilized at the roof 14 of the vehicle 10 may have different hardness and scratch resistance requirements than the first layered film 36 for the window 24 utilized at the forward portion 16 of the vehicle 10, and thus a different thickness for the scratch resistant layer of the higher refractive index material 40. This can be achieved without significant altering of the transmittance and reflectance properties of the first layered film 36 as a whole.

The hardness of the first layered film 36, and thus the window 24, with the scratch resistant layer of the higher refractive index material 40 can be quantified. In embodiments, the maximum hardness of the window 24, measured at the first layered film 36 with the scratch resistant layer of the higher refractive index material 40, as measured by the Berkovich Indenter Hardness Test, may be about 8 GPa or greater, about 10 GPa or greater, about 12 GPa or greater, about 14 GPa or greater, about 15 GPa or greater, about 16 GPa or greater, or about 18 GPa or greater at one or more indentation depths from 50nm to 2000nm (measured from the terminal surface 44), and even from 2000nm to 5000nm. As used herein, the "Berkovich Indenter Hardness Test" includes measuring the hardness of a material on a surface thereof by indenting the surface with a diamond Berkovich indenter. The Berkovich Indenter Hardness Test includes indenting the terminal surface 44 of the first layered film 36 with the diamond Berkovich indenter to form an indent to an indentation depth in the range from about 50nm to about 2000nm (or the entire thickness of the first layered film 36) and measuring the maximum hardness from this indentation along the entire indentation depth range or a segment of this indentation depth range (e.g., in the range from about 100nm to about 600nm), generally using the methods set forth in Oliver, W. C.; Pharr, G. M. An improved technique for determining hardness and elastic modulus using load and displacement sensing indentation experiments. J. Mater. Res., Vol. 7, No. 6, 1992, 1564-1583; and Oliver, W. C.; Pharr, G. M. Measurement of Hardness and Elastic Modulus by Instrument Indentation: Advances in Understanding and Refinements to Methodology. J. Mater. Res., Vol. 19, No. 1, 2004, 3-20. These levels of hardness improve the resistance of the window 24 to impact damage from sand, small stones, debris, and other objects encountered while the LIDAR system 12 is used for its intended purpose, such as with the vehicle 10 (see FIG. 1). Accordingly, these levels of hardness reduce or prevent the optical scattering and reduced performance of the LIDAR system 12 that the impact damage would otherwise cause.

In embodiments, at least a portion of the first layered film 36 is disposed between the scratch resistant layer of the higher refractive index material 40 and the terminal surface 44. In embodiments, the first layered film 36 comprises a plurality of alternating layers of the one or more lower refractive index materials 42 and the one or more higher refractive index materials 40 between the terminal surface 44 and the scratch resistant layers. Such a stack of alternating layers disposed between the scratch resistant layer and the terminal surface 44 is described herein as the "optical control layers." In embodiments, the optical control layers, disposed between the scratch resistant layer and the terminal surface 44, have a combined thickness of greater than or equal to 500 nm (e.g., greater than or equal to 600 nm, greater than or equal to 700 nm, greater than or equal to 800 nm, greater than or equal to 900 nm, greater than or equal to 1000 nm, greater than or equal to 1100 nm, greater than or equal to 1200 nm, greater than or equal to 1300 nm). The quantity, composition, and thickness of the optical control layers may be selected to provide desired anti-reflection performance attributes described herein at an operational wavelength of the LIDAR sensor 12 between 1400 nm and 1600 nm. That way, the second layered film 36 may be designed to provide desirable optical performance characteristics in the visible and/or UV spectrum, as described herein.

In embodiments, at least 25% (e.g., at least 26%, at least 27%, at least 28%, at least 29%, at least 30%) of a thickness 46 of the first layered film 36 is disposed between the scratch resistant layer and the terminal surface 44. It is believed that such a depth of the scratch resistant layer within the first layered film 36 facilitates the first layered film 36 having a relatively high nanoindentation hardness (as measured by the Berkovich Indenter Hardness Test) over a relatively large range of depths within the first layered film 36. In embodiments, the first layered film 36 has a nanoindentation hardness of greater than or equal to 8 GPa from a depth of 250 nm to a depth of 2000 nm within the first layered film 36. In embodiments, the first layered film 36 has a nanoindentation hardness of greater than or equal to 8.5 GPa from a depth of 1000 nm to a depth of 2000 nm within the first layered film 36. Such hardness values facilitate providing scratch and/or damage resistance against flaws having a relatively wide range of depths.

Referring now to FIGS. 4 and 5, the first layered film 36 has a thickness 46, and the second layered film 38 has a thickness 50. The thickness 46 of the first layered film 36, assumed to include the scratch resistant layer of the one or more higher refractive index materials 40, may be about 1µm or greater while still providing the transmittance and reflectance properties described herein. In embodiments, the thickness 46 is in the range of 1µm to just over 50µm, including from about 1µm to about 10µm, and from about 2800nm to about 5900nm. The lower bound of about 1µm is approximately the minimum thickness 46 that still provides hardness and scratch resistance to the window 24. The higher bound of thickness 46 is limited by cost and time required to dispose the layers of the first layered film 36 onto the substrate 30. In addition, the higher bound of the thickness 46 is limited to prevent the first layered film 36 from warping the substrate 30, which is dependent upon the thickness of the substrate 30. The thickness 50 of the second layered film 38 can be any thickness deemed necessary to impart the window 24 with the desired transmittance and reflectance properties. In embodiments, the thickness 50 of the second layered film 38 is in the range of about 800nm to about 7000nm.

While solving the problem discussed above in the background through imparting hardness, impact, and scratch resistance to the window 24 via the maximized thickness of a higher refractive index material 40, the quantity, thicknesses, number, and materials of the layers of the first layered film 36 and the second layered film are configured to also provide a relatively high transmittance of infrared radiation between 1400 nm and 1600 nm through the window 24. In embodiments, the thicknesses, number, and materials of the alternating layers of the first and second layered films 36 and 38 are configured so that the window 24 has an average percentage transmittance, calculated over a 50 nm wavelength range of interest from 1400 nm to 1600 nm, of greater than or equal to 90% (e.g., greater than or equal to 91%, greater than or equal to 92%, greater than or equal to 93%, greater than or equal to 94%, greater than or equal to 95%) for light incident on the first surface 32 and the second surface 34 at angles within 15° of normal to the first surface 32 and the second surface 34.

In embodiments, the thicknesses, number, and materials of the alternating layers of the first and second layered films 36 and 38 are configured so that the window 24 has an average reflectance, calculated over a 50 nm wavelength range of interest from 1400 nm to 1600 nm, of less than or equal to 0.5% (e.g., less than or equal to 0.4%, less than or equal to 0.3%, less than or equal to 0.2%, less than or equal to 0.1%, less than or equal to 0.08%) for light incident on the first surface 32 and the second surface 34 at angles within 15° of normal to the first surface 32 and the second surface 34. In embodiments, the number, thicknesses, number, and materials of the alternating layers of the first and second layered films 36 and 38 are configured so that the window has an average P polarization transmittance and an average S polarization transmittance, calculated over a 50 nm wavelength range of interest from 1400 nm to 1600 nm, of greater than 85% (e.g., greater than or equal to 86%, greater than or equal to 87%, greater than or equal to 88%, greater than or equal to 89%, greater than or equal to 90%, greater than or equal to 91%, greater than or equal to 92%) for light incident on the first surface 32 and the second 34 surface at angles within 60° of normal (e.g., at angles of incidence from 0° to 60°, from 0° to 50°, from 0° to 40°, from 0° to 30°) to the first surface 32 and the second surface 34. Herein, the term "reflectance" is defined as the percentage of incident optical power within a given wavelength range that is reflected from a material (e.g., the window 24, the substrate 30, the first layered film 36, second layered film 38, or portions thereof).

In embodiments, the thicknesses, number, and materials of the alternating layers of the first and second layered films 36 and 38 are configured so that the window 24 has an average percentage transmittance, calculated over a 50 nm wavelength range of interest from 1400 nm to 1600 nm, of greater than or equal to 95% (e.g., greater than or equal to 95.5%, greater than or equal to 96%, greater than or equal to 96.5%, greater than or equal to 97.5%, greater than or equal to 98%) for light normally incident on the first surface 32 and the second surface 34. Herein, the term "transmittance" and "percentage transmission" are used interchangeably ad refer to the percentage of incident optical power within a given wavelength range transmitted through a material (e.g., the window 24, the substrate 30, the first layered film 36, the second layered film 38 or portions thereof).

In embodiments, the thicknesses, number, and materials of the alternating layers of the first and second layered films 36 and 38 are configured so that the window 24 also (in addition to meeting the optical performance requirements in the infrared described herein) has a desired dark appearance. For example, when viewed from the external environment 26 (see FIG. 1), the window 24 may exhibit CIELAB color space a* values that are greater than or equal to -6.0 and less than or equal to 6.0 for light having angles of incidence on the first surface 32 ranging from 0° to 90°. The window 24 may also exhibit CIELAB color space b* values that are greater than or equal to -6.0 and less than or equal to 6.0 (e.g., greater than or equal to -5.0 and less than or equal to 5.0, greater than or equal to -4.0 and less than or equal to 4.0, greater than or equal to -3.0 and less than or equal to 3.0, greater than or equal to -2.5 and less than or equal to 2.5, greater than or equal to -2.5 and less than or equal to 0.)) for light having angles of incidence on the first surface 32 ranging from 0° to 90°. Such color space values may be obtained even in embodiments where the substrate 30 is has a relatively high transmittance (e.g., greater than 90%) and low reflectance (e.g., less than or equal to 22%) throughout the visible spectrum.

In embodiments, the thicknesses, number, and materials of the alternating layers of the first and second layered films 36 and 38 are configured so that the window 24 has a CIELAB lightness L* value of less than 45 (e.g., less than or equal to 40, less than or equal to 35, less than or equal to 30) when viewed from angles of incidence of less than or equal to 60°. In embodiments, the thicknesses, number, and materials of the alternating layers of the first and second layered films 36 and 38 are configured so that the window 24 has a CIELAB lightness L* value of less than 20 for light that is normally incident on the first layered film 36 and reflected. The aforementioned combination of CIELAB color space and lightness values represent that the window 24 has a relatively dark appearance from a variety of angles of incidence.

The dark appearance of the window 24 may be achieved by incorporating silicon (e.g., as a-Si) as one of the one or more higher refractive index materials 40 in the second layered film 38. In addition to having a relatively high refractive index (approximately 3.8 at 1550nm), amorphous silicon (a-Si) has a relatively high optical absorption in the ultraviolet range and visible light range, but tolerable optical absorption in the range of 900-1800nm. The thicknesses and quantity of layers of amorphous silicon (a-Si), along with the other layers of the first layered film 36 and second layered film 38 can thus provide a window 24 with low percentage transmittance of electromagnetic radiation in the ultraviolet range and visible light range (due in part to the optical absorbance of the amorphous silicon at those wavelength ranges) but high percentage transmittance in the desired portions of the infrared range. In embodiments, the second layered film 38 includes one or more layers of amorphous silicon (a-Si) as one of the one or more higher refractive index materials 40 while the first layered film 36 does not. Such a structure may be beneficial in that silicon is solely located behind the substrate 30 and thus protected from the external environment 26. As a result, the nanoindentation hardness values described herein may be obtained via incorporation of the scratch resistance layer into the first layered film 36 while the dark appearance may be obtained via incorporation of silicon into the second layered film 38.

In embodiments, the alternating layers of the second layered film 38 formed of silicon have a combined thickness of greater than or equal to 250 nm (e.g., greater than or equal to 300 nm, greater than or equal to 325 nm, greater than or equal to 350 nm, greater than or equal to 375 nm, greater than or equal to 400 nm, greater than or equal to 500 nm). In embodiments, the layers of the second layered film 38 formed of silicon may have a combined thickness of greater than or equal to 250 nm. In embodiments, the combined thickness of the silicon layers in the second layered film constitutes at least 35% (e.g., at least 40%, at least 45%, at least 50%) of the thickness 50 of the second layered film 50. Applicant has found that such a thickness of silicon sufficiently absorbs visible light such that the window 24 possess an average percentage transmission, calculated from 400 nm to 700 nm, of less an 5% (e.g., less than or equal to 4.5%, less than or equal to 4.0%, less than or equal to 3.5%, less than or equal to 3.0%, less than or equal to 2.5%, less than or equal to 2.0%, less than or equal to 1.5%, less than or equal to 1.0% less than or equal to 0.9%, less than or equal to 0.8%, less than or equal to 0.7%, less than or equal to 0.6%, less than or equal to 0.5%, less than or equal to 0.4%, less than or equal to 0.3%, less than or equal to 0.2%, less than or equal to 0.1%) for light incident on the first surface 32 and the second surface 34 at angles within 15° of normal to the first surface 32 and the second surface 34. As such, portions of the reflected radiation 28 (see FIG. 2) containing visible light do not reach the emitter and sensor 18, thereby improving the signal-to-noise ratio of the LIDAR system 12.

In embodiments, the second layered film 36 comprises two or more layers formed from silicon. In embodiments, at least one of the two or more layers formed from silicon comprises a thickness of greater than or equal to 150 nm (e.g., greater than or equal to 160 nm, greater than or equal to 170 nm, greater than or equal to 180 nm, greater than or equal to 190 nm, greater than or equal to 200 nm). In embodiments, at least two, but less than all, of the two or more layers formed from silicon in the second layered film 36 comprises thicknesses of greater than or equal to 150 nm. In embodiments, at least seven (7) of the alternating layers of the second layered film 38 are disposed between one of the silicon layers having a thickness of 150 nm or more and the second surface 34. In embodiments, silicon layers contained in the second layered film 38 comprising thicknesses that are less than 150 nm from the second surface comprise thicknesses of less than or equal to 70 nm (e.g., less than or equal to 65 nm, less than or equal to 60 nm, less than or equal to 55 nm, less than or equal to 50 nm, less than or equal to 30 nm, less than or equal to 25 nm, less than or equal to 20 nm). It is believed that such separation between the substrate 30 and the relatively thick silicon layers aids in reducing reflectance in the visible spectrum.

In embodiments, the alternating layers of the first and second layered films 36 and 38 are constructed to achieve a relatively low average reflectance in the visible spectrum. For example, in embodiments, the window comprises an average reflectance, computed in a wavelength range from 400 nm to 700 nm, of less than or equal to 10% (e.g., less than or equal to 9%, less than or equal to 8%, less than or equal to 7%). Such low reflectance beneficially prevents the window 24 from having a tinted appearance when viewed from the external environment 26 (see FIG. 1) and facilitates achieving the CIE color space a* and b*, and lightness L* values described herein.

In embodiments, to limit the reflectance in the visible spectrum of the window, a silicon layer of the second layered film 38 most proximate to the substrate 30 is the narrowest silicon layer in the second layered film 38. That is, of the layers in the second layered film 38 where the one or more higher refractive index materials 40 is silicon, the closest one to the substrate 30 comprises the least thickness. In embodiments, the nearest silicon layer in the second layered film 38 comprises a thickness that is less than or equal to 10 nm (e.g., less than or equal to 8 nm, less than or equal to 7 nm, less than or equal to 6 nm, less than or equal to 5 nm, less than or equal to 4 nm, less than or equal to 3 nm, less than or equal to 2 nm). Applicant has found that such structure beneficially prevents the silicon-containing layers in the second layered film 38 from inducing a tinted reflectance, while still contributing to the relatively low visible transmittance values described herein.

In embodiments, the layer of the one or more higher refractive index materials 40 that is closest to the substrate 30 in the second layered film 38 is not silicon. In embodiments, for example, the layer of the one or more higher refractive index materials 40 that is closest to the substrate 30 may be constructed of the same higher refractive index material used in the first layered film (e.g., SiNₓ, SiOₓN_{y}, Si₃N₄). In embodiments, the layer of the one or more higher refractive index materials 40 that is closest to the substrate 30 in the second layered film 38 is the only higher index layer therein that is not constructed of silicon. Without wishing to be bound by theory, Applicant believes that such a structure may aid in reducing reflectance in the visible spectrum when incorporating silicon into the second layered film 38, especially when the silicon layers contained in the second layered film 38 comprise thicknesses greater than or equal to 8 nm.

The layers of the first layered film 36 and the second layered film 38 (i.e., layers of the higher refractive index material 40 and the lower refractive index material 42) may be formed by any known method in the art, including discrete deposition or continuous deposition processes. In one or more embodiments, the layer may be formed using only continuous deposition processes, or, alternatively, only discrete deposition processes.

### Examples

The following examples are all modeled examples using computer facilitated modeling to demonstrate how the quantity, thicknesses, number, and materials of the layers of the first layered film 36 and the second layered film 38 can be configured so that the window 24 has a desired average percentage transmittance and average percentage reflectance as a function of the wavelength and angle of incidence of the incident electromagnetic radiation.

The refractive indices of the materials in each of the materials and extinction coefficients were measured as a function of wavelength throughout the spectral range of 400 nm to 1600 nm. The refractive indices and optical absorbance for SiOₓN_{y}, SiNₓ, SiO₂, Si, and an aluminosilicate glass substrate (Corning code 2320) are provided in the Table A below. Those materials are utilized in some of following examples as the higher refractive index materials 40, the lower refractive index materials 42, and the substrate 30.

| TABLE A | | | | | |
|---|---|---|---|---|---|
| SiOₓN_{y} | | | SiNₓ (1) | | |
| Wavelength (nm) | n | k | Wavelength (nm) | n | k |
| 250.08 | 2.2916 | 0.03163 | 250.24 | 2.39286 | 0.05616 |
| 299.12 | 2.16039 | 0.00918 | 299.48 | 2.24497 | 0.01248 |
| 351.35 | 2.09475 | 0.00372 | 350.31 | 2.16478 | 0.00309 |
| 400.41 | 2.06074 | 0.00255 | 399.52 | 2.12156 | 0.00113 |
| 449.46 | 2.03937 | 0.00178 | 450.3 | 2.09372 | 0.00047 |
| 500.06 | 2.0243 | 0.00107 | 499.45 | 2.07562 | 0.00023 |
| 550.61 | 2.01331 | 0.00054 | 550.14 | 2.06238 | 0.00012 |
| 599.52 | 2.00526 | 0.00027 | 600.76 | 2.05268 | 0.00007 |
| 649.92 | 1.99882 | 0.00013 | 649.74 | 2.04553 | 0.00004 |
| 700.23 | 1.99373 | 0.00006 | 700.22 | 2.03978 | 0.00003 |
| 750.42 | 1.98962 | 0.00003 | 750.6 | 2.03523 | 0.00002 |
| 850.4 | 1.98335 | 0.00001 | 849.48 | 2.02863 | 0.00001 |
| 949.72 | 1.97874 | 0 | 949.45 | 2.02401 | 0.00001 |
| 1051.34 | 1.97502 | 0 | 1049.51 | 2.02068 | 0 |
| 1149.25 | 1.97203 | 0 | 1151.64 | 2.01816 | 0 |
| 1251.12 | 1.96931 | 0 | 1250.69 | 2.01629 | 0 |
| 1350.16 | 1.96691 | 0 | 1350.06 | 2.01482 | 0 |
| 1449.76 | 1.96465 | 0 | 1449.74 | 2.01365 | 0 |
| 1549.92 | 1.96247 | 0 | 1549.74 | 2.01269 | 0 |
| 1650.64 | 1.96033 | 0 | 1650.05 | 2.0119 | 0 |
| | | | | | |

| TABLE A - continued | | | | | |
|---|---|---|---|---|---|
| SiNₓ(2) | | | SiO₂ (1) | | |
| Wavelength (nm) | n | k | Wavelength (nm) | n | k |
| 250.24 | 2.34847 | 0.04226 | 250.08 | 1.51375 | 0 |
| 299.48 | 2.20179 | 0.00857 | 300.7 | 1.49254 | 0 |
| 350.31 | 2.12798 | 0.00214 | 349.76 | 1.48096 | 0 |
| 399.52 | 2.08798 | 0.0007 | 400.41 | 1.47349 | 0 |
| 450.3 | 2.0622 | 0.00027 | 449.46 | 1.46866 | 0 |
| 499.45 | 2.04543 | 0.00012 | 500.06 | 1.46516 | 0 |
| 550.14 | 2.03316 | 0.00006 | 550.61 | 1.46261 | 0 |
| 600.76 | 2.02416 | 0.00003 | 599.52 | 1.46075 | 0 |
| 649.74 | 2.01752 | 0.00002 | 649.92 | 1.45927 | 0 |
| 700.22 | 2.01219 | 0.00001 | 700.23 | 1.45811 | 0 |
| 750.6 | 2.00795 | 0.00001 | 750.42 | 1.45717 | 0 |
| 849.48 | 2.00182 | 0.00001 | 850.4 | 1.45579 | 0 |
| 949.45 | 1.99753 | 0 | 949.72 | 1.45483 | 0 |
| 1049.51 | 1.99443 | 0 | 1051.34 | 1.45412 | 0 |
| 1151.64 | 1.99209 | 0 | 1149.25 | 1.45361 | 0 |
| 1250.69 | 1.99035 | 0 | 1251.12 | 1.4532 | 0 |
| 1350.06 | 1.98898 | 0 | 1350.16 | 1.45289 | 0 |
| 1449.74 | 1.98789 | 0 | 1449.76 | 1.45264 | 0 |
| 1549.74 | 1.987 | 0 | 1549.92 | 1.45243 | 0 |
| 1650.05 | 1.98626 | 0 | 1650.64 | 1.45226 | 0 |

| SiO₂ (2) | | | Aluminosilicate glass (Corning Code 2320) | | |
|---|---|---|---|---|---|
| Wavelength (nm) | n | k | Wavelength (nm) | n | k |
| 250.77 | 1.52322 | 0 | 253.99 | 1.56564 | 0.00011 |
| 300.01 | 1.50437 | 0 | 299.99 | 1.54076 | 0.00001 |
| 349.25 | 1.49356 | 0 | 349.99 | 1.52695 | 0 |
| 400.08 | 1.48656 | 0 | 399.99 | 1.51948 | 0 |
| 449.31 | 1.482 | 0 | 449.99 | 1.51361 | 0 |
| 500.09 | 1.47866 | 0 | 499.99 | 1.51024 | 0 |
| 549.24 | 1.47627 | 0 | 550 | 1.50798 | 0 |
| 599.93 | 1.47439 | 0 | 600 | 1.5051 | 0 |
| 650.56 | 1.47291 | 0 | 650 | 1.50388 | 0 |
| 699.53 | 1.47175 | 0 | 700 | 1.50256 | 0 |
| 749.99 | 1.47076 | 0 | 750 | 1.50092 | 0 |
| 850.61 | 1.46922 | 0 | 798 | 1.50069 | 0 |
| 950.74 | 1.46804 | 0 | 949.7 | 1.49633 | 0 |
| 1050.4 | 1.46708 | 0 | 1049.7 | 1.49525 | 0 |
| 1151.16 | 1.46625 | 0 | 1151.1 | 1.49434 | 0 |
| 1249.17 | 1.46552 | 0 | 1249.7 | 1.49357 | 0 |
| 1351.18 | 1.46481 | 0 | 1352.3 | 1.49284 | 0 |
| 1450.39 | 1.46414 | 0 | 1452.1 | 1.49218 | 0 |
| 1550.21 | 1.46349 | 0 | 1549.0 | 1.49157 | 0 |
| 1650.63 | 1.46283 | 0 | 1649.8 | 1.49095 | 0 |

These refractive indices were then used to calculate transmission and reflectance spectra. The modeled examples use a single refractive index value in their descriptive tables for convenience, which corresponds to a point selected from the refractive index dispersion curves at about 1550nm wavelength.

*Example 1* - The window 24 of Example 1 included a first layered film 36 over a first surface 32 of a substrate 30 of an aluminosilicate glass (Corning code 2320). The window 24 also included a second layered film 38 over a second surface 34 of the substrate 30. The first layered film 36 included twenty-five (25) alternating layers of SiO₂ (the SiO₂(1) material in Table A above) as the lower refractive index material 42 and SiOₓN_{y} as the higher refractive index material 40. Layer 18 was the scratch resistant layer of the higher refractive index material 40, having a thickness of 2000 nm. Layers 1-17 were optical control layers having a combined thickness of 1398.6 nm separating the scratch resistant layer from the terminal surface 44. Layers 18-25 were index matching layers separating the scratch resistance layer from the first surface 32 and having a combined thickness of 252.1 nm. In this example, the scratch resistant layer constituted 54.78% of the thickness of the first layered film 36.

The second layered film 38 included fifteen (15) alternating layers of the lower refractive index material 42 and the higher refractive index material 40. In this example, the lower refractive index material 42 was SiO₂, while the higher refractive index material 40 was a combination of SiOₓN_{y} and Si . As shown, layer 28 - the layer of the higher refractive index material 40 most proximate to the substrate 30 (layer 26 in this example) - was SiOₓN_{y}, while the remaining layers of the higher refractive index material 40 were Si. Layer 30 - the Si layer most proximate to the substrate 30 - was the narrowest Si layer, with a thickness of 8.1 nm. The combined thickness of the silicon layers was 595 nm, which constituted 46.2% of the total thickness of the second layered film 38.

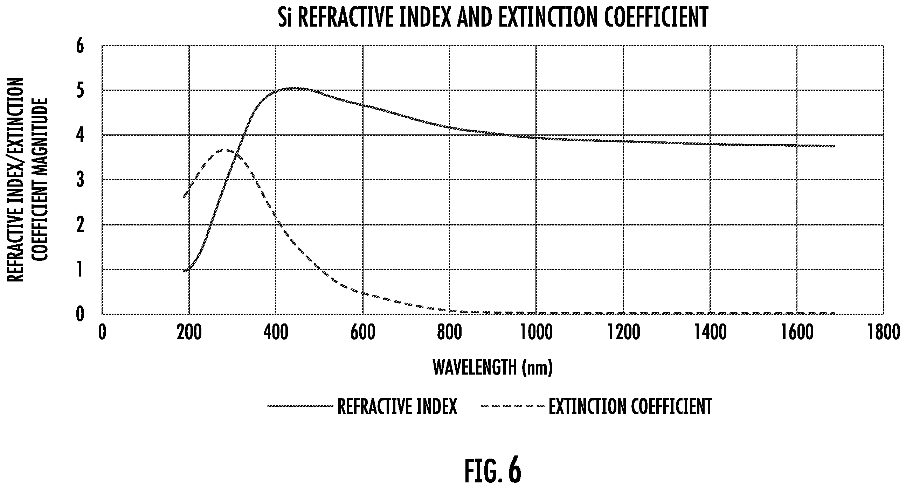

The refractive index and extinction coefficient values of the Si material used in Example 1 are shown in FIG. 6. As shown, the extinction coefficient of the Si material used in this example is 0.23 at 700 nm, which corresponds to approximately 1.37% internal transmittance (for just the silicon) for the combined thickness of the silicon layers in Example 1. At 400 nm, the extinction coefficient is 2.2. As a result, the transmittance of the combined silicon layers is expected to much lower at 400 nm than it is at 700 nm.

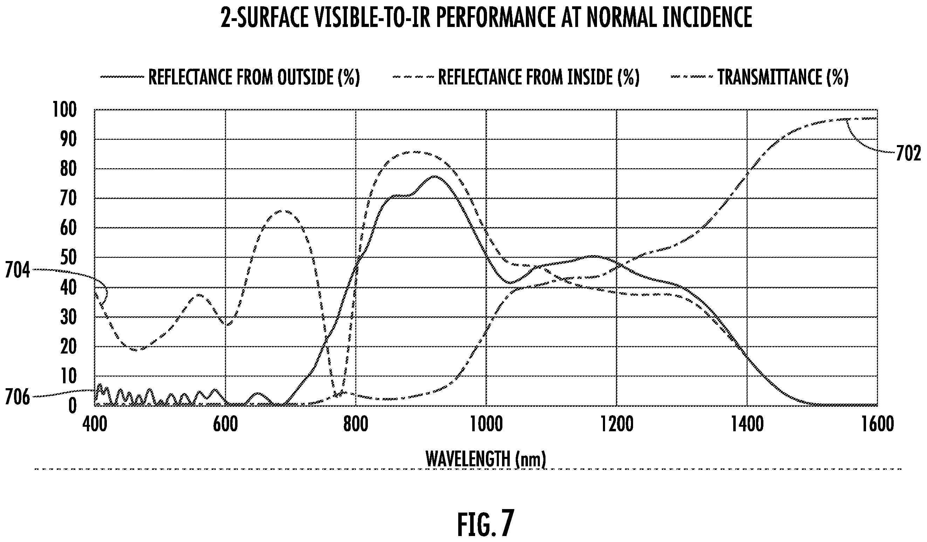

The thicknesses of the layers of the first layered film 36 and the second layered film 38 were configured as set forth in Table 1 below and used to calculate the transmittance, reflectance, CIELAB color space and lightness values, and nanoindentation hardness values set forth in FIGS. 7-13.

| TABLE 1 | | | |
|---|---|---|---|
| Example 1 Layer Design | | | |
| Layer | Material | Refractive Index @1550nm | Physical Thickness (nm) |
| Medium | Air | 1 | |
| | Perfluoropolyether | 1-4 | 4-8 |
| 1 | SiO₂ | 1.45243 | 122.0 |
| 2 | SiOₓN_{y} | 1.96247 | 29.3 |
| 3 | SiO₂ | 1.45243 | 70.7 |
| 4 | SiOₓN_{y} | 1.96247 | 23.2 |
| 5 | SiO₂ | 1.45243 | 60.3 |
| 6 | SiOₓN_{y} | 1.96247 | 151.5 |
| 7 | SiO₂ | 1.45243 | 51.9 |
| 8 | SiOₓN_{y} | 1.96247 | 31.4 |
| 9 | SiO₂ | 1.45243 | 55.5 |
| 10 | SiOₓN_{y} | 1.96247 | 25.6 |
| 11 | SiO₂ | 1.45243 | 198.6 |
| 12 | SiOₓN_{y} | 1.96247 | 120.4 |
| 13 | SiO₂ | 1.45243 | 170.9 |
| 14 | SiOₓN_{y} | 1.96247 | 129.4 |
| 15 | SiO₂ | 1.45243 | 87.6 |
| 16 | SiOₓN_{y} | 1.96247 | 10.3 |
| 17 | SiO₂ | 1.45243 | 60.0 |
| 18 | SiOₓN_{y} | 1.96247 | 2000 |
| 19 | SiO₂ | 1.45243 | 26.3 |
| 20 | SiOₓN_{y} | 1.96247 | 39.2 |
| 21 | SiO₂ | 1.45243 | 45.9 |
| 22 | SiOₓN_{y} | 1.96247 | 33.6 |
| 23 | SiO₂ | 1.45243 | 61.1 |
| 24 | SiOₓN_{y} | 1.96247 | 21.1 |
| 25 | SiO₂ | 1.45243 | 25.0 |
| Substrate | Aluminosilicate glass (2320) | 1.4916 | 2000000.0 |
| 27 | SiO₂ | 1.45243 | 25.0 |
| 28 | SiOₓN_{y} | 1.96247 | 46.1 |
| 29 | SiO₂ | 1.45243 | 12.8 |
| 30 | Si | 3.77682 | 8.1 |
| 31 | SiO₂ | 1.45243 | 28.1 |
| 32 | Si | 3.77682 | 21.6 |
| 33 | SiO₂ | 1.45243 | 8.0 |
| 34 | Si | 3.77682 | 200.7 |
| 35 | SiO₂ | 1.45243 | 28.8 |
| 36 | Si | 3.77682 | 161.9 |
| 37 | SiO₂ | 1.45243 | 146.1 |
| 38 | Si | 3.77682 | 18.0 |
| 39 | SiO₂ | 1.45243 | 167.8 |
| 40 | Si | 3.77682 | 184.7 |
| 41 | SiO₂ | 1.45243 | 231.1 |
| Medium | Air | 1 | |

FIG. 7 depicts a plot including a first curve 702 showing a modelled transmittance of the window 24 according to Example 1 of light normally incident on the window 24 throughout the spectral range of 400 nm to 1600 nm, a second curve 704 showing a modelled reflectance of light normally incident on the second layered film 38 throughout the spectral range of 400 nm to 1600 nm, and a third curve 706 showing a modelled reflectance of light normally incident on the first layered film 36 throughout the spectral range of 400 nm to 1600 nm. As shown, the quantity, thicknesses, number, and materials of the first layered film 36 and the second layered film 38 have been configured so that the window 24 of Example 1 so that light normally incident on the window 24 above wavelengths of 1420 nm has a transmittance of greater than 90%. Throughout the visible spectrum, the transmittance is less than 2%. As shown in the curves 704 and 706, whether viewed from the first layered film 36 or the second layered film 38, the window 24 according to Example 1 has a reflectance of less than 1% for wavelengths above 1500 nm. Throughout the visible spectrum, when viewed from the first layered film 36, the window according to Example 1 has a reflectance of less than 9%. As such, the results in FIG. 7 demonstrate that the efficacy of the window 24 according to Example 1 providing effective antireflection performance in the infrared wavelengths described herein, while effectively preventing transmission and reflectance in the visible spectrum.

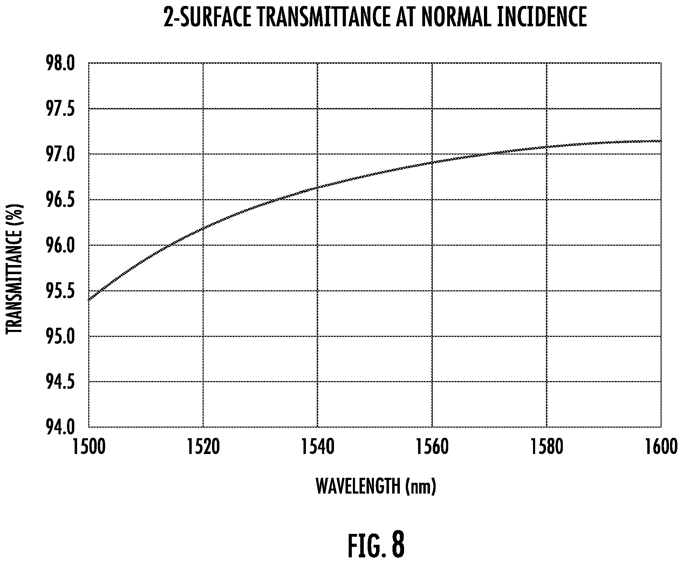

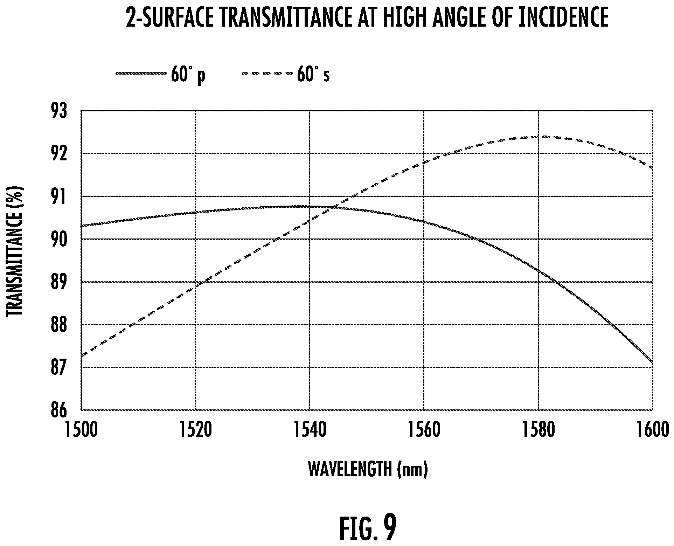

As revealed in FIG. 8, the quantity, thicknesses, number, and materials of the first layered film 36 and the second layered film 38 have been configured so that the window 24 of Example 1 has a percentage transmittance of above 92.25 percent for light normally incident on the first surface 32 or the second surface 34 throughout a wavelength range extending from 1500 nm to 1600 nm. As revealed in FIG. 9, the quantity, thicknesses, number, and materials of the first layered film 36 and the second layered film 38 have been configured so that the window 24 of Example 1 has an average P polarization transmittance and an average S polarization transmittance, calculated a wavelength range of interest from 1500 nm to 1600 nm, of greater than 87% for light incident on the first surface and the second surface at angles within 60° of normal to the first surface and the second surface.

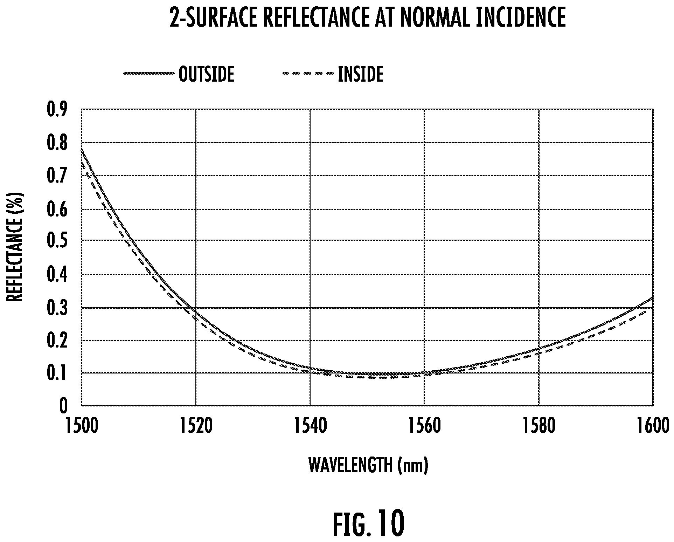

As revealed in FIG. 10, the quantity, thicknesses, number, and materials of the first layered film 36 and the second layered film 38 have been configured so that the window 24 of Example 1 has a percentage reflectance off of the terminal surface 44 of the first layered film 36 and the terminal surface 48 of the second layered film 38 of under 0.8 percent for light normally incident on the substrate 300 within the approximate wavelength range of 1500 nm to 1600 nm. The reflectance from the terminal surface 44 is comparable to that from the terminal surface 48, as the first and second layered films 36 and 38 were constructed of materials having relatively low absorbance in the referenced wavelength range. As shown, the modelled reflectance reaches a minimum value of approximately 0.1% at about 1550 nm, and the reflectance is less than 0.25% throughout the wavelength range of 1525 nm to 1575 nm.

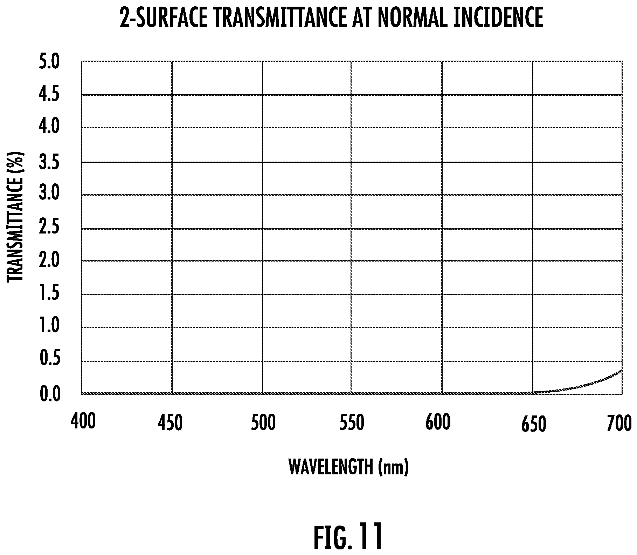

As revealed in FIG. 11, the quantity, thicknesses, number, and materials of the first layered film 36 and the second layered film 38 have been configured so that the window 24 of Example 1 has a transmittance substantially less than 1.0% throughout the visible spectrum. From 400 nm to 650 nm, the transmittance in the visible spectrum is less than 0.2%. For wavelengths less than 600 nm, the transmittance in the visible spectrum is less than 0.1%. It is believed that these low transmission values are due in part to the absorbance of visible light by the silicon layers in the second layered film 38.

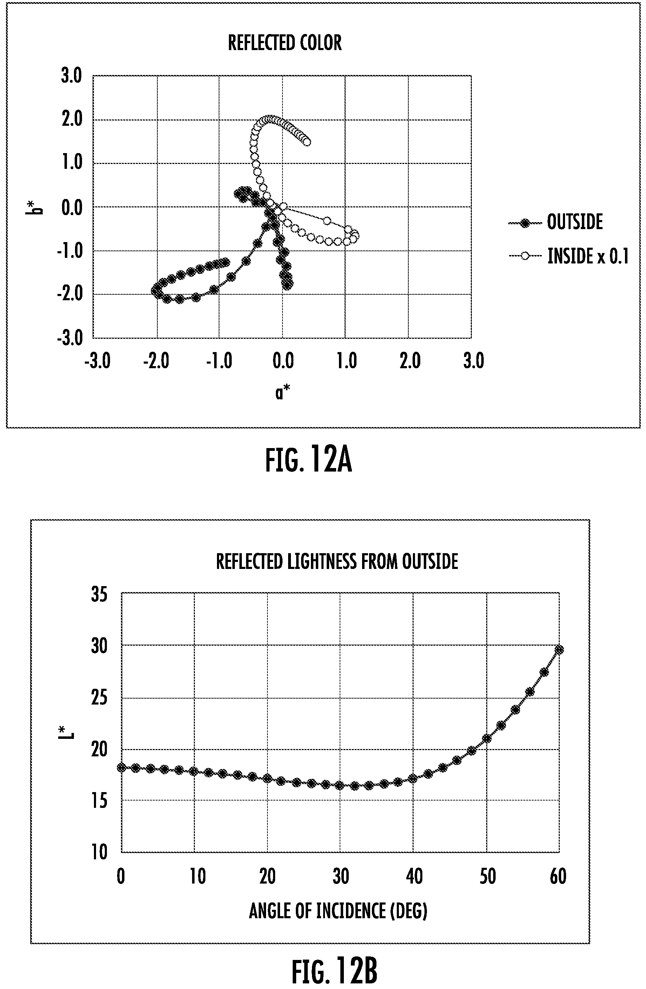

As revealed in FIGS. 12A and 12B, the quantity, thicknesses, number, and materials of the first layered film 36 and the second layered film 38 have been configured so that the window 24 of Example 1 has a dark appearance when viewed from the terminal surface 44 of the first layered film. As shown in FIG. 12A provides simulated CIELAB single-surface reflected color data for Example 1 for light reflected off of the terminal surface 44. The color of the single-surface reflected light can be characterized using CIELAB color coordinates. The a* axis in color space is representative of the green-red color component, with negative a* values corresponding to green and positive a* values corresponding to red. The b* axis in color space is representative of the blue-yellow component, with negative b* values corresponding to blue and positive b* values corresponding to yellow. The closer the a* and b* values are to the origin, the more neutral in color the reflected light will appear to an observer. The CIELAB a* and b* values were generated by simulating an illuminant source at a plurality of different angles of incidence, ranging from 0° to 90°. As shown, the a* values ranges from about -2.25 to about 0.4, while the b* values ranges from about -2.2 to about 1.25. This indicates that the window 24 according to example 1 has a neutral appearance when viewed form the external environment 26 (see FIG. 1).

FIG. 12B depicts modelled CIELAB lightness L* values as a function of angle of incidence on the terminal surface 44. As shown, for angles of incidence less than or equal to 60°, the lightness L* value is less than or equal to 30. This indicates that the window 24 according to example 1 has a dark appearance when viewed form the external environment 26 (see FIG. 1).

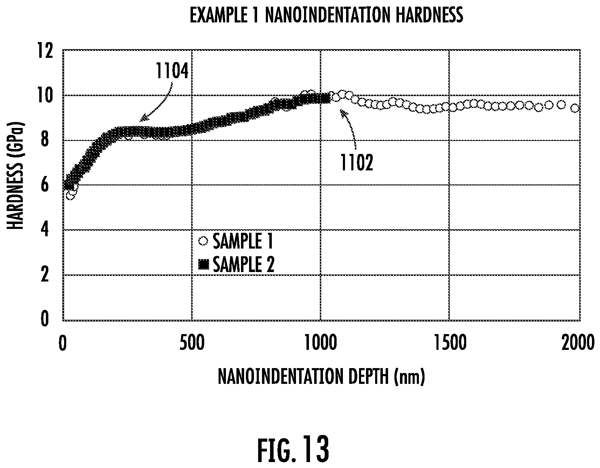

FIG. 13 reveals nanoindentation hardness measured as a function of depth for two samples constructed in accordance with Example 1 herein. The hardness values were simulated as being subjected to the Berkovich Indenter Hardness Test described herein. The first sample was measured for a range of depths form 50 nm to 1000 nm, while the second sample was measured for a range of depths from 50 nm to 2000nm. As depicted in FIG. 11, both samples exhibited a first maximum hardness 1104 at approximately 250 nm in depth of greater than 8 GPa. The second sample also exhibited a second maximum hardness 1102 of greater than 10 GPA at approximately 1050 nm in depth. Without wishing to be bound by theory, it is believed that the maximum hardness lies above the scratch resistant layers due to the stress fields caused by the indenter propagating beneath the scratch resistant layer once the depth reaches 1050 nm. As demonstrated by FIG. 11, the window 24 according to Example 1 exhibits a nanoindentation hardness of greater than 8 GPa throughout a depth range of 250 nm to 2000 nm. The window 24 according to Example 1 also exhibits a nanoindentation hardness of greater than 9 GPa throughout a depth range of 750 nm to 2000 nm. This indicates that this example provides favorable scratch/damage resistance for various applications.

*Example 2* - The window 24 of Example 2 included a first layered film 36 over a first surface 32 of a substrate 30 of an aluminosilicate glass (Corning code 2320). The window 24 also included a second layered film 38 over a second surface 34 of the substrate 30. The first layered film 36 included twenty-one (21) alternating layers of SiO₂ (the SiO₂ (2) material of Table A) as the lower refractive index material 42 and SiNₓ (the SiNₓ(1) material of Table A) as the higher refractive index material 40. Layer 14 was the scratch resistant layer of the higher refractive index material 40, having a thickness of 2000 nm and constructed of the SiNₓ(2) material of Table A. Layers 1-13 were optical control layers having a combined thickness of 1063.9 nm separating the scratch resistant layer from the terminal surface 44. Layers 15-21 were index matching layers separating the scratch resistance layer from the first surface 32 and having a combined thickness of 241.8 nm. In this example, the scratch resistant layer constituted 60.5 % of the thickness of the first layered film 36.

The second layered film 38 included thirteen (13) alternating layers of the lower refractive index material 42 and the higher refractive index material 40. In this example, the lower refractive index material 42 was SiO₂ (the SiO₂ (2) material of Table A), while the higher refractive index material 40 was a combination of SiNₓ (the SiNₓ(1) material of Table A) and Si. As shown, layer 24 - the layer of the higher refractive index material 40 most proximate to the substrate 30 (layer 20 in this example) - was SiNₓ, while the remaining layers of the higher refractive index material 40 were Si. Layer 26 - the Si layer most proximate to the substrate 30 - was the narrowest Si layer, with a thickness of 8.0 nm. The combined thickness of the silicon layers was 414.6 nm, which constituted 39.49% of the total thickness of the second layered film 38.

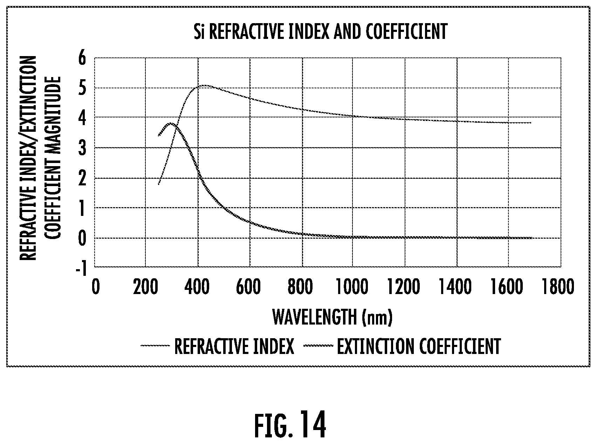

The refractive index and extinction coefficient values of the Si material used in Example 2 are shown in FIG. 14. As shown, the extinction coefficient of the Si material used in this example is 0.29 at 700 nm, which corresponds to approximately 2.29% internal transmittance (for just the silicon) for the combined thickness of the silicon layers in Example 2. At 400 nm, the extinction coefficient is 2.2. As a result, the transmittance of the combined silicon layers is expected to be much lower at 400 nm than it is at 700 nm.

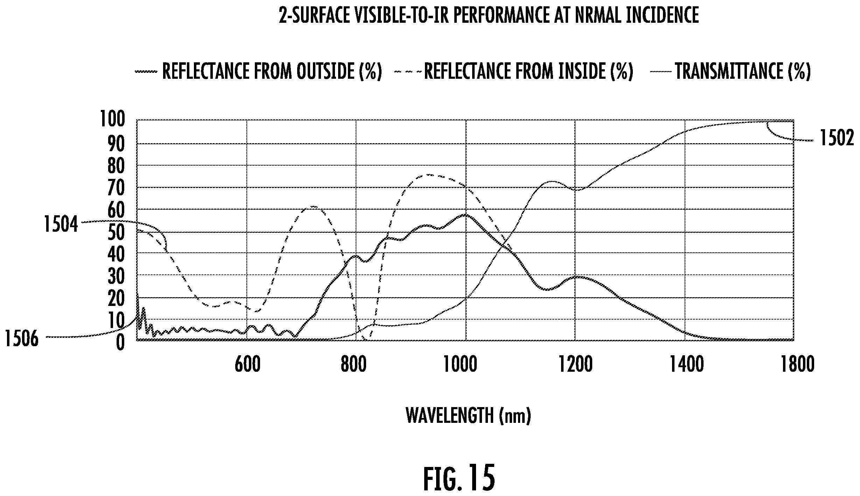

The thicknesses of the layers of the first layered film 36 and the second layered film 38 were configured as set forth in Table 2 below and used to calculate the transmittance, reflectance, CIELAB color space and lightness values, and nanoindentation hardness set forth in FIGS. 15-20B.

| TABLE 2 | | | |
|---|---|---|---|
| Example 2 Layer Design | | | |
| Layer | Material | Refractive Index @1550nm | Physical Thickness (nm) |
| Medium | Air | 1 | |
| | Perfluoropolyether | 1-4 | 4-8 |
| 1 | SiO₂ | 1.46349 | 306.6 |
| 2 | SiNₓ | 2.01269 | 16.9 |
| 3 | SiO₂ | 1.46349 | 21.7 |
| 4 | SiNₓ | 2.01269 | 106.5 |
| 5 | SiO₂ | 1.46349 | 31.6 |
| 6 | SiNₓ | 2.01269 | 14.1 |
| 7 | SiO₂ | 1.46349 | 467.8 |
| 8 | SiNₓ | 2.01269 | 8.1 |
| 9 | SiO₂ | 1.46349 | 66.8 |
| 10 | SiNₓ | 2.01269 | 23.9 |
| 11 | SiO₂ | 1.46349 | 36.4 |
| 12 | SiNₓ | 2.01269 | 39.1 |
| 13 | SiO₂ | 1.46349 | 11.2 |
| 14 | SiNₓ | 1.98699 | 2000 |
| 15 | SiO₂ | 1.46349 | 22.1 |
| 16 | SiNₓ | 2.01269 | 39.6 |
| 17 | SiO₂ | 1.46349 | 44.2 |
| 18 | SiNₓ | 2.01269 | 39.1 |
| 19 | SiO₂ | 1.46349 | 50.6 |
| 20 | SiNₓ | 2.01269 | 21.2 |
| 21 | SiO₂ | 1.46349 | 25.0 |
| Substrate | Aluminosilicate glass (2320) | 1.4916 | 2000000.0 |
| 23 | SiO₂ | 1.46349 | 25.0 |
| 24 | SiNₓ | 2.01269 | 49.0 |
| 25 | SiO₂ | 1.46349 | 12.9 |
| 26 | Si | 3.84504 | 8.0 |
| 27 | SiO₂ | 1.46349 | 35.6 |
| 28 | Si | 3.84504 | 18.5 |
| 29 | SiO₂ | 1.46349 | 22.6 |
| 30 | Si | 3.84504 | 162.4 |
| 31 | SiO₂ | 1.46349 | 98.9 |
| 32 | Si | 3.84504 | 26.6 |
| 33 | SiO₂ | 1.46349 | 117.7 |
| 34 | Si | 3.84504 | 199.1 |
| 35 | SiO₂ | 1.46349 | 273.5 |
| Medium | Air | 1 | |

FIG. 15 depicts a plot including a first curve 1502 showing a modelled transmittance of the window 24 according to Example 2 of light normally incident on the window 24 throughout the spectral range of 400 nm to 1600 nm, a second curve 1504 showing a modelled reflectance of light normally incident on the first layered film 36 throughout the spectral range of 400 nm to 1600 nm, and a third curve 1506 showing a modelled reflectance of light normally incident on the second layered film 38 throughout the spectral range of 400 nm to 1600 nm. As shown, the quantity, thicknesses, number, and materials of the first layered film 36 and the second layered film 38 have been configured so that light normally incident on the window 24 above wavelengths of 1380 nm has a transmittance of greater than 90%. Throughout the visible spectrum, the transmittance is less than 2%. As shown in the curves 1504 and 1506, whether viewed from the first layered film 36 or the second layered film 38, the window 24 according to Example 2 has a reflectance of less than 1% for wavelengths above 1500 nm. Throughout the visible spectrum, when viewed from the first layered film 36, the window according to Example 2 has a reflectance of less than 22%. As such, the results in FIG. 15 demonstrate that the efficacy of the window 24 according to Example 2 providing effective antireflection performance in the infrared wavelengths described herein, while effectively preventing transmission and reflectance in the visible spectrum.

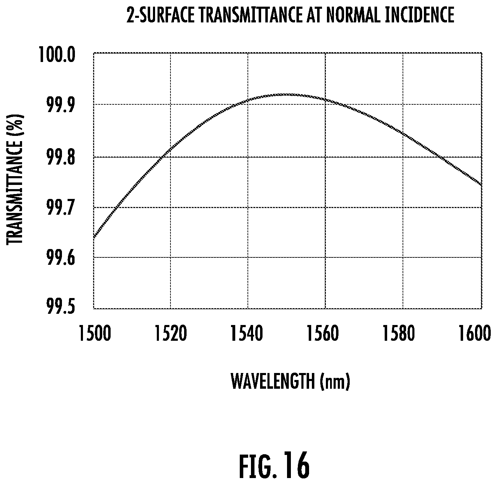

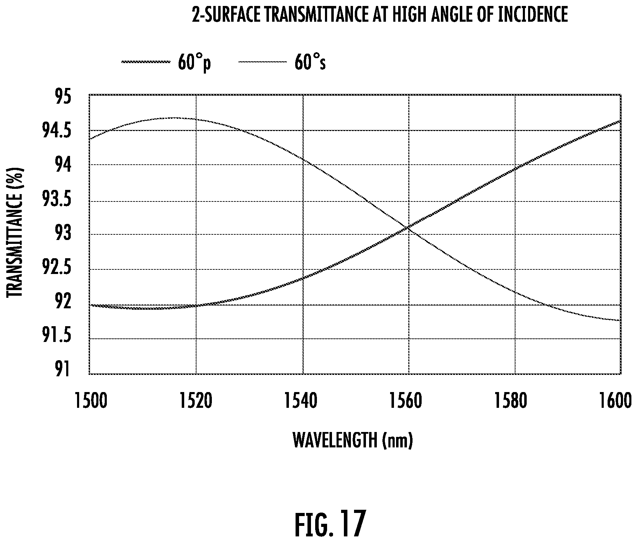

As revealed in FIG. 16, the quantity, thicknesses, number, and materials of the first layered film 36 and the second layered film 38 have been configured so that the window 24 of Example 2 has a percentage transmittance of above 99.6 percent for light normally incident on the first surface 32 or the second surface 34 throughout a wavelength range extending from 1500 nm to 1600 nm. As revealed in FIG. 17, the quantity, thicknesses, number, and materials of the first layered film 36 and the second layered film 38 have been configured so that the window 24 of Example 2 has an average P polarization transmittance and an average S polarization transmittance, calculated a wavelength range of interest from 1500 nm to 1600 nm, of greater than 91.75% for light incident on the first surface and the second surface at angles within 60° of normal to the first surface and the second surface.

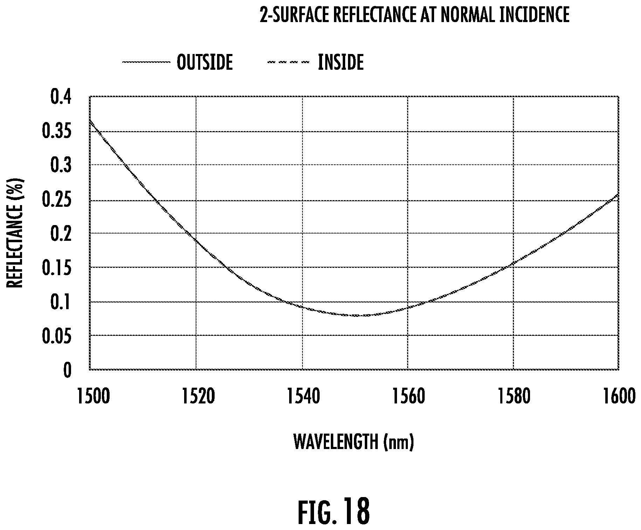

As revealed in FIG. 18, the quantity, thicknesses, number, and materials of the first layered film 36 and the second layered film 38 have been configured so that the window 24 of Example 2 has a percentage reflectance from the terminal surface 44 (and each of the layers in the window 24) of the first layered film 36 and the terminal surface 48 of the second layered film 38 of under 0.4 percent for light normally incident on the substrate 300 within the approximate wavelength range of 1500 nm to 1600 nm. The reflectance from the terminal surface 44 is comparable to that from the terminal surface 48, as the first and second layered films 36 and 38 were constructed of materials having relatively low absorbance in the referenced wavelength range. As shown, the modelled reflectance reaches a minimum value of approximately 0.1% at about 1550 nm, and the reflectance is less than 0.25% throughout the wavelength range of 1510 nm to 1600 nm.

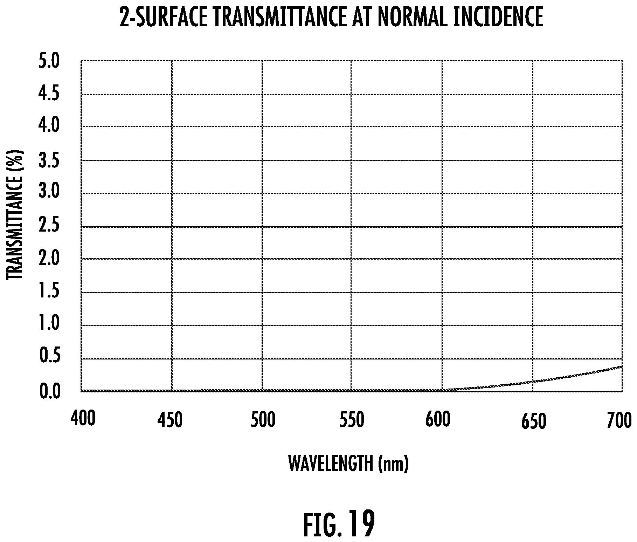

As revealed in FIG. 19, the quantity, thicknesses, number, and materials of the first layered film 36 and the second layered film 38 have been configured so that the window 24 of Example 2 has a transmittance substantially less than 1.0% throughout the visible spectrum. From 400 nm to 650 nm, the transmittance in the visible spectrum is less than 0.2%. For wavelengths less than 550 nm, the transmittance in the visible spectrum is less than 0.1%. It is believed that these low transmission values are due at least in part to the absorbance of visible light by the silicon layers in the second layered film 38.

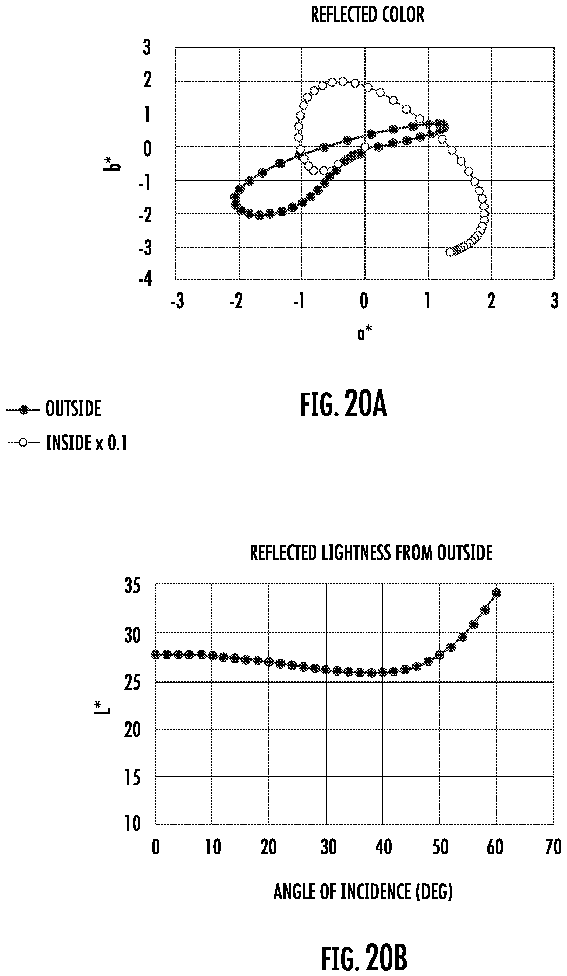

As revealed in FIGS. 20A and 20B, the quantity, thicknesses, number, and materials of the first layered film 36 and the second layered film 38 have been configured so that the window 24 of Example 2 has a dark appearance when viewed from the terminal surface 44 of the first layered film. FIG. 20A provides simulated CIELAB single-surface reflected color data for Example 2 for light reflected off of the terminal surface 44. The color of the single-surface reflected light can be characterized using CIELAB color coordinates. The a* axis in color space is representative of the green-red color component, with negative a* values corresponding to green and positive a* values corresponding to red. The b* axis in color space is representative of the blue-yellow component, with negative b* values corresponding to blue and positive b* values corresponding to yellow. The closer the a* and b* values are to the origin, the more neutral in color the reflected light will appear to an observer. The CIELAB a* and b* values were generated by simulating an illuminant source at a plurality of different angles of incidence, ranging from 0° to 90°. As shown, the a* values ranges from about -2.0 to about 0.75, while the b* values ranges from about -2.1 to about 1.3. This indicates that the window 24 according to Example 2 has a neutral appearance when viewed form the external environment 26 (see FIG. 1).

FIG. 20B depicts modelled CIELAB lightness L* values as a function of angle of incidence on the terminal surface 44. As shown, for angles of incidence less than or equal to 60°, the lightness L* value is less than or equal to 35. This indicates that the window 24 according to Example 2 has a dark appearance when viewed form the external environment 26 (see FIG. 1).

*Example 3* - The window 24 of Example 3 included a first layered film 36 over a first surface 32 of a substrate 30 of an aluminosilicate glass (Corning code 2320). The window 24 also included a second layered film 38 over a second surface 34 of the substrate 30. The first layered film 36 included twenty-five (25) alternating layers of SiO₂ as the lower refractive index material 42 (the SiO₂ (1) material of Table A) and SiNₓ as the higher refractive index material 40 (of the SiNₓ(1) material of Table A). Layer 18 was the scratch resistant layer of the higher refractive index material 40 (of the SiNₓ (2) material of Table A), having a thickness of 2000 nm. Layers 1-17 were optical control layers having a combined thickness of 1387.5 nm separating the scratch resistant layer from the terminal surface 44. Layers 19-25 were index matching layers separating the scratch resistance layer from the first surface 32 and having a combined thickness of 249.5 nm. In this example, the scratch resistant layer constituted 54.99% of the thickness of the first layered film 36.

The second layered film 38 included fifteen (15) alternating layers of the lower refractive index material 42 and the higher refractive index material 40. In this example, the lower refractive index material 42 was SiO₂ (the SiO₂ (2) material of Table A), while the higher refractive index material 40 was a combination of SiNₓ (the SiNₓ(1) material of Table A) and Si. As shown, layer 28 - the layer of the higher refractive index material 40 most proximate to the substrate 30 (layer 20 in this example) - was SiNₓ, while the remaining layers of the higher refractive index material 40 were Si. Layer 30 - the Si layer most proximate to the substrate 30 - was the narrowest Si layer, with a thickness of 8.0 nm. The combined thickness of the silicon layers was 584.28 nm, which constituted 46.62 % of the total thickness of the second layered film 38. The silicon material used in Example 3 was the same as that described above with respect to Example 2 (having the properties depicted in FIG. 14).

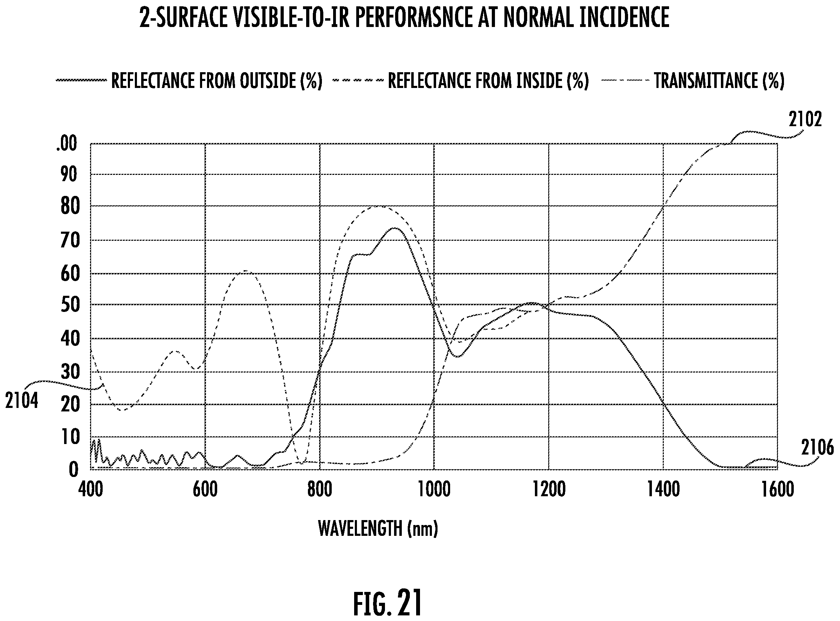

The thicknesses of the layers of the first layered film 36 and the second layered film 38 were configured as set forth in Table 3 below and used to calculate the transmittance, reflectance, CIELAB color space and lightness values, and nanoindentation hardness set forth in FIGS. 21-26B.

| TABLE 3 | | | |
|---|---|---|---|
| Example 3 Layer Design | | | |
| Layer | Material | Refractive Index @1550nm | Physical Thickness (nm) |
| Medium | Air | 1 | |
| | Perfluoropolyether | 1-4 | 4-8 |
| 1 | SiO₂ | 1.46349 | 119.78 |
| 2 | SiNₓ | 2.01269 | 29.73 |
| 3 | SiO₂ | 1.46349 | 69.16 |
| 4 | SiNₓ | 2.01269 | 22.78 |
| 5 | SiO₂ | 1.46349 | 60.32 |
| 6 | SiNₓ | 2.01269 | 150.89 |
| 7 | SiO₂ | 1.46349 | 48.89 |
| 8 | SiNₓ | 2.01269 | 31.45 |
| 9 | SiO₂ | 1.46349 | 55.68 |
| 10 | SiNₓ | 2.01269 | 22.98 |
| 11 | SiO₂ | 1.46349 | 200.38 |
| 12 | SiNₓ | 2.01269 | 118.3 |
| 13 | SiO₂ | 1.46349 | 172.06 |
| 14 | SiNₓ | 2.01269 | 128.14 |
| 15 | SiO₂ | 1.46349 | 88.63 |
| 16 | SiNₓ | 2.01269 | 8.99 |
| 17 | SiO₂ | 1.46349 | 59.38 |
| 18 | SiNₓ | 1.98699 | 2000 |
| 19 | SiO₂ | 1.46349 | 25.22 |
| 20 | SiNₓ | 2.01269 | 43.41 |
| 21 | SiO₂ | 1.46349 | 44.38 |
| 22 | SiNₓ | 2.01269 | 34.4 |
| 23 | SiO₂ | 1.46349 | 58.65 |
| 24 | SiNₓ | 2.01269 | 18.46 |
| 25 | SiO₂ | 1.46349 | 25 |
| Substrate | Aluminosilicate glass (2320) | 1.4916 | 2000000.0 |
| 27 | SiO₂ | 1.46349 | 25 |
| 28 | SiNₓ | 2.01269 | 43.96 |
| 29 | SiO₂ | 1.46349 | 12.55 |
| 30 | Si | 3.84504 | 8 |
| 31 | SiO₂ | 1.46349 | 27.49 |
| 32 | Si | 3.84504 | 21.22 |
| 33 | SiO₂ | 1.46349 | 8 |
| 34 | Si | 3.84504 | 193.55 |
| 35 | SiO₂ | 1.46349 | 28.84 |
| 36 | Si | 3.84504 | 163.81 |
| 37 | SiO₂ | 1.46349 | 139.55 |
| 38 | Si | 3.84504 | 18.01 |
| 39 | SiO₂ | 1.46349 | 159.99 |
| 40 | Si | 3.84504 | 179.69 |
| 41 | SiO₂ | 1.46349 | 223.72 |
| Medium | Air | 1 | |

FIG. 21 depicts a plot including a first curve 2102 showing a modelled transmittance of the window 24 according to Example 3 of light normally incident on the window 24 throughout the spectral range of 400 nm to 1600 nm, a second curve 2104 showing a modelled reflectance of light normally incident on the first layered film 36 throughout the spectral range of 400 nm to 1600 nm, and a third curve 2106 showing a modelled reflectance of light normally incident on the second layered film 38 throughout the spectral range of 400 nm to 1600 nm. As shown, the quantity, thicknesses, number, and materials of the first layered film 36 and the second layered film 38 have been configured so that light normally incident on the window 24 above wavelengths of 1420 nm has a transmittance of greater than 90%. Throughout the visible spectrum, the transmittance is less than 2%. As shown in the curves 2104 and 2106, whether viewed from the first layered film 36 or the second layered film 38, the window 24 according to Example 3 has a reflectance of less than 1% for wavelengths above 1500 nm. Throughout the visible spectrum, when viewed from the first layered film 36, the window according to Example 3 has a reflectance of less than 10%. As such, the results in FIG. 21 demonstrate that the efficacy of the window 24 according to Example 3 providing effective antireflection performance in the infrared wavelengths described herein, while effectively preventing transmission and reflectance in the visible spectrum.

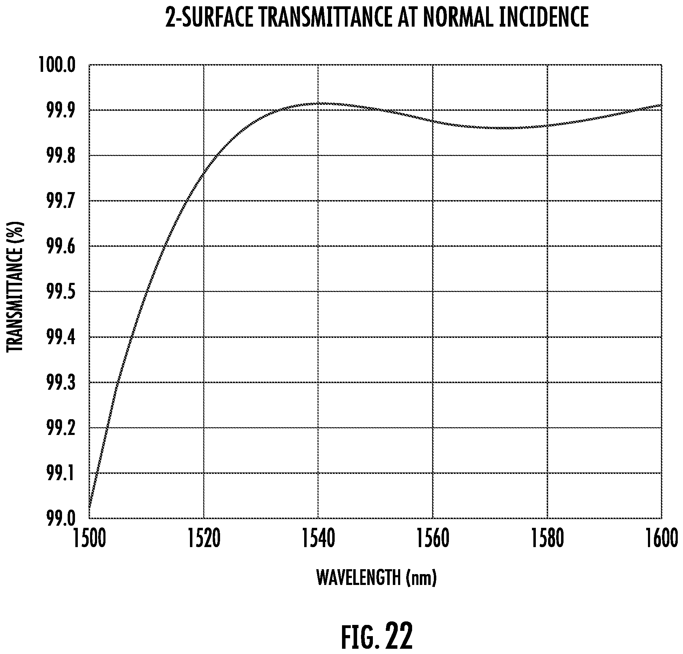

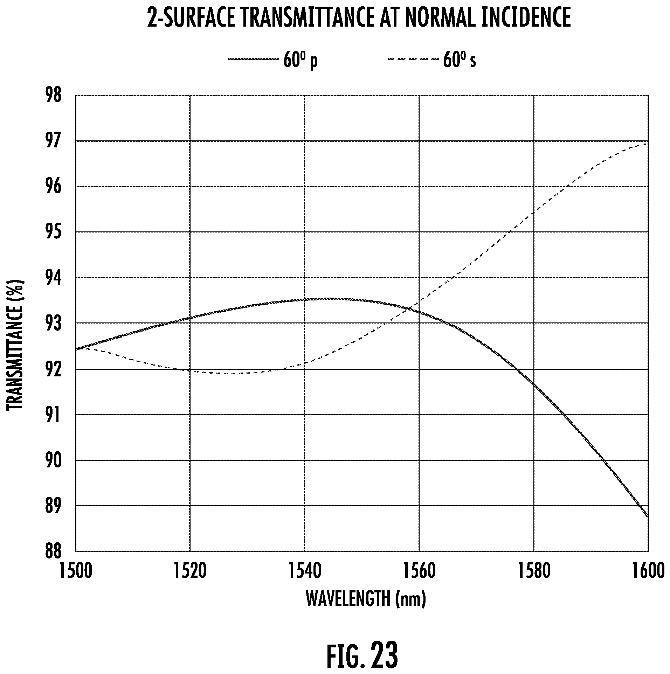

As revealed in FIG. 22, the quantity, thicknesses, number, and materials of the first layered film 36 and the second layered film 38 have been configured so that the window 24 of Example 3 has a percentage transmittance of above 99.0 percent for light normally incident on the first surface 32 or the second surface 34 throughout a wavelength range extending from 1500 nm to 1600 nm. As revealed in FIG. 23, the quantity, thicknesses, number, and materials of the first layered film 36 and the second layered film 38 have been configured so that the window 24 of Example 3 has an average P polarization transmittance and an average S polarization transmittance, calculated a wavelength range of interest from 1500 nm to 1600 nm, of greater than 88% for light incident on the first surface and the second surface at angles within 60° of normal to the first surface and the second surface.

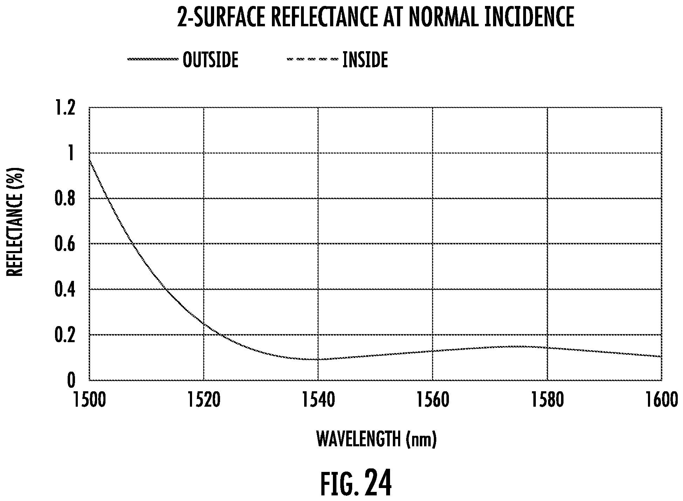

As revealed in FIG. 24, the quantity, thicknesses, number, and materials of the first layered film 36 and the second layered film 38 have been configured so that the window 24 of Example 3 has a percentage reflectance from the terminal surface 44 (and each of the layers in the window 24) of the first layered film 36 and the terminal surface 48 of the second layered film 38 of under 1.0 percent for light normally incident on the substrate 300 within the approximate wavelength range of 1500 nm to 1600 nm. The reflectance from the terminal surface 44 is comparable to that from the terminal surface 48, as the first and second layered films 36 and 38 were constructed of materials having relatively low absorbance in the referenced wavelength range. As shown, the modelled reflectance reaches a minimum value of approximately 0.1% at about 1540 nm, and the reflectance is less than 0.2% throughout the wavelength range of 1530 nm to 1600 nm.

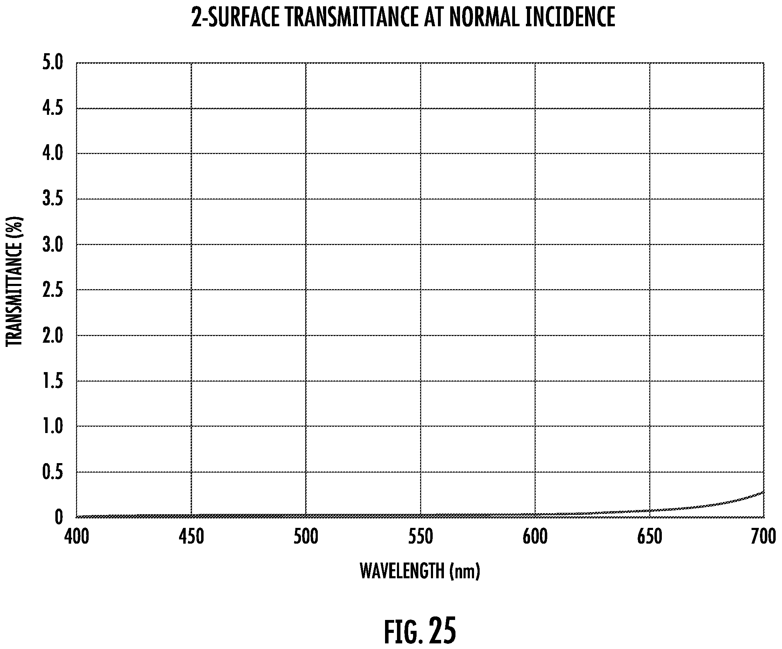

As revealed in FIG. 25, the quantity, thicknesses, number, and materials of the first layered film 36 and the second layered film 38 have been configured so that the window 24 of Example 3 has a transmittance substantially less than 0.5% throughout the visible spectrum. From 400 nm to 600 nm, the transmittance in the visible spectrum is less than 0.1%. It is believed that these low transmission values are due in part to the absorbance of visible light by the silicon layers in the second layered film 38.

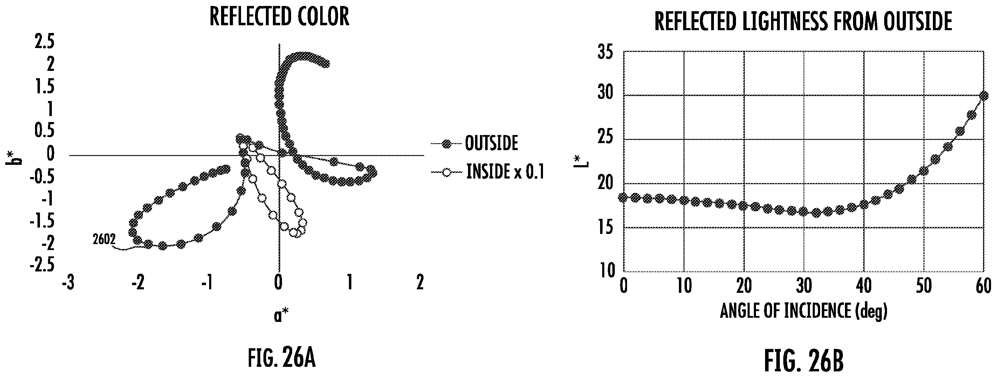

As revealed in FIGS. 26A and 26B, the quantity, thicknesses, number, and materials of the first layered film 36 and the second layered film 38 have been configured so that the window 24 of Example 3 has a dark appearance when viewed from the terminal surface 44 of the first layered film. FIG. 26A provides simulated CIELAB single-surface reflected color data for Example 3 for light reflected off of the terminal surface 44. The color of the single-surface reflected light can be characterized using CIELAB color coordinates. The a* axis in color space is representative of the green-red color component, with negative a* values corresponding to green and positive a* values corresponding to red. The b* axis in color space is representative of the blue-yellow component, with negative b* values corresponding to blue and positive b* values corresponding to yellow. The closer the a* and b* values are to the origin, the more neutral in color the reflected light will appear to an observer. The CIELAB a* and b* values were generated by simulating an illuminant source at a plurality of different angles of incidence, ranging from 0° to 90°. As shown in the curve 2602, the a* values ranges from about -2.25 to about 0.4, while the b* values ranges from about -2.0 to about 0.5. This indicates that the window 24 according to Example 3 has a neutral appearance when viewed form the external environment 26 (see FIG. 1).

FIG. 26B depicts modelled CIELAB lightness L* values as a function of angle of incidence on the terminal surface 44. As shown, for angles of incidence less than or equal to 60°, the lightness L* value is less than or equal to 30. This indicates that the window 24 according to Example 3 has a dark appearance when viewed form the external environment 26 (see FIG. 1).

*Example 4* - The window 24 of Example 4 included a first layered film 36 over a first surface 32 of a substrate 30 of an aluminosilicate glass (Corning code 2320). The window 24 also included a second layered film 38 over a second surface 34 of the substrate 30. The first layered film 36 included twenty-nine (29) alternating layers of SiO₂ as the lower refractive index material 42 (the SiO₂(2) material of Table A) and SiNₓ as the higher refractive index material 40 (the SiNₓ(1) material of Table A) . Layer 20 was the scratch resistant layer of the higher refractive index material 40 (of the SiNₓ(2) material of Table A), having a thickness of 2000 nm. Layers 1-19 were optical control layers having a combined thickness of 1361.8 nm separating the scratch resistant layer from the terminal surface 44. Layers 21-29 were index matching layers separating the scratch resistance layer from the first surface 32 and having a combined thickness of 326.0 nm. In this example, the scratch resistant layer constituted 54.23% of the thickness of the first layered film 36.

The second layered film 38 included fifteen (15) alternating layers of the lower refractive index material 42 and the higher refractive index material 40. In this example, the lower refractive index material 42 was SiO₂ (the SiO₂(2) material of Table A), while the higher refractive index material 40 was a combination of SiNₓ (the SiNₓ(1) material of table A) and Si. As shown, layer 32 - the layer of the higher refractive index material 40 most proximate to the substrate 30 (layer 20 in this example) - was SiNₓ, while the remaining layers of the higher refractive index material 40 were Si. Layer 34 - the Si layer most proximate to the substrate 30 - was the narrowest Si layer, with a thickness of 8.23 nm. The combined thickness of the silicon layers was 585 nm, which constituted 45.41 % of the total thickness of the second layered film 38. The silicon material used in Example 4 was the same as that described above with respect to Example 2 (having the properties depicted in FIG. 14).

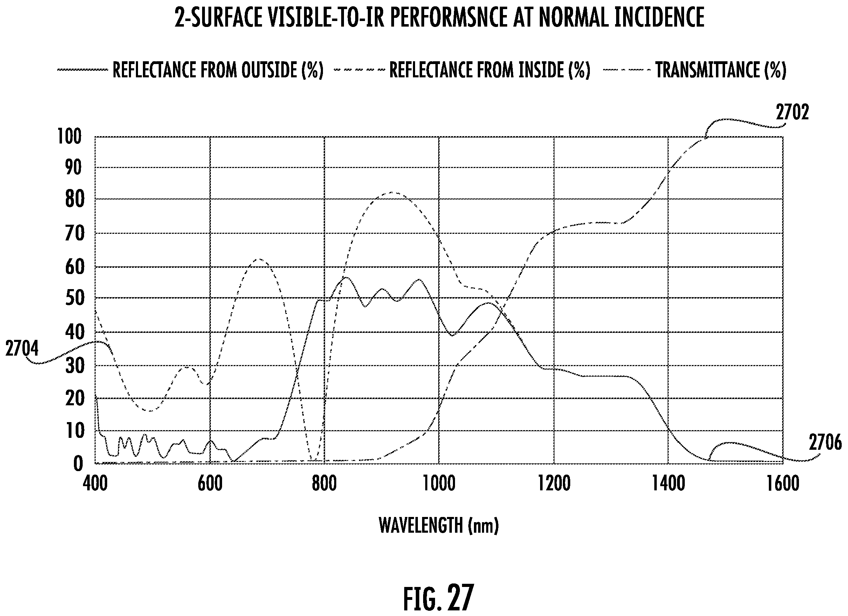

The thicknesses of the layers of the first layered film 36 and the second layered film 38 were configured as set forth in Table 4 below and used to calculate the transmittance, reflectance, CIELAB color space and lightness values, and nanoindentation hardness set forth in FIGS. 27-32B.

| TABLE 4 | | | |
|---|---|---|---|
| Example 4 Layer Design | | | |
| Layer | Material | Refractive Index @1550nm | Physical Thickness (nm) |
| Medium | Air | 1 | |
| | Perfluoropolyether | 1-4 | 4-8 |
| 1 | SiO₂ | 1.46349 | 255.23 |
| 2 | SiNₓ | 2.01269 | 145.36 |
| 3 | SiO₂ | 1.46349 | 45.77 |
| 4 | SiNₓ | 2.01269 | 41.32 |
| 5 | SiO₂ | 1.46349 | 12.73 |
| 6 | SiNₓ | 2.01269 | 81.51 |
| 7 | SiO₂ | 1.46349 | 183.2 |
| 8 | SiNₓ | 2.01269 | 65.17 |
| 9 | SiO₂ | 1.46349 | 8.32 |
| 10 | SiNₓ | 2.01269 | 79.42 |
| 11 | SiO₂ | 1.46349 | 41.57 |
| 12 | SiNₓ | 2.01269 | 45.86 |
| 13 | SiO₂ | 1.46349 | 11.7 |
| 14 | SiNₓ | 2.01269 | 203.02 |
| 15 | SiO₂ | 1.46349 | 22.08 |
| 16 | SiNₓ | 2.01269 | 44.73 |
| 17 | SiO₂ | 1.46349 | 41.83 |
| 18 | SiNₓ | 2.01269 | 28.12 |
| 19 | SiO₂ | 1.46349 | 24.82 |
| 20 | SiNₓ | 1.98699 | 2000 |
| 21 | SiO₂ | 1.46349 | 18.67 |
| 22 | SiNₓ | 2.01269 | 43.78 |
| 23 | SiO₂ | 1.46349 | 43.08 |
| 24 | SiNₓ | 2.01269 | 37.09 |
| 25 | SiO₂ | 1.46349 | 50.41 |
| 26 | SiNₓ | 2.01269 | 31.2 |
| 27 | SiO₂ | 1.46349 | 61.22 |
| 28 | SiNₓ | 2.01269 | 15.53 |
| 29 | SiO₂ | 1.46349 | 25 |
| Substrate | Aluminosilicate glass (2320) | 1.4916 | 2000000.0 |
| 31 | SiO₂ | 1.46349 | 25 |
| 32 | SiNₓ | 2.01269 | 58.92 |
| 33 | SiO₂ | 1.46349 | 8.1 |
| 34 | Si | 3.84504 | 8.23 |
| 35 | SiO₂ | 1.46349 | 23.85 |
| 36 | Si | 3.84504 | 22.75 |
| 37 | SiO₂ | 1.46349 | 8 |
| 38 | Si | 3.84504 | 192.06 |
| 39 | SiO₂ | 1.46349 | 27.67 |
| 40 | Si | 3.84504 | 159.83 |
| 41 | SiO₂ | 1.46349 | 141.65 |
| 42 | Si | 3.84504 | 19.03 |
| 43 | SiO₂ | 1.46349 | 167.14 |
| 44 | Si | 3.84504 | 183.1 |
| 45 | SiO₂ | 1.46349 | 243.02 |
| Medium | Air | 1 | |

FIG. 27 depicts a plot including a first curve 2702 showing a modelled transmittance of the window 24 according to Example 4 of light normally incident on the window 24 throughout the spectral range of 400 nm to 1600 nm, a second curve 2704 showing a modelled reflectance of light normally incident on the first layered film 36 throughout the spectral range of 400 nm to 1600 nm, and a third curve 2706 showing a modelled reflectance of light normally incident on the second layered film 38 throughout the spectral range of 400 nm to 1600 nm. As shown, the quantity, thicknesses, number, and materials of the first layered film 36 and the second layered film 38 have been configured so that light normally incident on the window 24 above wavelengths of 1400 nm has a transmittance of greater than 90%. Throughout the visible spectrum, the transmittance is less than 1%. As shown in the curves 2704 and 2706, whether viewed from the first layered film 36 or the second layered film 38, the window 24 according to Example 4 has a reflectance of less than 1% for wavelengths above 1500 nm. Throughout the visible spectrum, when viewed from the first layered film 36, the window according to Example 4 has a reflectance of less than 22% (with the reflectance being less than 10% for wavelengths greater than about 420 nm). As such, the results in FIG. 27 demonstrate that the efficacy of the window 24 according to Example 4 providing effective antireflection performance in the infrared wavelengths described herein, while effectively preventing transmission and reflectance in the visible spectrum.

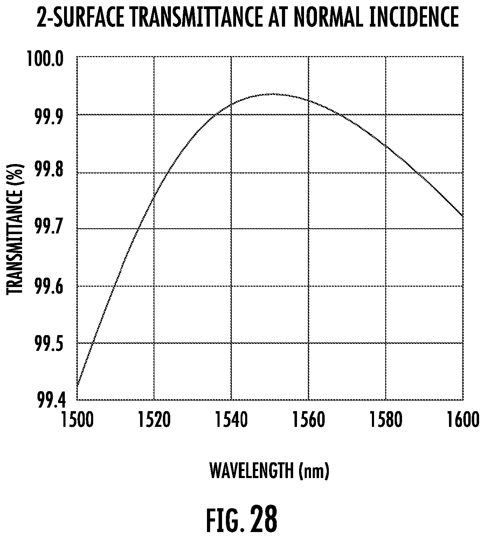

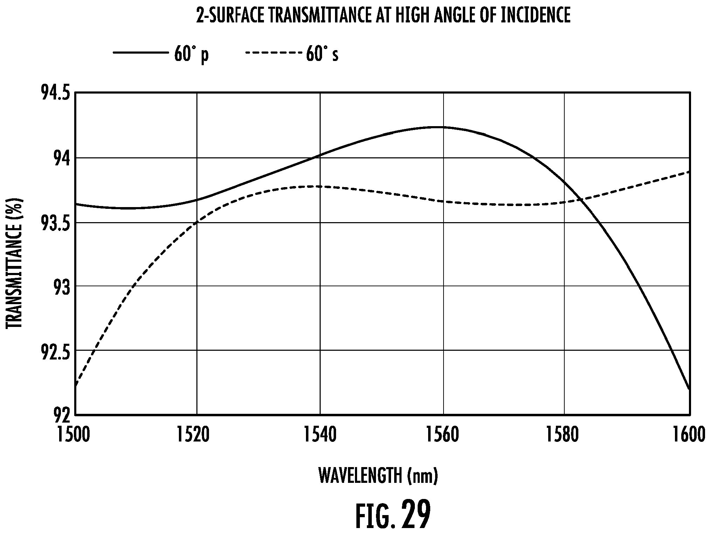

As revealed in FIG. 28, the quantity, thicknesses, number, and materials of the first layered film 36 and the second layered film 38 have been configured so that the window 24 of Example 4 has a percentage transmittance of above 99.4 percent for light normally incident on the first surface 32 or the second surface 34 throughout a wavelength range extending from 1500 nm to 1600 nm. As revealed in FIG. 29, the quantity, thicknesses, number, and materials of the first layered film 36 and the second layered film 38 have been configured so that the window 24 of Example 4 has an average P polarization transmittance and an average S polarization transmittance, calculated a wavelength range of interest from 1500 nm to 1600 nm, of greater than 92.2% for light incident on the first surface and the second surface at angles within 60° of normal to the first surface and the second surface. The S and P polarization transmittances are greater than 93.5% throughout the wavelength range of 1530 nm and 1600 nm. The Example 4 appears to provide the best antireflective performance at high angles of incidence, irrespective of polarization, for all of the examples.

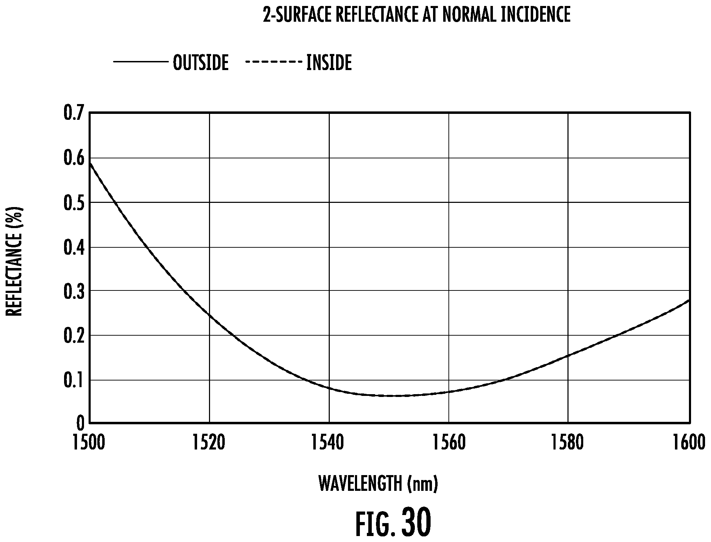

As revealed in FIG. 30, the quantity, thicknesses, number, and materials of the first layered film 36 and the second layered film 38 have been configured so that the window 24 of Example 4 has a percentage reflectance from the terminal surface 44 (and each of the layers in the window 24) of the first layered film 36 and the terminal surface 48 of the second layered film 38 of under 0.6 percent for light normally incident on the substrate 300 within the approximate wavelength range of 1500 nm to 1600 nm. The reflectance from the terminal surface 44 is comparable to that from the terminal surface 48, as the first and second layered films 36 and 38 were constructed of materials having relatively low absorbance in the referenced wavelength range. As shown, the modelled reflectance reaches a minimum value of approximately 0.08% at about 1550 nm, and the reflectance is less than 0.1% throughout the wavelength range of 1535 nm to 1565 nm.

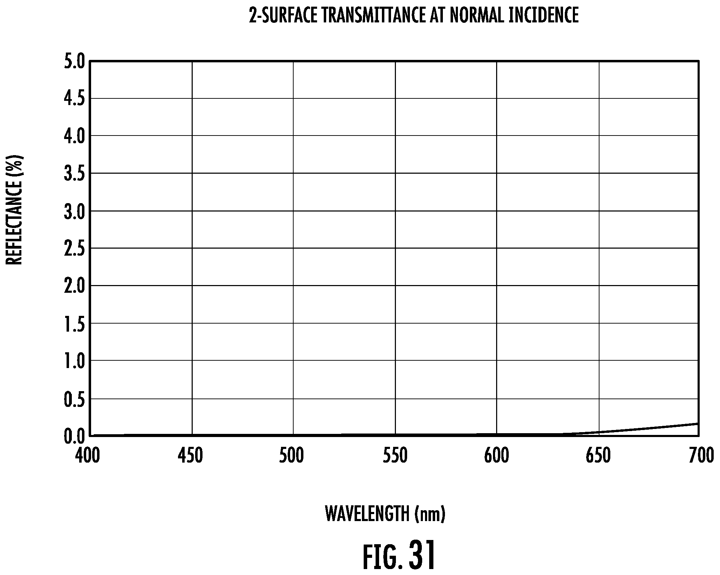

As revealed in FIG. 31, the quantity, thicknesses, number, and materials of the first layered film 36 and the second layered film 38 have been configured so that the window 24 of Example 4 has a transmittance substantially less than 0.3% throughout the visible spectrum for light normally incident on the substrate 30. From 400 nm to 650 nm, the transmittance in the visible spectrum is less than 0.1%. It is believed that these low transmission values are due to the absorbance of visible light by the silicon layers in the second layered film 38.

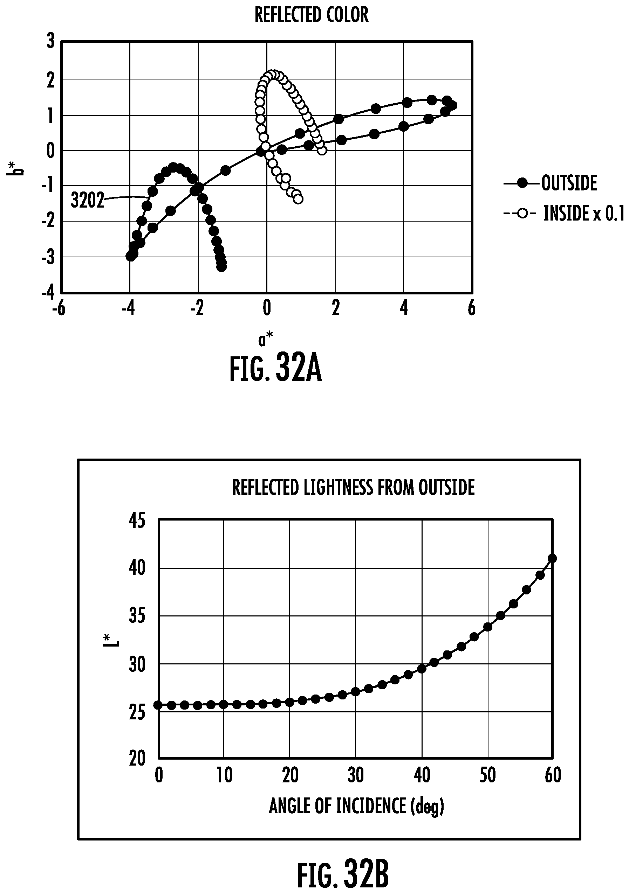

As revealed in FIGS. 32A and 32B, the quantity, thicknesses, number, and materials of the first layered film 36 and the second layered film 38 have been configured so that the window 24 of Example 4 has a dark appearance when viewed from the terminal surface 44 of the first layered film. FIG. 32A provides simulated CIELAB single-surface reflected color data for Example 4 for light reflected off of the terminal surface 44. The color of the single-surface reflected light can be characterized using CIELAB color coordinates. The a* axis in color space is representative of the green-red color component, with negative a* values corresponding to green and positive a* values corresponding to red. The b* axis in color space is representative of the blue-yellow component, with negative b* values corresponding to blue and positive b* values corresponding to yellow. The closer the a* and b* values are to the origin, the more neutral in color the reflected light will appear to an observer. The CIELAB a* and b* values were generated by simulating an illuminant source at a plurality of different angles of incidence, ranging from 0° to 90°. As shown in the curve 3202, the a* values ranges from about -3.15 to about 1.5, while the b* values ranges from about -4.0 to 5.6. This indicates that the window 24 according to Example 4 has a neutral appearance when viewed form the external environment 26 (see FIG. 1).

FIG. 32B depicts modelled CIELAB lightness L* values as a function of angle of incidence on the terminal surface 44. As shown, for angles of incidence less than or equal to 60°, the lightness L* value is less than or equal to 42. This indicates that the window 24 according to Example 4 has a dark appearance when viewed form the external environment 26 (see FIG. 1).

*Example 5* - The window 24 of Example 5 included a first layered film 36 over a first surface 32 of a substrate 30 of an aluminosilicate glass (Corning code 2320). The window 24 also included a second layered film 38 over a second surface 34 of the substrate 30. The first layered film 36 included twenty-seven (27) alternating layers of SiO₂ as the lower refractive index material 42 (the SiO₂(2) material of Table A) and SiNₓ as the higher refractive index material 40 (the SiNₓ(1) material of Table A). Layer 18 was the scratch resistant layer of the higher refractive index material 40 (the SiNₓ(2) material of Table A), having a thickness of 2000 nm. Layers 1-17 were optical control layers having a combined thickness of 1300 nm separating the scratch resistant layer from the terminal surface 44. Layers 19-27 were index matching layers separating the scratch resistance layer from the first surface 32 and having a combined thickness of 376.2 nm. In this example, the scratch resistant layer constituted 54.40% of the thickness of the first layered film 36.

The second layered film 38 included fifteen (15) alternating layers of the lower refractive index material 42 and the higher refractive index material 40. In this example, the lower refractive index material 42 was SiO₂ (the SiO₂(2) material of Table A), while the higher refractive index material 40 was a combination of SiNₓ (the SiNₓ(1) material of Table A) and Si. As shown, layer 30 - the layer of the higher refractive index material 40 most proximate to the substrate 30 (layer 20 in this example) - was SiNₓ, while the remaining layers of the higher refractive index material 40 were Si. Layer 32 - the Si layer most proximate to the substrate 30 - was the narrowest Si layer, with a thickness of 8.03 nm. The combined thickness of the silicon layers was 518.35 nm, which constituted 36.67% of the total thickness of the second layered film 38. The silicon material used in Example 5 was the same as that described above with respect to Example 2 (having the properties depicted in FIG. 14).

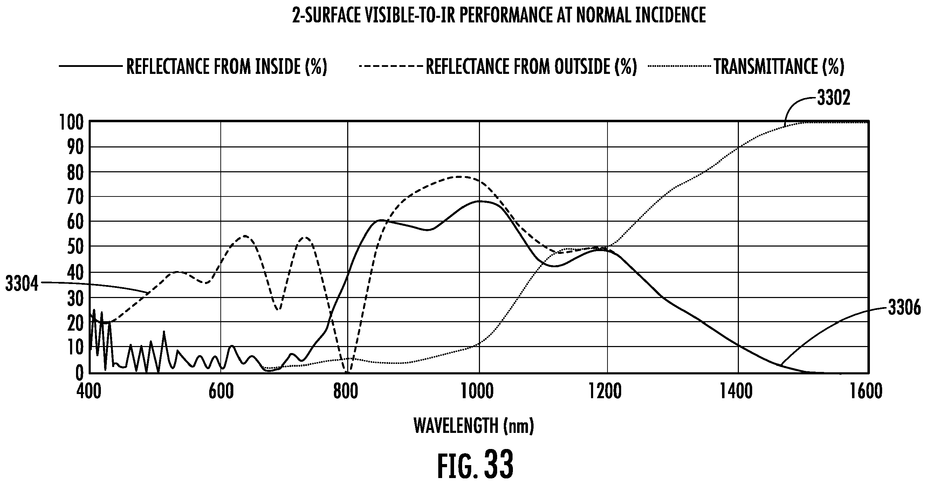

The thicknesses of the layers of the first layered film 36 and the second layered film 38 were configured as set forth in Table 5 below and used to calculate the transmittance, reflectance, CIELAB color space and lightness values, and nanoindentation hardness set forth in FIGS. 33-38B.

| TABLE 5 | | | |
|---|---|---|---|
| Example 5 Layer Design | | | |
| Layer | Material | Refractive Index @1550nm | Physical Thickness (nm) |
| Medium | Air | 1 | |
| | Perfluoropolyether | 1-4 | 4-8 |
| 1 | SiO₂ | 1.46349 | 122.94 |
| 2 | SiNₓ | 2.01269 | 12.24 |
| 3 | SiO₂ | 1.46349 | 98.87 |
| 4 | SiNₓ | 2.01269 | 9.68 |
| 5 | SiO₂ | 1.46349 | 41.51 |
| 6 | SiNₓ | 2.01269 | 188.3 |
| 7 | SiO₂ | 1.46349 | 10.23 |
| 8 | SiNₓ | 2.01269 | 51.36 |
| 9 | SiO₂ | 1.46349 | 24.97 |
| 10 | SiNₓ | 2.01269 | 20.38 |
| 11 | SiO₂ | 1.46349 | 149.22 |
| 12 | SiNₓ | 2.01269 | 120.78 |
| 13 | SiO₂ | 1.46349 | 175.31 |
| 14 | SiNₓ | 2.01269 | 134.41 |
| 15 | SiO₂ | 1.46349 | 64.11 |
| 16 | SiNₓ | 2.01269 | 16.25 |
| 17 | SiO₂ | 1.46349 | 59.81 |
| 18 | SiNₓ | 1.98699 | 2000 |
| 19 | SiO₂ | 1.46349 | 16.83 |
| 20 | SiNₓ | 2.01269 | 63.68 |
| 21 | SiO₂ | 1.46349 | 42.06 |
| 22 | SiNₓ | 2.01269 | 42.8 |
| 23 | SiO₂ | 1.46349 | 42.51 |
| 24 | SiNₓ | 2.01269 | 28.13 |
| 25 | SiO₂ | 1.46349 | 86.42 |
| 26 | SiNₓ | 2.01269 | 18.75 |
| 27 | SiO₂ | 1.46349 | 25 |
| Substrate | Aluminosilicate glass (2320) | 1.4916 | 2000000.0 |
| 29 | SiO₂ | 1.46349 | 25 |
| 30 | SiNₓ | 2.01269 | 47.2 |
| 31 | SiO₂ | 1.46349 | 11.19 |
| 32 | Si | 3.84504 | 8.03 |
| 33 | SiO₂ | 1.46349 | 34.14 |
| 34 | Si | 3.84504 | 13.78 |
| 35 | SiO₂ | 1.46349 | 26.93 |
| 36 | Si | 3.84504 | 17.18 |
| 37 | SiO₂ | 1.46349 | 19.94 |
| 38 | Si | 3.84504 | 250.84 |
| 39 | SiO₂ | 1.46349 | 40.88 |
| 40 | Si | 3.84504 | 47.06 |
| 41 | SiO₂ | 1.46349 | 482.11 |
| 42 | Si | 3.84504 | 181.46 |
| 43 | SiO₂ | 1.46349 | 207.8 |
| Medium | Air | 1 | |

FIG. 33 depicts a plot including a first curve 3302 showing a modelled transmittance of the window 24 according to Example 5 of light normally incident on the window 24 throughout the spectral range of 400 nm to 1600 nm, a second curve 3304 showing a modelled reflectance of light normally incident on the first layered film 36 throughout the spectral range of 400 nm to 1600 nm, and a third curve 3306 showing a modelled reflectance of light normally incident on the second layered film 38 throughout the spectral range of 400 nm to 1600 nm. As shown, the quantity, thicknesses, number, and materials of the first layered film 36 and the second layered film 38 have been configured so that light normally incident on the window 24 above wavelengths of 1400 nm has a transmittance of greater than 90%. Throughout the visible spectrum, the transmittance is less than 5% (with the transmittance being less than 1% for wavelengths from 400 nm to 630 nm). As shown in the curves 3304 and 3306, whether viewed from the first layered film 36 or the second layered film 38, the window 24 according to Example 5 has a reflectance of less than 1% for wavelengths above 1500 nm. Throughout the visible spectrum, when viewed from the first layered film 36, the window according to Example 5 has a reflectance of less than 22%. As such, the results in FIG. 33 demonstrate that the efficacy of the window 24 according to Example 5 providing effective antireflection performance in the infrared wavelengths described herein, while effectively preventing transmission and reflectance in the visible spectrum.

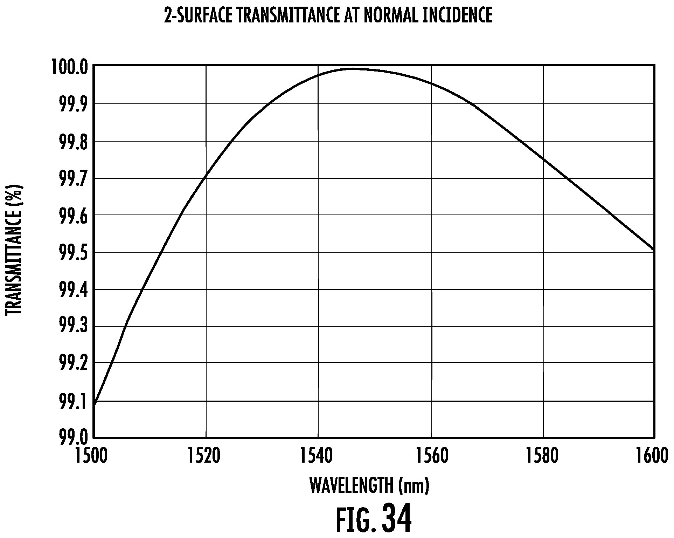

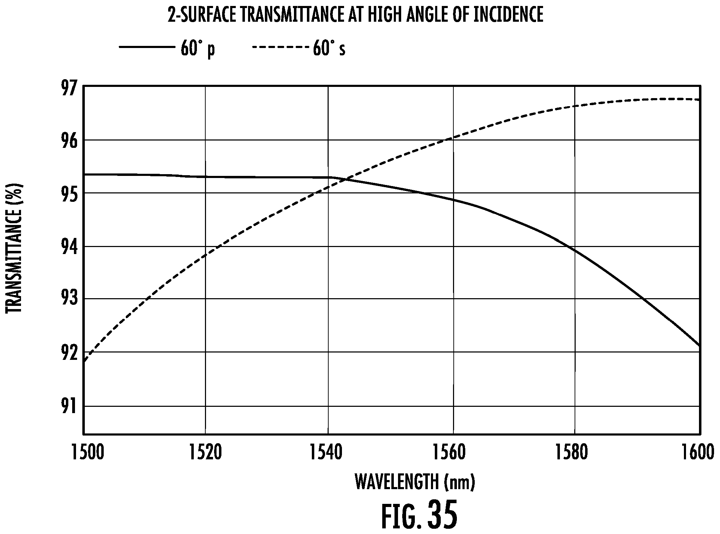

As revealed in FIG. 34, the quantity, thicknesses, number, and materials of the first layered film 36 and the second layered film 38 have been configured so that the window 24 of Example 5 has a percentage transmittance of above 99.1 percent for light normally incident on the first surface 32 or the second surface 34 throughout a wavelength range extending from 1500 nm to 1600 nm. As revealed in FIG. 35, the quantity, thicknesses, number, and materials of the first layered film 36 and the second layered film 38 have been configured so that the window 24 of Example 5 has an average P polarization transmittance and an average S polarization transmittance, calculated a wavelength range of interest from 1500 nm to 1600 nm, of greater than 91.8% for light incident on the first surface and the second surface at angles within 60° of normal to the first surface and the second surface.

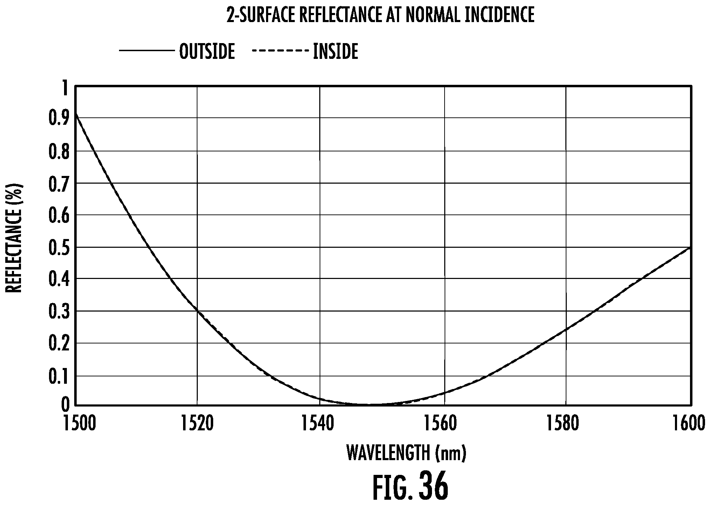

As revealed in FIG. 36, the quantity, thicknesses, number, and materials of the first layered film 36 and the second layered film 38 have been configured so that the window 24 of Example 5 has a percentage reflectance from the terminal surface 44 (and each of the layers in the window 24) of the first layered film 36 and the terminal surface 48 of the second layered film 38 of under 1.0 percent for light normally incident on the substrate 300 within the approximate wavelength range of 1500 nm to 1600 nm. The reflectance from the terminal surface 44 is comparable to that from the terminal surface 48, as the first and second layered films 36 and 38 were constructed of materials having relatively low absorbance in the referenced wavelength range. As shown, the modelled reflectance reaches a minimum value of less than 0.05% at about 1545 nm, and the reflectance is less than 0.1% throughout the wavelength range of 1530 nm to 1565 nm.

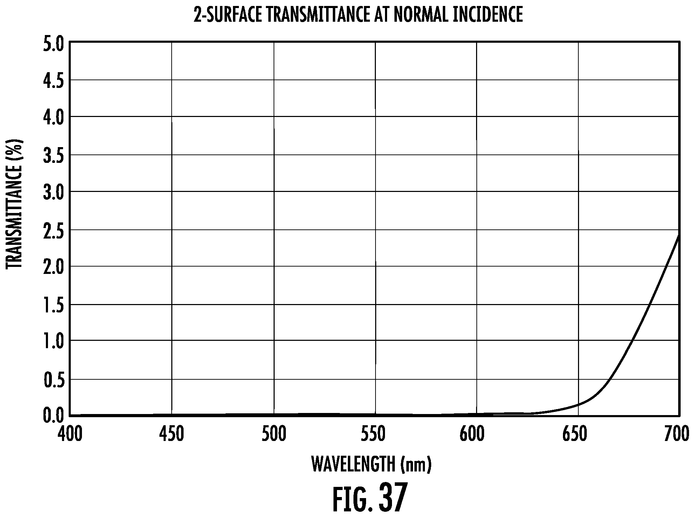

As revealed in FIG. 37, the quantity, thicknesses, number, and materials of the first layered film 36 and the second layered film 38 have been configured so that the window 24 of Example 5 has a transmittance substantially less than 3% throughout the visible spectrum for light normally incident on the substrate 30. From 400 nm to 650 nm, the transmittance in the visible spectrum is less than 0.3%. It is believed that these low transmission values are due to the absorbance of visible light by the silicon layers in the second layered film 38.

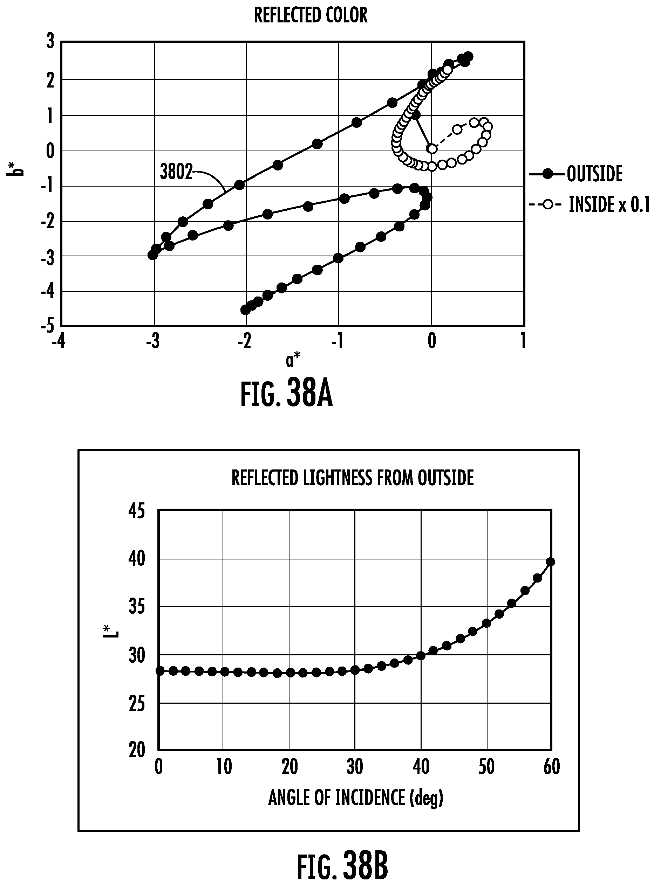

As revealed in FIGS. 38A and 38B, the quantity, thicknesses, number, and materials of the first layered film 36 and the second layered film 38 have been configured so that the window 24 of Example 5 has a dark appearance when viewed from the terminal surface 44 of the first layered film. FIG. 38A provides simulated CIELAB single-surface reflected color data for Example 5 for light reflected off of the terminal surface 44. The color of the single-surface reflected light can be characterized using CIELAB color coordinates. The a* axis in color space is representative of the green-red color component, with negative a* values corresponding to green and positive a* values corresponding to red. The b* axis in color space is representative of the blue-yellow component, with negative b* values corresponding to blue and positive b* values corresponding to yellow. The closer the a* and b* values are to the origin, the more neutral in color the reflected light will appear to an observer. The CIELAB a* and b* values were generated by simulating an illuminant source at a plurality of different angles of incidence, ranging from 0° to 90°. As shown in the curve 3802, the a* values ranges from about -3.1 to about 0.5, while the b* values ranges from about -4.5 to 2.6. This indicates that the window 24 according to Example 5 has a neutral appearance when viewed form the external environment 26 (see FIG. 1).

FIG. 32B depicts modelled CIELAB lightness L* values as a function of angle of incidence on the terminal surface 44. As shown, for angles of incidence less than or equal to 60°, the lightness L* value is less than or equal to 45. This indicates that the window 24 according to Example 5 has a dark appearance when viewed form the external environment 26 (see FIG. 1).

*Example* 6 - The window 24 of Example 6 included a first layered film 36 over a first surface 32 of a substrate 30 of an aluminosilicate glass (Corning code 2320). The window 24 also included a second layered film 38 over a second surface 34 of the substrate 30. The first layered film 36 included twenty-seven (27) alternating layers of SiO₂ as the lower refractive index material 42 and SiNₓ as the higher refractive index material 40. Layer 18 was the scratch resistant layer of the higher refractive index material 40, having a thickness of 2000 nm. Layers 1-17 were optical control layers having a combined thickness of 1818.92 nm separating the scratch resistant layer from the terminal surface 44. Layers 19-27 were index matching layers separating the scratch resistance layer from the first surface 32 and having a combined thickness of 328.77 nm. In this example, the scratch resistant layer constituted 48.21% of the thickness of the first layered film 36.

The second layered film 38 included nineteen (19) alternating layers of the lower refractive index material 42 and the higher refractive index material 40. In this example, the lower refractive index material 42 was SiO₂, while the higher refractive index material 40 was a combination of SiNₓ and Si . As shown, layers 30, 32, and 34- the three layers of the higher refractive index material 40 most proximate to the substrate 30 (layer 26 in this example) - were SiNₓ, while the remaining layers of the higher refractive index material 40 were Si. Layer 36 - the Si layer most proximate to the substrate 30 - was the narrowest Si layer, with a thickness of 12.02 nm. The combined thickness of the silicon layers was 708.03 nm, which constituted 27.52% of the total thickness of the second layered film 38.

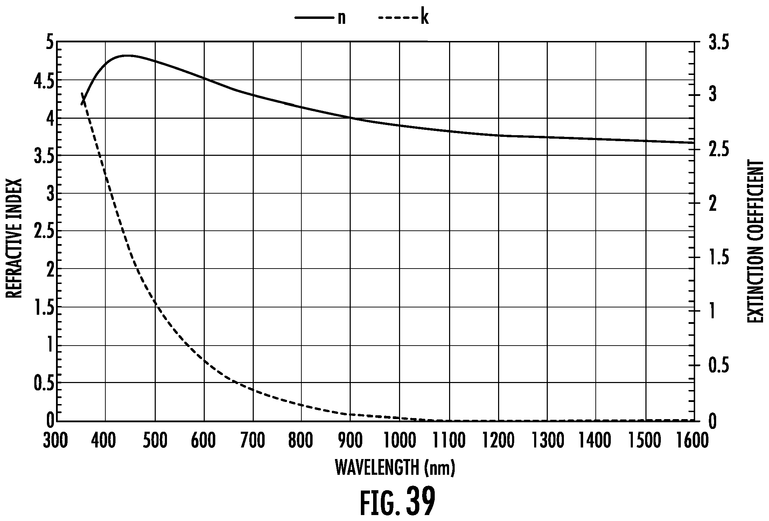

The refractive index and extinction coefficient values of the Si material used in Example 6 are shown in FIG. 39. As shown, the extinction coefficient of the Si material used in this example is about 0.37 at 700 nm, which corresponds a low internal transmittance (for just the silicon) for the combined thickness of the silicon layers in Example 6. At 400 nm, the extinction coefficient is about 3.2. As a result, the transmittance of the combined silicon layers is expected to particularly low at 400 nm than it is at 700 nm.

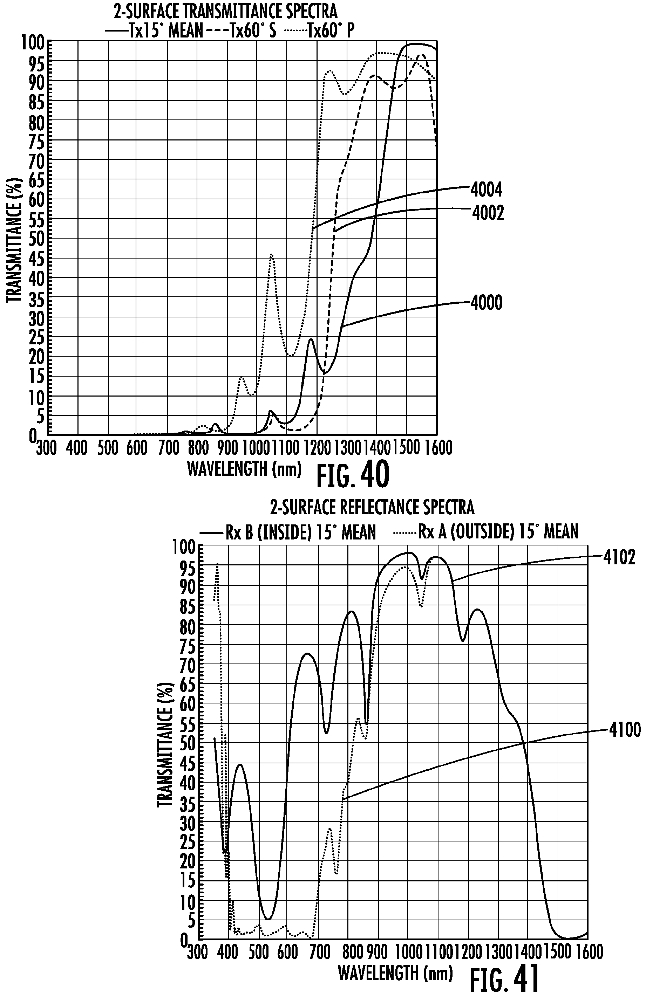

The thicknesses of the layers of the first layered film 36 and the second layered film 38 were configured as set forth in Table 6 below and used to calculate the transmittance, reflectance, and CIELAB color space values set forth in FIGS. 40, 41, and 42.

| TABLE 6 | | | |
|---|---|---|---|
| Example 6 Layer Design | | | |
| Layer | Material | Refractive Index @1550nm | Physical Thickness (nm) |
| Medium | Air | 1 | |
| | Perfluoropolyether | 1-4 | 4-8 |
| 1 | SiO₂ | 1.45723 | 92.78 |
| 2 | SiNₓ | 2.04658 | 148.69 |
| 3 | SiO₂ | 1.45723 | 12.12 |
| 4 | SiNₓ | 2.04658 | 191.47 |
| 5 | SiO₂ | 1.45723 | 19.15 |
| 6 | SiNₓ | 2.04658 | 31.76 |
| 7 | SiO₂ | 1.45723 | 184.44 |
| 8 | SiNₓ | 2.04658 | 143.06 |
| 9 | SiO₂ | 1.45723 | 21.15 |
| 10 | SiNₓ | 2.04658 | 135.82 |
| 11 | SiO₂ | 1.45723 | 170.15 |
| 12 | SiNₓ | 2.04658 | 120.48 |
| 13 | SiO₂ | 1.45723 | 181.26 |
| 14 | SiNₓ | 2.04658 | 122.22 |
| 15 | SiO₂ | 1.45723 | 198.01 |
| 16 | SiNₓ | 2.04658 | 25.39 |
| 17 | SiO₂ | 1.45723 | 20.97 |
| 18 | SiNₓ | 1.96239 | 2000.00 |
| 19 | SiO₂ | 1.45723 | 13.77 |
| 20 | SiNₓ | 2.04658 | 38.47 |
| 21 | SiO₂ | 1.45723 | 47.84 |
| 22 | SiNₓ | 2.04658 | 27.40 |
| 23 | SiO₂ | 1.45723 | 69.47 |
| 24 | SiNₓ | 2.04658 | 25.16 |
| 25 | SiO₂ | 1.45723 | 66.80 |
| 26 | SiNₓ | 2.04658 | 14.86 |
| 27 | SiO₂ | 1.45723 | 25.00 |
| Substrate | Aluminosilicate glass (2320) | 1.4916 | 2000000.0 |
| 29 | SiO2 | 1.45723 | 25.00 |
| 30 | SiN | 2.04658 | 18.76 |
| 31 | SiO2 | 1.45723 | 59.84 |
| 32 | SiN | 2.04658 | 21.13 |
| 33 | SiO2 | 1.45723 | 89.14 |
| 34 | SiN | 2.04658 | 45.03 |
| 35 | SiO2 | 1.45723 | 12.17 |
| 36 | Si | 3.67147 | 12.02 |
| 37 | SiO2 | 1.45723 | 18.01 |
| 38 | Si | 3.67147 | 175.73 |
| 39 | SiO2 | 1.45723 | 448.09 |
| 40 | Si | 3.67147 | 170.34 |
| 41 | SiO2 | 1.45723 | 460.06 |
| 42 | Si | 3.67147 | 209.10 |
| 43 | SiO2 | 1.45723 | 111.64 |
| 44 | Si | 3.67147 | 88.61 |
| 45 | SiO2 | 1.45723 | 99.67 |
| 46 | Si | 3.67147 | 52.23 |
| 47 | SiO2 | 1.45723 | 456.20 |
| Medium | Air | 1 | |

FIG. 40 depicts a plot including a first curve 4000 showing a modelled transmittance of the window 24 according to Example 6 of light incident on the window 24 throughout the spectral range of 400 nm to 1600 nm at an angle of incidence of 15° (polarizations averaged), a second curve 4002 showing a modelled transmittance of the window 24 throughout the spectral range of 400 nm to 1600 nm at an angle of incidence of 60° (for S-polarized light), and a third curve 4004 showing a modelled transmittance of the window 24 throughout the spectral range of 400 nm to 1600 nm at an angle of incidence of 60° (for P-polarized light). As shown, the quantity, thicknesses, number, and materials of the first layered film 36 and the second layered film 38 have been configured so that light incident on the window 24 in the wavelength range of 1500 nm to 1575 nm and at an angle of incidence of 15° has an average transmittance of greater than 99.5%. Throughout the visible spectrum, the transmittance is less than 5% (with the transmittance being less than 1% for wavelengths from 400 nm to 750 nm). Additionally, as revealed by the curves 4002 and 4004, the quantity, thicknesses, number, and materials of the first layered film 36 and the second layered film 38 have been configured so that the window 24 of Example 6 has an average P polarization transmittance and an average S polarization transmittance, calculated for a wavelength range of interest from 1500 nm to 1575 nm, of greater than 90% for light incident on the first surface and the second surface at angles within 60° of normal to the first surface and the second surface.

As revealed by a curve 4100 in FIG. 41, the quantity, thicknesses, number, and materials of the first layered film 36 and the second layered film 38 have been configured so that the window 24 of Example 6 has a percentage reflectance from the terminal surface 44 (and each of the layers in the window 24) of the first layered film 36 of under 0.5 percent for light incident on the substrate 30 at an angle of incidence of 15° within the approximate wavelength range of 1500 nm to 1575 nm. As revealed by a curve 4102 in FIG. 41, the quantity, thicknesses, number, and materials of the first layered film 36 and the second layered film 38 have been configured so that the window 24 of Example 6 has a percentage reflectance from the terminal surface 48 (and each of the layers in the window 24) of the second layered film 38 of under 0.5 percent for light incident on the substrate 30 at an angle of incidence of 15° within the approximate wavelength range of 1500 nm to 1575 nm. The reflectance from the terminal surface 44 is comparable to that from the terminal surface 48, as the first and second layered films 36 and 38 were constructed of materials having relatively low absorbance in the referenced wavelength range. As additionally shown the curve 4100 in FIG. 41, the quantity, thicknesses, number, and materials of the first layered film 36 and the second layered film 38 have been configured so that the window 24 of Example 6 has an average transmittance of less than 3% throughout the visible spectrum for light incident on the first layered film 36 at an angle of incidence of 15°. It is believed that these low reflectance values are due to the absorbance of visible light by the silicon layers in the second layered film 38.

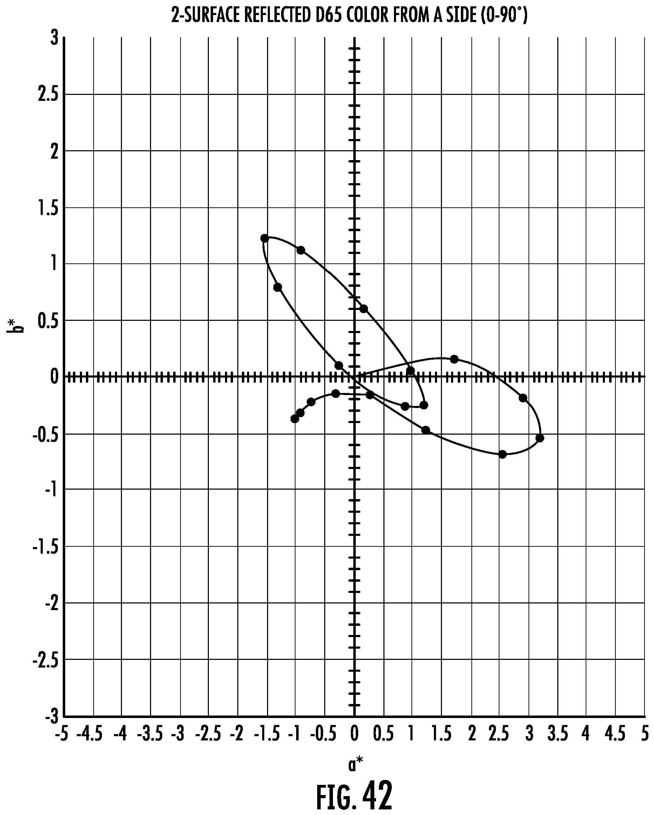

As revealed in FIG 42, the quantity, thicknesses, number, and materials of the first layered film 36 and the second layered film 38 have been configured so that the window 24 of Example 6 has a neutral appearance when viewed from the terminal surface 44 of the first layered film. FIG. 42 provides simulated CIELAB single-surface reflected color data for Example 6 for light reflected off of the terminal surface 44 under a D65 illuminant with a standard 1964 observer (which describes all CIELAB color measurements described herein). The color of the single-surface reflected light can be characterized using CIELAB color coordinates. The a* axis in color space is representative of the green-red color component, with negative a* values corresponding to green and positive a* values corresponding to red. The b* axis in color space is representative of the blue-yellow component, with negative b* values corresponding to blue and positive b* values corresponding to yellow. The closer the a* and b* values are to the origin, the more neutral in color the reflected light will appear to an observer. The CIELAB a* and b* values were generated by simulating a D65 illuminant source at a plurality of different angles of incidence, ranging from 0° to 90°. As shown in the curve 3802, the b* values ranges from about -0.7 to about 1.25, while the a* values ranges from about -1.1 to 3.1. The Example 6 also exhibited L* values of less than or equal to 30.5 throughout the angular range of interest of 0° to 55°.

In Examples 1 - 6, the first layered film 36 included a number of alternating layers of the lower refractive index materials 42 and the higher refractive index materials 40 that varied from 21 layers to 29 layers and thicknesses ranging from 3305.7 nm to 4147.69 nm. The second layered film 38 in each of the examples included a number of alternating layers of the lower refractive index materials 42 and the higher refractive index materials 40 that varied from 13 layers to 19 layers and thicknesses ranging from 1,049.9 nm to 2572.77 nm. In the examples, therefore, the first layered film 36 was more than 1.5 times thicker than the second layered film 38. This may be due to the relatively high refractive index of the silicon layers in the second layered film 38. Combined thicknesses of silicon in each of the second layered films 38 ranged from 414.6 nm to 708 nm. Example 4 - containing the greatest number of layers in the first layered film 36 - appeared to achieve superior antireflective performance irrespective of polarization at high angles of incidence. It should be appreciated that these examples were designed for a particular wavelength range of around 1550 nm and that alternative windows, having differing numbers, quantities, and materials of layers are contemplated and may fall outside of the ranges listed in this paragraph and still fall within the scope of the present disclosure. These examples are not meant to be limiting.

*Example 7* - The window 24 of Example 7 included a first layered film 36 over a first surface 32 of a substrate 30 of an aluminosilicate glass (Corning code 2320). The window 24 also included a second layered film 38 over a second surface 34 of the substrate 30. The first layered film 36 included twenty-seven (27) alternating layers of SiO₂ as the lower refractive index material 42 and SiNₓ as the higher refractive index material 40. Layer 18 was the scratch resistant layer of the higher refractive index material 40, having a thickness of 2000 nm. Layers 1-17 were optical control layers having a combined thickness of 1825.13 nm separating the scratch resistant layer from the terminal surface 44. Layers 19-27 were index matching layers separating the scratch resistance layer from the first surface 32 and having a combined thickness of 314.7 nm. In this example, the scratch resistant layer constituted 48.31% of the thickness of the first layered film 36.

The second layered film 38 of Example 7 included twenty-five (25) alternating layers of the lower refractive index material 42 and the higher refractive index material 40. In this example, the lower refractive index material 42 was SiO₂, while the higher refractive index material 40 was a combination of SiNₓ and Si . As shown, layers 30, 32, and 34- the three layers of the higher refractive index material 40 most proximate to the substrate 30 (layer 26 in this example) - were SiNₓ, while the remaining layers of the higher refractive index material 40 were Si. Layer 36 - the Si layer most proximate to the substrate 30 - was the narrowest Si layer, with a thickness of 12.03 nm. The combined thickness of the silicon layers was 1199.18 nm, which constituted 43.89% of the total thickness of the second layered film 38.

The first layered film 36 of Example 7 differed from that in Example 6 in that the scratch resistant layer was formed of a higher-index SiNₓ material (having a refractive index of 2.04658 as opposed to 1.96 in Example 6. It is believed that this material posseses a higher hardness and therefore improves scratch resistance over Example 6. The second layered film 38 in Example 7 differed from that in Example 6 in that a lower extinction coefficient silicon was used in the second layered film 38. Rather than the material represented in FIG. 39, the Si-material comprises an extinction coefficient that is less than .05 (e.g., less than .01, less than .005) at 1550 nm. It is believed that use of such a low extinction coefficient material provides a broader bandwidth of high transmission near 1550 nm and renders the system less sensitive to wavelength shifts

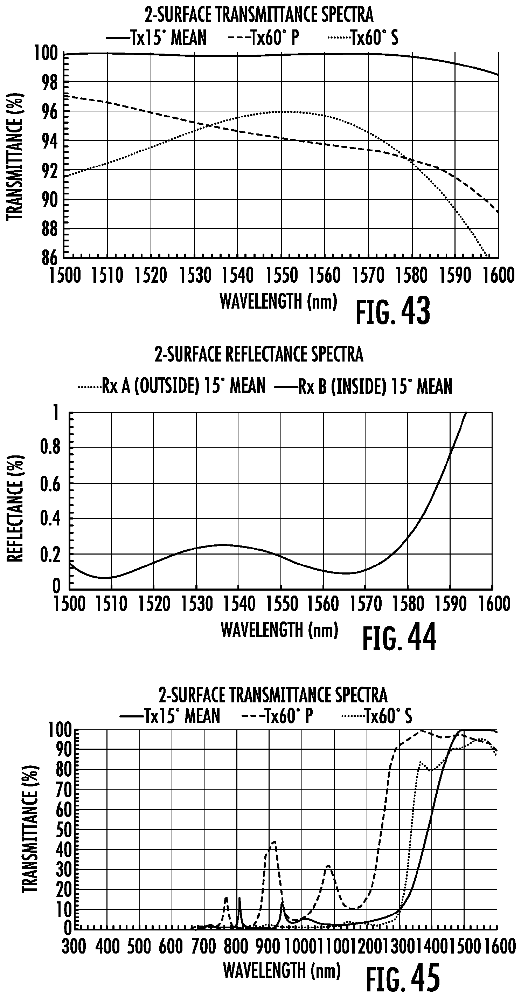

In Example 7, the thicknesses of the layers of the first layered film 36 and the second layered film 38 were configured as set forth in Table 7 below and used to calculate the transmittance, reflectance, and CIELAB color space values set forth in FIGS. 43-49.

| TABLE 7 | | | |
|---|---|---|---|
| Example 7 Layer Design | | | |
| Layer | Material | Refractive Index @1550nm | Physical Thickness (nm) |
| Medium | Air | 1 | |
| | Perfluoropolyether | 1-4 | 4-8 |
| 1 | SiO2 | 1.45723 | 88.55 |
| 2 | SiN | 2.04658 | 146.87 |
| 3 | SiO2 | 1.45723 | 10.38 |
| 4 | SiN | 2.04658 | 190.28 |
| 5 | SiO2 | 1.45723 | 18.30 |
| 6 | SiN | 2.04658 | 35.57 |
| 7 | SiO2 | 1.45723 | 186.27 |
| 8 | SiN | 2.04658 | 144.85 |
| 9 | SiO2 | 1.45723 | 25.84 |
| 10 | SiN | 2.04658 | 141.32 |
| 11 | SiO2 | 1.45723 | 178.34 |
| 12 | SiN | 2.04658 | 119.35 |
| 13 | SiO2 | 1.45723 | 186.60 |
| 14 | SiN | 2.04658 | 123.46 |
| 15 | SiO2 | 1.45723 | 183.17 |
| 16 | SiN | 2.04658 | 25.51 |
| 17 | SiO2 | 1.45723 | 20.47 |
| 18 | SiN | 2.04658 | 2000.00 |
| 19 | SiO2 | 1.45723 | 27.25 |
| 20 | SiN | 2.04658 | 30.19 |
| 21 | SiO2 | 1.45723 | 59.41 |
| 22 | SiN | 2.04658 | 23.71 |
| 23 | SiO2 | 1.45723 | 58.10 |
| 24 | SiN | 2.04658 | 26.99 |
| 25 | SiO2 | 1.45723 | 50.51 |
| 26 | SiN | 2.04658 | 13.54 |
| 27 | SiO2 | 1.45723 | 25.00 |
| Substrate | Aluminosilicate glass (2320) | 1.4916 | 2000000.0 |
| 29 | SiO2 | 1.45723 | 25 |
| 30 | SiN | 2.04658 | 15.85 |
| 31 | SiO2 | 1.45723 | 58.56 |
| 32 | SiN | 2.04658 | 27.71 |
| 33 | SiO2 | 1.45723 | 56.62 |
| 34 | SiN | 2.04658 | 58.91 |
| 35 | SiO2 | 1.45723 | 8.06 |
| 36 | Si | 3.47334 | 12.03 |
| 37 | SiO2 | 1.45723 | 19.98 |
| 38 | Si | 3.47334 | 231.52 |
| 39 | SiO2 | 1.45723 | 8.15 |
| 40 | Si | 3.47334 | 101.10 |
| 41 | SiO2 | 1.45723 | 16.55 |
| 42 | Si | 3.47334 | 81.73 |
| 43 | SiO2 | 1.45723 | 183.54 |
| 44 | Si | 3.47334 | 250.05 |
| 45 | SiO2 | 1.45723 | 166.42 |
| 46 | Si | 3.47334 | 109.97 |
| 47 | SiO2 | 1.45723 | 114.51 |
| 48 | Si | 3.47334 | 47.71 |
| 49 | SiO2 | 1.45723 | 130.54 |
| 50 | Si | 3.47334 | 176.63 |
| 51 | SiO2 | 1.45723 | 436.72 |
| 52 | Si | 3.47334 | 188.44 |
| 53 | SiO2 | 1.45723 | 205.41 |
| Medium | Air | 1 | |

FIG. 43 is a plot showing a modelled transmittance of the window 24 according to Example 7 for light incident on the window 24 throughout the spectral range of 400 nm to 1600 nm. The plot shows predicted performance for light incident on the window 24 at an angle of incidence of 15° (polarizations averaged) and light incident on the window 24 at an angle of incidence of 60° (for both S and P polarized light). As shown, the quantity, thicknesses, number, and materials of the first layered film 36 and the second layered film 38 have been configured so that light incident on the window 24 in the wavelength range of 1500 nm to 1575 nm and at an angle of incidence of 15° has an average transmittance of greater than 99.5%. Additionally, the quantity, thicknesses, number, and materials of the first layered film 36 and the second layered film 38 have been configured so that the window 24 of Example 6 has an average P polarization transmittance and an average S polarization transmittance, calculated for a wavelength range of interest from 1500 nm to 1575 nm, of greater than 91% for light incident on the first surface and the second surface at angles within 60° of normal to the first surface and the second surface.

FIG. 44 is a plot showing a modelled reflectance of the window 24 according to Example 7 from both of the terminal surfaces 44 and 48 (e.g., from both internal and external surfaces of the window 24). As revealed by FIG. 44, the quantity, thicknesses, number, and materials of the first layered film 36 and the second layered film 38 have been configured so that the window 24 of Example 7 has a percentage reflectance from the terminal surfaces 44 and 48 (the curves overlap in FIG. 44) of the first layered film 36 and the second layered film 38 of under 0.5 percent for light incident on the substrate 30 at an angle of incidence of 15° within the approximate wavelength range of 1500 nm to 1575 nm. The reflectance from the terminal surface 44 is comparable to that from the terminal surface 48, as the first and second layered films 36 and 38 were constructed of materials having relatively low absorbance in the referenced wavelength range.

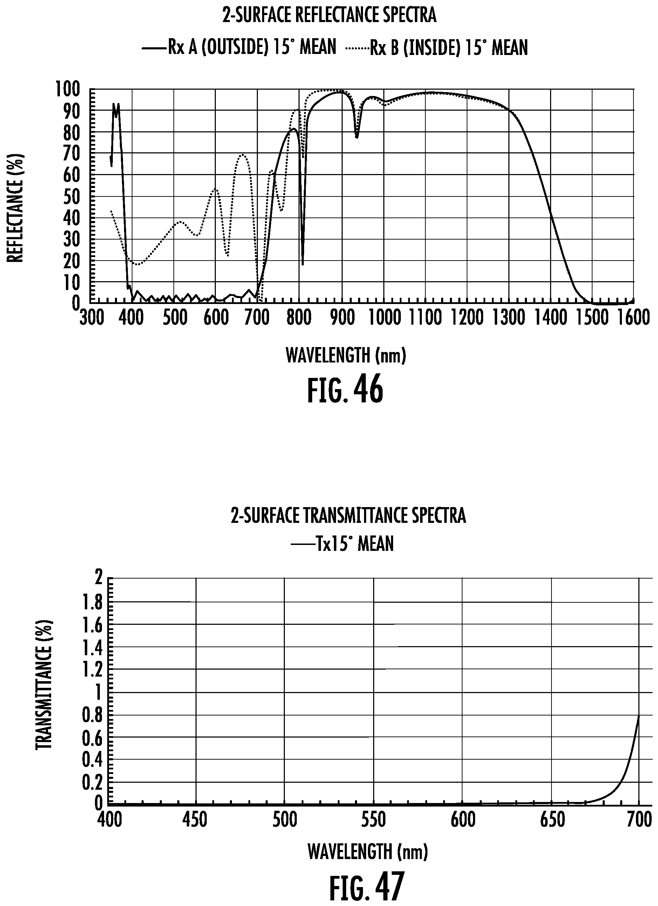

FIG. 45 is a plot showing a modelled transmittance of the window 24 according to Example 7 over the wavelength range of 350 nm to 1600 nm. As shown in FIG. 45, the quantity, thicknesses, number, and materials of the first layered film 36 and the second layered film 38 have been configured so that the window 24 of Example 7 has an average transmittance of less than 5% throughout the visible spectrum for light incident on the first layered film 36 at an angle of incidence of 15° (polarizations averaged). FIG. 46 is a plot showing a modelled reflectance of the window 24 according to Example 7 over the wavelength range of 350 nm to 1600 nm. As shown in FIG. 46, the quantity, thicknesses, number, and materials of the first layered film 36 and the second layered film 38 have been configured so that the window 24 of Example 7 exhibits an average reflectance of less than 5% throughout the visible spectrum for light incident on the first layered film 36 (for light coming from the outside of the window 24) at an angle of incidence of 15° (polarizations average). FIG. 47 is a plot of a modelled two surface transmittance of the window 24 according to Example 7. As shown, he quantity, thicknesses, number, and materials of the first layered film 36 and the second layered film 38 have been configured so that the window 24 of Example 7 exhibits an average transmittance of less than 0.1% over the wavelength range from 400 nm to 650 nm for light having an angle of incidence of 15° on the window 24. Indeed the window 24 exhibits a transmittance of less than 1% throughout the wavelength range from 400 nm to 700 nm (and a transmittance of less than 0.1% throughout the wavelength range from 400 nm to 650 nm).

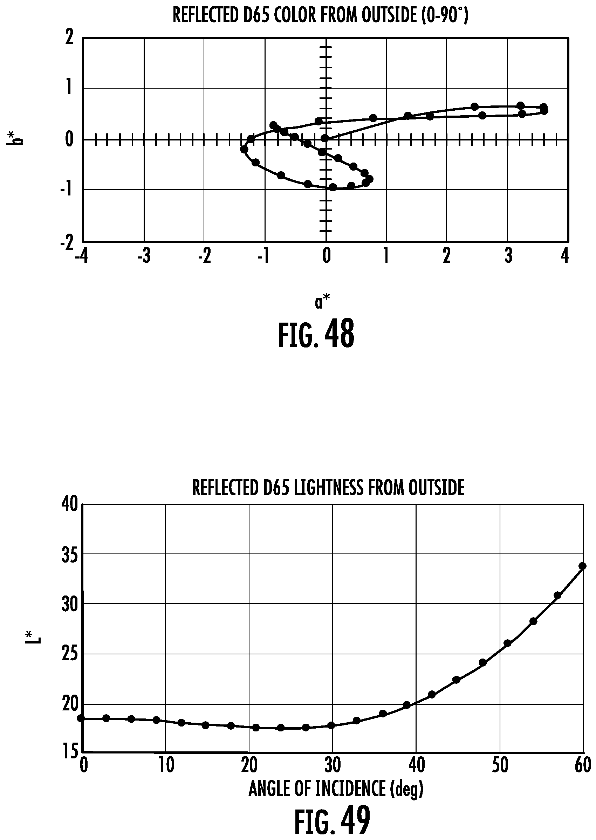

As revealed in FIG 48, the quantity, thicknesses, number, and materials of the first layered film 36 and the second layered film 38 have been configured so that the window 24 of Example 7 has a neutral appearance when viewed from the terminal surface 44 of the first layered film. FIG. 48 provides simulated CIELAB single-surface reflected color data for Example 7 for light reflected off of the terminal surface 44 under a D65 illuminant with a standard 1964 observer (which describes all CIELAB color measurements described herein). The color of the single-surface reflected light can be characterized using CIELAB color coordinates. As shown, the b* values ranges from about -1.0 to about 0.6, while the a* values ranges from about -1.5 to 3.6. FIG. 49 provides simulated L* values for light reflected off the terminal surface 44 under a D65 illuminant with a standard 1964 observer. Example 7 also exhibited L* values of less than or equal to 35 throughout the range of angles of incidence of 0° to 60° (and L* values of less than or equal to 25 throughout the range of angles of incidence of 0° to 50°).

It will be apparent to those skilled in the art that various modifications and variations can be made without departing from the scope of the claims.

## Claims

1. A window for a sensing system, comprising:
a substrate comprising a first surface and a second surface, the first surface and the second surface being primary surfaces of the substrate;
a first layered film disposed on the first surface of the substrate, the first layered film comprising alternating layers of one or more higher refractive index materials and one or more lower refractive index materials, wherein refractive indices of the one or more higher refractive index materials of the first layered film are higher than refractive indices of the one or more lower refractive index materials of the first layered film, wherein the one or more higher refractive index materials of the first layered film comprise at least one of SiOₓN_{y}, SiNₓ, SiNₓ:H_{y}, and Si₃N₄;
a second layered film disposed on the second surface of the substrate, the second layered film comprising alternating layers of one or more higher refractive index materials and one or more lower refractive index materials, wherein refractive indices of the one or more higher refractive index materials of the second layered film are higher than refractive indices of the one or more lower refractive index materials of the second layered film; and
a maximum hardness, measured at the first layered film and by the Berkovich Indenter Hardness Test, of at least 8 GPa,
wherein the quantity, the thicknesses, number, and materials of the alternating layers of the first and second layered films are configured so that the window has:
an average percentage transmittance, calculated over a 50 nm wavelength range of interest between 1400 nm and 1600 nm, of greater than 90% for light incident on the first surface and the second surface at angles of incidence of less than or equal to 15°;
an average reflectance, calculated over the 50 nm wavelength range of interest between 1400 nm and 1600 nm, of less than 1% for light incident on the first surface and the second surface at angles of less than or equal to 15°;
an average percentage transmission, calculated from 400 nm to 700 nm, of less than 5% for light incident on the first surface and the second surface at angles of incidence of less than or equal to 15°;
the window being **characterized in that**
an average reflectance, calculated throughout the visible spectrum, for light normally incident on the first layered film, of less than or equal to 10%.

2. The window of claim 1, wherein the quantity, the thicknesses, number, and materials of the alternating layers of the first and second layered films are configured so that the window has an average P polarization transmittance and an average S polarization transmittance, calculated over the 50 nm wavelength range of interest between 1400 nm and 1600 nm, of greater than 85% for light incident on the first surface and the second surface at angles of incidence of less than or equal to 60°.

3. The window of any of claims 1-2, wherein the quantity, the thicknesses, number, and materials of the alternating layers of the first and second layered films are configured so that the window has a CIELAB L* value of less than or equal to 45 for angles of incidence of less than or equal to 60° on the first layered film.

4. The window of any of claims 1-3, wherein the quantity, the thicknesses, number, and materials of the alternating layers of the first and second layered films are configured so that the window has CIELAB a* and b* values of greater than or equal to -6.0 and less than or equal to 6.0 when viewed from a side of the first layered film.

5. The window of any of claims 1-4, wherein the refractive index of the substrate for electromagnetic radiation having a wavelength of 1550nm is from about 1.45 to about 1.55, wherein the refractive index of the one or more higher refractive index materials is from about 1.7 to about 4.0, and wherein the refractive index of the one or more lower refractive index materials is from about 1.3 to about 1.6, wherein a difference in the refractive index of any of the one or more higher refractive index materials and any of the one or more lower refractive index materials is about 0.5 or greater.

6. The window of any of claims 1-5, wherein one of the alternating layers of the first layered film that is farthest from the substrate forms a terminal surface material of the window, the terminal surface material of the window comprising the lower refractive index material.

7. The window of claim 6, wherein first layered firm comprises a scratch resistant layer formed of one of the one or more higher refractive index materials and having a thickness of greater than or equal to 500 nm.

8. The window of claim 7, wherein the thickness of the scratch resistant layer is greater than or equal to 1500 nm and less than or equal to 5000 nm.

9. The window of claim 8, wherein the scratch resistant layer is separated from the terminal surface by a plurality of the alternating layers of the one or more lower index materials and the one or more higher index materials of the first layered film.

10. The window of claim 9, wherein the scratch resistant layer is separated from the terminal surface by at least 1000 nm.

11. The window of any of claims 1-10, wherein the one or more higher refractive index materials of the second layered film comprise silicon.

12. The window of claim 11, wherein the second layered film comprises two or more silicon layers.

13. The window of claim 12, wherein a silicon layer of the second layered film most proximate to the substrate comprises the smallest thickness of the two or more silicon layers.

14. The window of any of claims 12, wherein a combined thickness of the silicon layers contained in the second layered film is greater than or equal to 250 nm.

15. The window of any of the preceding claims, wherein a hardness, measured at the first layered film and by the Berkovich Indenter Hardness Test, is at least 8 GPa over a depth range of 300 nm to 2000 nm.

## Patentansprüche

1. Fenster für ein Sensorsystem, umfassend:
ein Substrat mit einer ersten Oberfläche und einer zweiten Oberfläche, wobei die erste Oberfläche und die zweite Oberfläche Hauptoberflächen des Substrats sind;
einen ersten Schichtfilm, der auf der ersten Oberfläche des Substrats angeordnet ist, wobei der erste Schichtfilm abwechselnde Schichten aus einem oder mehreren Materialien mit höherem Brechungsindex und einem oder mehreren Materialien mit niedrigerem Brechungsindex umfasst, wobei die Brechungsindizes des einen oder der mehreren Materialien mit höherem Brechungsindex des ersten Schichtfilms höher sind als die Brechungsindizes des einen oder der mehreren Materialien mit niedrigerem Brechungsindex des ersten Schichtfilms, wobei das eine oder die mehreren Materialien mit höherem Brechungsindex des ersten Schichtfilms mindestens eines der folgenden Materialien umfassen: SiOₓN_{y}, SiNₓ, SiNₓ:H_{y} und Si₃N₄;
einen zweiten Schichtfilm, der auf der zweiten Oberfläche des Substrats angeordnet ist, wobei der zweite Schichtfilm abwechselnde Schichten aus einem oder mehreren Materialien mit höherem Brechungsindex und einem oder mehreren Materialien mit niedrigerem Brechungsindex umfasst, wobei die Brechungsindizes der einen oder mehreren Materialien mit höherem Brechungsindex des zweiten Schichtfilms höher sind als die Brechungsindizes der einen oder mehreren Materialien mit niedrigerem Brechungsindex des zweiten Schichtfilms; und
eine maximale Härte, gemessen an der ersten Schichtstruktur mittels des Berkovich-Indenter-Härtetests, von mindestens 8 GPa,
wobei die Menge, die Dicken, die Anzahl und die Materialien der abwechselnden Schichten der ersten und zweiten Schichtstruktur so ausgelegt sind, dass das Fenster Folgendes aufweist:
eine durchschnittliche prozentuale Durchlässigkeit, berechnet über einen relevanten Wellenlängenbereich von 50 nm zwischen 1400 nm und 1600 nm, von mehr als 90 % für Licht, das unter Einfallswinkeln von bis zu 15° auf die erste Oberfläche und die zweite Oberfläche trifft;
eine durchschnittliche Reflexion, berechnet über den relevanten Wellenlängenbereich von 50 nm zwischen 1400 nm und 1600 nm, von weniger als 1 % für Licht, das unter Einfallswinkeln von kleiner oder gleich 15° auf die erste Oberfläche und die zweite Oberfläche trifft;
einen mittleren prozentualen Durchlassgrad, berechnet im Bereich von 400 nm bis 700 nm, von weniger als 5 % für Licht, das unter Einfallswinkeln von höchstens 15° auf die erste und die zweite Oberfläche trifft;
wobei das Fenster **dadurch gekennzeichnet ist, dass**
ein mittlerer Reflexionsgrad, berechnet über das gesamte sichtbare Spektrum, für Licht, das normal auf die erste Schichtfolie trifft, von höchstens 10 % beträgt.

2. Fenster nach Anspruch 1, wobei die Anzahl, die Dicken, Anzahl und Materialien der abwechselnden Schichten der ersten und zweiten Schichtfolien so ausgelegt sind, dass das Fenster eine durchschnittliche P-Polarisationsdurchlässigkeit und eine durchschnittliche S-Polarisationsdurchlässigkeit, berechnet über den relevanten Wellenlängenbereich von 50 nm zwischen 1400 nm und 1600 nm, von mehr als 85 % für Licht aufweist, das unter Einfallswinkeln von höchstens 60° auf die erste und die zweite Oberfläche trifft.

3. Fenster nach einem der Ansprüche 1 bis 2, wobei die Anzahl, die Dicken, die Anzahl und die Materialien der abwechselnden Schichten der ersten und zweiten Schichtfolien so ausgelegt sind, dass das Fenster bei Einfallswinkeln von bis zu 60° auf die erste Schichtfolie einen CIELAB-L*-Wert von bis zu 45 aufweist.

4. Fenster nach einem der Ansprüche 1 bis 3, wobei die Menge, die Dicken, die Anzahl und die Materialien der abwechselnden Schichten der ersten und zweiten Schichtfolien so ausgelegt sind, dass das Fenster CIELAB-a*- und -b*-Werte von größer oder gleich -6,0 und kleiner oder gleich 6,0 aufweist, wenn es von einer Seite der ersten Schichtfolie aus betrachtet wird.

5. Fenster nach einem der Ansprüche 1 bis 4, wobei der Brechungsindex des Substrats für elektromagnetische Strahlung mit einer Wellenlänge von 1550 nm zwischen etwa 1,45 und etwa 1,55 liegt, wobei der Brechungsindex des einen oder der mehreren Materialien mit höherem Brechungsindex zwischen etwa 1,7 und etwa 4,0 liegt, und wobei der Brechungsindex des einen oder der mehreren Materialien mit niedrigerem Brechungsindex zwischen etwa 1,3 und etwa 1,6 liegt, wobei die Differenz im Brechungsindex zwischen einem der einen oder mehreren Materialien mit höherem Brechungsindex und einem der einen oder mehreren Materialien mit niedrigerem Brechungsindex etwa 0,5 oder größer ist.

6. Fenster nach einem der Ansprüche 1 bis 5, wobei eine der abwechselnden Schichten des ersten Schichtfilms, die am weitesten vom Substrat entfernt ist, ein Endoberflächenmaterial des Fensters bildet, wobei das Endoberflächenmaterial des Fensters das Material mit niedrigerem Brechungsindex umfasst.

7. Fenster nach Anspruch 6, wobei der erste Schichtfilm eine kratzfeste Schicht umfasst, die aus einem der einen oder mehreren Materialien mit höherem Brechungsindex gebildet ist und eine Dicke von mindestens 500 nm aufweist.

8. Fenster nach Anspruch 7, wobei die Dicke der kratzfesten Schicht größer oder gleich 1500 nm und kleiner oder gleich 5000 nm ist.

9. Fenster nach Anspruch 8, wobei die kratzfeste Schicht von der Endfläche durch eine Vielzahl der abwechselnden Schichten aus dem einen oder den mehreren Materialien mit niedrigerem Brechungsindex und dem einen oder den mehreren Materialien mit höherem Brechungsindex des ersten Schichtfilms getrennt ist.

10. Fenster nach Anspruch 9, wobei die kratzfeste Schicht durch mindestens 1000 nm von der Endfläche getrennt ist.

11. Fenster nach einem der Ansprüche 1 bis 10, wobei das eine oder mehrere Materialien mit höherem Brechungsindex des zweiten Schichtfilms Silizium umfassen.

12. Fenster nach Anspruch 11, wobei der zweite Schichtfilm zwei oder mehr Siliziumschichten umfasst.

13. Fenster nach Anspruch 12, wobei eine Siliziumschicht der zweiten Schichtstruktur, die dem Substrat am nächsten liegt, die geringste Dicke der zwei oder mehr Siliziumschichten aufweist.

14. Fenster nach einem der Ansprüche 12, wobei die Gesamtdicke der in der zweiten Schichtstruktur enthaltenen Siliziumschichten größer oder gleich 250 nm ist.

15. Fenster nach einem der vorstehenden Ansprüche, wobei eine am ersten Schichtfilm mittels des Berkovich-Indenter-Härtetests gemessene Härte über einen Tiefenbereich von 300 nm bis 2000 nm mindestens 8 GPa beträgt.

## Revendications

1. Fenêtre pour un système de détection, comprenant :
un substrat comportant une première surface et une deuxième surface, la première surface et la deuxième surface étant les surfaces principales du substrat ;
un premier film stratifié disposé sur la première surface du substrat, ledit premier film stratifié comprenant des couches alternées d'un ou plusieurs matériaux à indice de réfraction élevé et d'un ou plusieurs matériaux à indice de réfraction faible, dans lequel les indices de réfraction du ou des matériaux à indice de réfraction élevé du premier film stratifié sont supérieurs aux indices de réfraction du ou des matériaux à indice de réfraction faible du premier film stratifié, dans lequel le ou les matériaux à indice de réfraction élevé du premier film stratifié comprennent au moins l'un des composés suivants : SiOₓN_{y}, SiNₓ, SiNₓ:H_{y} et Si₃N₄ ;
un deuxième film stratifié disposé sur la deuxième surface du substrat, le deuxième film stratifié comprenant des couches alternées d'un ou plusieurs matériaux à indice de réfraction plus élevé et d'un ou plusieurs matériaux à indice de réfraction plus faible, les indices de réfraction du ou des matériaux à indice de réfraction plus élevé du deuxième film stratifié étant supérieurs à ceux du ou des matériaux à indice de réfraction plus faible dudit deuxième film stratifié ; et
une dureté maximale, mesurée au niveau du premier film stratifié et selon l'essai de dureté par pénétrateur de Berkovich, d'au moins 8 GPa,
la quantité, les épaisseurs, le nombre et les matériaux des couches alternées des premier et deuxième films stratifiés étant configurés de telle sorte que la fenêtre présente :
un pourcentage moyen de transmittance, calculé sur une plage de longueurs d'onde de 50 nm comprise entre 1 400 nm et 1 600 nm, supérieur à 90 % pour la lumière incidente sur la première surface et la deuxième surface à des angles d'incidence inférieurs ou égaux à 15° ;
une réflectance moyenne, calculée sur la plage de longueurs d'onde de 50 nm comprise entre 1 400 nm et 1 600 nm, inférieure à 1 % pour la lumière incidente sur la première surface et la deuxième surface à des angles d'incidence inférieurs ou égaux à 15°;
un pourcentage de transmission moyen, calculé de 400 nm à 700 nm, inférieur à 5 % pour la lumière incidente sur la première surface et la deuxième surface sous des angles d'incidence inférieurs ou égaux à 15° ;
la fenêtre étant **caractérisée en ce que**
un facteur de réflexion moyen, calculé sur l'ensemble du spectre visible, pour la lumière incidente normalement sur le premier film stratifié, est inférieur ou égal à 10 %.

2. Fenêtre selon la revendication 1, dans laquelle la quantité, les épaisseurs, le nombre et les matériaux des couches alternées des premier et deuxième films stratifiés sont configurés de telle sorte que la fenêtre présente une transmittance moyenne de polarisation P et une transmittance moyenne de polarisation S, calculées sur la plage de longueurs d'onde de 50 nm d'intérêt comprise entre 1 400 nm et 1 600 nm, supérieures à 85 % pour la lumière incidente sur la première surface et la deuxième surface sous des angles d'incidence inférieurs ou égaux à 60°.

3. Fenêtre selon l'une quelconque des revendications 1 à 2, dans laquelle la quantité, les épaisseurs, le nombre et les matériaux des couches alternées des premier et deuxième films stratifiés sont configurés de telle sorte que la fenêtre présente une valeur CIELAB L* inférieure ou égale à 45 pour des angles d'incidence inférieurs ou égaux à 60° sur le premier film stratifié.

4. Fenêtre selon l'une quelconque des revendications 1 à 3, dans laquelle la quantité, les épaisseurs, le nombre et les matériaux des couches alternées des premier et deuxième films stratifiés sont configurés de telle sorte que la fenêtre présente des valeurs CIELAB a* et b* supérieures ou égales à -6,0 et inférieures ou égales à 6,0 lorsqu'elle est observée depuis un côté du premier film stratifié.

5. Fenêtre selon l'une quelconque des revendications 1 à 4, dans laquelle l'indice de réfraction du substrat pour un rayonnement électromagnétique ayant une longueur d'onde de 1 550 nm est compris entre environ 1,45 et environ 1,55, dans laquelle l'indice de réfraction du ou des matériaux à indice de réfraction plus élevé est compris entre environ 1,7 et environ 4,0, et dans laquelle l'indice de réfraction du ou des matériaux à indice de réfraction plus faible est compris entre environ 1,3 et environ 1,6, la différence d'indice de réfraction entre l'un quelconque du ou des matériaux à indice de réfraction plus élevé et l'un quelconque du ou des matériaux à indice de réfraction plus faible étant d'environ 0,5 ou plus.

6. Fenêtre selon l'une quelconque des revendications 1 à 5, dans laquelle l'une des couches alternées du premier film stratifié qui est la plus éloignée du substrat forme un matériau de surface terminale de la fenêtre, le matériau de surface terminale de la fenêtre comprenant le matériau à indice de réfraction plus faible.

7. Fenêtre selon la revendication 6, dans laquelle le premier film stratifié comprend une couche résistante aux rayures formée de l'un des un ou plusieurs matériaux à indice de réfraction plus élevé et ayant une épaisseur supérieure ou égale à 500 nm.

8. Fenêtre selon la revendication 7, dans laquelle l'épaisseur de la couche résistante aux rayures est supérieure ou égale à 1 500 nm et inférieure ou égale à 5 000 nm.

9. Fenêtre selon la revendication 8, dans laquelle la couche résistante aux rayures est séparée de la surface d'extrémité par une pluralité de couches alternées constituées d'un ou plusieurs matériaux à indice de réfraction plus faible et d'un ou plusieurs matériaux à indice de réfraction plus élevé du premier film stratifié.

10. Fenêtre selon la revendication 9, dans laquelle la couche résistante aux rayures est séparée de la surface terminale par au moins 1 000 nm.

11. Fenêtre selon l'une quelconque des revendications 1 à 10, dans laquelle le ou les matériaux à indice de réfraction plus élevé du deuxième film stratifié comprennent du silicium.

12. Fenêtre selon la revendication 11, dans laquelle le deuxième film stratifié comprend deux couches de silicium ou plus.

13. Fenêtre selon la revendication 12, dans laquelle une couche de silicium du deuxième film stratifié la plus proche du substrat présente l'épaisseur la plus faible parmi les deux ou plusieurs couches de silicium.

14. Fenêtre selon l'une quelconque des revendications 12, dans laquelle l'épaisseur combinée des couches de silicium contenues dans le deuxième film stratifié est supérieure ou égale à 250 nm.

15. Fenêtre selon l'une quelconque des revendications précédentes, dans laquelle une dureté, mesurée au niveau du premier film stratifié et par l'essai de dureté à l'indenteur de Berkovich, est d'au moins 8 GPa sur une plage de profondeur comprise entre 300 nm et 2 000 nm.
